(19) Europäisches Patentamt / European Patent Office / Office européen des brevets

(11) **EP 4 401 473 A1**

(12) **EUROPEAN PATENT APPLICATION**
published in accordance with Art. 153(4) EPC

(43) Date of publication:
**17.07.2024 Bulletin 2024/29**

(21) Application number: **22874447.0**

(22) Date of filing: **11.08.2022**

(51) International Patent Classification (IPC):
*H04W 52/02* (2009.01)

(52) Cooperative Patent Classification (CPC):
**H04W 52/02**

(86) International application number:
**PCT/CN2022/111747**

(87) International publication number:
**WO 2023/051052 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111164061**
**05.11.2021 CN 202111309099**

(71) Applicant: **Huawei Technologies Co., Ltd.**
**Shenzhen, Guangdong 518129 (CN)**

(72) Inventors:
- **HUANG, Wenwen**
  **Shenzhen, Guangdong 518129 (CN)**
- **TIE, Xiaolei**
  **Shenzhen, Guangdong 518129 (CN)**
- **XUE, Yifan**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD FOR STOPPING MONITORING PHYSICAL DOWNLINK CONTROL CHANNEL AND COMMUNICATION APPARATUS**

(57) This application provides a method for stopping monitoring a physical downlink control channel and a communication apparatus. When a network device configures both a PDCCH monitoring skipping mechanism and a BWP switching mechanism, time for stopping monitoring a PDCCH may be determined, to reduce power consumption of a terminal device. The method includes: A network device sends first DCI to a terminal device on an active DL BWP. The terminal device runs a timer, where the timer is used for BWP switching. The terminal device stops, based on the first DCI, monitoring a PDCCH within a first duration, and suspends running of the timer. The terminal device continues to run the timer after the first duration. The terminal device performs DL BWP switching when the timer expires. The network device runs a timer, suspends running of the timer within a first duration, and continues to run the timer after the first duration. The network device performs DL BWP switching when the timer expires.

FIG. 8

**Description**

This application claims priorities to Chinese Patent Application No. 202111164061.8, filed with the China National Intellectual Property Administration on September 30, 2021 and entitled "METHOD FOR STOPPING MONITORING PHYSICAL DOWNLINK CONTROL CHANNEL AND COMMUNICATION APPARATUS", and to Chinese Patent Application No. 202111309099.X, filed with the China National Intellectual Property Administration on November 5, 2021 and entitled "METHOD FOR STOPPING MONITORING PHYSICAL DOWNLINK CONTROL CHANNEL AND COMMUNICATION APPARATUS", both of which are incorporated herein by reference in their entireties.

**TECHNICAL FIELD**

This application relates to the communication field, and in particular, to a method for stopping monitoring a physical downlink control channel and a communication apparatus.

**BACKGROUND**

A physical downlink control channel (physical downlink control channel, PDCCH) may be used to carry scheduling information of uplink or downlink data. A terminal device may periodically monitor the PDCCH to obtain the scheduling information. When detecting that the PDCCH carries the scheduling information, based on the scheduling information, the terminal device may receive the downlink data through a physical downlink shared channel (physical downlink shared channel, PDSCH) or send the uplink data through a physical uplink shared channel (physical uplink shared channel, PUSCH). However, when there is no service transmission between a network device and the terminal device, the network device does not send the PDCCH to the terminal device, but the terminal device still periodically monitors the PDCCH. This increases power consumption of the terminal device.

Currently, in an active downlink bandwidth part (bandwidth part, BWP), the network device may use a PDCCH monitoring skipping (skip PDCCH monitoring) mechanism or a search space set group (search space set group, SSSG) switching mechanism to reduce PDCCH monitoring, so as to reduce the power consumption of the terminal device. For each cell, the network device may configure a plurality of downlink BWPs and/or a plurality of uplink BWPs for the terminal device, and the network device may dynamically switch an active BWP.

However, when the terminal device supports both the PDCCH monitoring skipping mechanism and a BWP switching mechanism, how the terminal device stops monitoring the PDCCH is not clearly defined.

**SUMMARY**

This application provides a method for stopping monitoring a physical downlink control channel PDCCH and a communication apparatus. When a terminal device supports both a PDCCH monitoring skipping mechanism and a BWP switching mechanism, time for stopping monitoring a PDCCH may be determined, to help reduce power consumption of the terminal device.

According to a first aspect, this application provides a method for stopping monitoring a physical downlink control channel PDCCH. The method includes: A terminal device receives first downlink control information (downlink control information, DCI) from a network device on an active downlink (downlink, DL) BWP, where the first DCI indicates the terminal device to stop monitoring a PDCCH within a first duration, and the PDCCH on which monitoring is stopped includes a PDCCH in a type 3 common search space set and a PDCCH in a terminal device-specific search space set. The terminal device runs a timer, where the timer is used for BWP switching, and an expiration moment of the timer is earlier than an end moment of the first duration. The terminal device stops monitoring the PDCCH within the first duration and before the timer expires. The terminal device performs DL BWP switching when the timer expires, and monitors the PDCCH on a switched-to DL BWP.

The first DCI may be carried on the PDCCH. The terminal device may detect the first DCI on the PDCCH, stop, based on the first DCI, monitoring the PDCCH within the first duration, and continue to monitor the PDCCH after the first duration. The PDCCH on which monitoring is stopped includes the PDCCH in the type 3 common search space set and the PDCCH in the terminal device-specific search space set. For common search space sets of other types, for example, a type 0 common search space set, a type 0A common search space set, a type 1 common search space set, and a type 2 common search space set, the UE may skip or not skip monitoring a PDCCH for DCI scrambled by a C-RNTI, an MCS-C-RNTI, or a CS-RNTI. This is not limited in embodiments of this disclosure. For the type 0 common search space set, the type 0A common search space set, the type 1 common search space set, and the type 2 common search space set, whether the UE monitors an SI-RNTI, an RA-RNTI, a TC-RNTI, or a P-RNTI is not limited in embodiments of this disclosure.

If a C-DRX mechanism is further configured for the terminal device, the first DCI may indicate the terminal device to stop monitoring the PDCCH within the first duration in an active duration for C-DRX. In the active duration for the C-DRX, the terminal device stops monitoring the PDCCH within the first duration, and after the first duration, the terminal device may continue to monitor the PDCCH in the active duration.

A unit of the first duration may be a second, a millisecond, a frame, a subframe, a slot, a PDCCH monitoring periodicity, a quantity of PDCCH monitoring occasions, a slot set including several consecutive slots, or the like. This is not limited in this disclosure. For example, the first duration may be eight slots, and the terminal device may stop monitoring the PDCCH in the eight slots.

A start moment of the first duration may be at the beginning of a slot in which the first DCI is located, at the beginning of a next slot for the first DCI, or at the beginning of a next symbol of an end symbol for the first DCI. This is not limited in embodiments of this application.

Optionally, a length of the first duration may be configured by using RRC or indicated by the first DCI. A specific RRC configuration manner or a DCI indication manner is not limited in embodiments of this application.

For example, the network device sends the first DCI to the terminal device on the active DL BWP, where the first DCI indicates the terminal device to stop monitoring the PDCCH within the first duration, and indicates the length of the first duration.

For example, the network device sends the first DCI to the terminal device on the active DL BWP, where the first DCI indicates the terminal device to stop monitoring the PDCCH within the first duration. RRC signaling is sent to the terminal device on the active DL BWP. The RRC signaling indicates the length of the first duration.

Optionally, the length of the first duration may be predefined in a protocol.

A duration of the timer may be configured by the network device by using RRC signaling or predefined in a protocol. A unit of the duration of the timer may be a second, a millisecond, a frame, a subframe, a slot, or the like. This is not limited in embodiments of this application. For example, the duration of the timer may be three milliseconds.

When a condition for starting or restarting the timer is met (for example, the first DCI includes scheduling information), the terminal device starts or restarts the timer and runs the timer, to be specific, the timer decreases in descending order per subframe or per half subframe. After the timer expires, the terminal device performs DL BWP switching. If the condition for restarting the timer is met before the timer expires, the timer is restarted, that is, the timer is started to run again.

The expiration moment of the timer is earlier than the end moment of the first duration. For example, the first duration is greater than a duration within which the timer expires. For example, the first duration is greater than the duration within which the timer expires, the first duration may be eight slots, and the duration of the timer may be three milliseconds, namely, six slots.

A specific time location at which the timer is started or restarted may be at the beginning of the slot in which the first DCI is located, at a start location of the next slot for the first DCI, or at a start location of the next symbol of the end symbol for the first DCI. This is not limited in embodiments of this application.

The end moment of the first duration is later than the expiration moment of the timer. When the timer expires, a duration for stopping monitoring the PDCCH does not end, but the terminal device may monitor the PDCCH on the switched-to DL BWP. The switched-to DL BWP is a new active DL BWP. The switched-to DL BWP may also be referred to as a default DL BWP.

According to the method for stopping monitoring a PDCCH provided in this embodiment of this application, the network device indicates the terminal device to stop monitoring the PDCCH within the first duration, and configures the timer used for BWP switching. The terminal device may run the timer and start to stop monitoring the PDCCH, stop monitoring the PDCCH within the first duration and before the timer expires, and monitor the PDCCH on the switched-to BWP. In the method, the timer can be run and PDCCH monitoring can be started to be stopped, and running time of the timer is not changed. Therefore, the impact on the protocol is low, and the implementation is simple.

With reference to the first aspect, in some implementations of the first aspect, that the terminal device runs a timer includes: The terminal device starts or restarts the timer when the terminal device receives indication information from the network device on the active DL BWP. The indication information is used to schedule the terminal device to transmit a PDSCH or a PUSCH, or the indication information indicates the terminal device to perform DL BWP switching, and the indication information is carried in the first DCI or DCI other than the first DCI.

With reference to the first aspect, in some implementations of the first aspect, the length of the first duration is configured by using the RRC or indicated by the first DCI.

With reference to the first aspect, in some implementations of the first aspect, the terminal device determines the start moment of the first duration based on at least one of the following information: a time offset between the start moment of the first duration and the first DCI; a maximum value between a minimum slot offset and a duration for parsing the first DCI, where the minimum slot offset is a minimum slot offset between a PDCCH carrying the first DCI and a PDSCH that is allowed to be scheduled by using the first DCI; a moment after a hybrid automatic repeat request (hybrid automatic repeat request, HARQ) corresponding to a PDSCH is fed back when the PDSCH is scheduled by using the first DCI; or a moment after a PUSCH is transmitted when the PUSCH is scheduled by using the first DCI.

According to the method for stopping monitoring a PDCCH provided in this embodiment of this application, the time offset between the start moment of the first duration and the second DCI can be determined based on at least one of the time offset between the start moment of the first duration and the second DCI, the maximum value between the minimum slot offset and the duration for parsing the second DCI, or the moment after the HARQ corresponding to the PDSCH is fed back when the PDSCH is scheduled by using the second DCI, and whether the first duration and a BWP switch delay overlap does not need to be considered. This can reduce complexity of processing by the terminal device.

According to a second aspect, this application provides a method for stopping monitoring a physical downlink control channel PDCCH. The method includes: A terminal device receives first downlink control information DCI from a network device on an active downlink DL bandwidth part BWP, where the first DCI indicates the terminal device to stop monitoring a PDCCH within a first duration, and the PDCCH on which monitoring is stopped includes a PDCCH in a type 3 common search space set and a PDCCH in a terminal device-specific search space set. The terminal device runs a timer, where the timer is used for BWP switching. The terminal device stops, based on the first DCI, monitoring the PDCCH within the first duration, and suspends running of the timer. The terminal device continues to run the timer after the first duration. The terminal device performs DL BWP switching when the timer expires.

A start moment of the first duration may be at the beginning of a slot in which the first DCI is located, at the beginning of a next slot for the first DCI, or at the beginning of a next symbol of an end symbol for the first DCI. This is not limited in embodiments of this application.

Optionally, a length of the first duration may be configured by using RRC or indicated by the first DCI. A specific RRC configuration manner or a DCI indication manner is not limited in embodiments of this application.

For example, the network device sends the first DCI to the terminal device on the active DL BWP, where the first DCI indicates the terminal device to stop monitoring the PDCCH within the first duration, and indicates the length of the first duration.

For example, the network device sends the first DCI to the terminal device on the active DL BWP, where the first DCI indicates the terminal device to stop monitoring the PDCCH within the first duration. RRC signaling is sent to the terminal device on the active DL BWP. The RRC signaling indicates the length of the first duration.

Optionally, the length of the first duration may be predefined in a protocol.

A duration of the timer may be configured by the network device by using RRC signaling or predefined in a protocol. A unit of the duration of the timer may be a second, a millisecond, a frame, a subframe, a slot, or the like. This is not limited in embodiments of this application. For example, the duration of the timer may be three milliseconds.

When a condition for starting or restarting the timer is met (for example, the first DCI includes scheduling information), the terminal device starts or restarts the timer and runs the timer, to be specific, the timer decreases in descending order per subframe or per half subframe. After the timer expires, the terminal device performs DL BWP switching. If the condition for restarting the timer is met before the timer expires, the timer is restarted, that is, the timer is started to run again.

A specific time location at which the timer is started or restarted may be at the beginning of the slot in which the first DCI is located, at a start location of the next slot for the first DCI, or at a start location of the next symbol of the end symbol for the first DCI. This is not limited in embodiments of this application.

The terminal device suspends running of the timer within the duration for stopping monitoring the PDCCH, that is, within the duration for stopping monitoring the PDCCH, suspending of the timer decreases in descending order per subframe or per half subframe.

After performing DL BWP switching, the terminal device may monitor the PDCCH on a switched-to DL BWP.

According to the method for stopping monitoring a PDCCH provided in this embodiment of this application, the network device indicates the terminal device to stop monitoring the PDCCH within the first duration, and configures the timer used for BWP switching. When stopping monitoring the PDCCH, the terminal device suspends running of the timer, and continues to run the timer after the first duration, that is, stopping monitoring the PDCCH and stopping running the timer are run in different time periods. This avoids a problem that the timer may easily expire due to stopping monitoring the PDCCH. In addition, the terminal device may stop monitoring the PDCCH within the first duration, to reduce power consumption of the terminal device.

With reference to the second aspect, in some implementations of the second aspect, that the terminal device runs a timer includes: The terminal device starts or restarts the timer when the terminal device receives indication information from the network device on the active DL BWP. The indication information is used to schedule the terminal device to transmit a PDSCH or a PUSCH, or the indication information indicates the terminal device to perform DL BWP switching, and the indication information is carried in the first DCI or DCI other than the first DCI.

With reference to the second aspect, in some implementations of the second aspect, the length of the first duration is configured by using the radio resource control RRC or indicated by the first DCI.

With reference to the second aspect, in some implementations of the second aspect, the terminal device determines the start moment of the first duration based on at least one of the following information: a time offset between the start moment of the first duration and the first DCI; a maximum value between a minimum slot offset and a duration for parsing the first DCI, where the minimum slot offset is a minimum slot offset between a PDCCH carrying the first DCI and a PDSCH that is allowed to be scheduled by using the first DCI; a moment after a HARQ corresponding to a PDSCH is fed back when the PDSCH is scheduled by using the first DCI; or a moment after a PUSCH is transmitted when the PUSCH is scheduled by using the first DCI.

According to the method for stopping monitoring a PDCCH provided in this embodiment of this application, the time offset between the start moment of the first duration and the first DCI can be determined based on at least one of the time offset between the start moment of the first duration and the first DCI, the maximum value between the minimum slot offset and the duration for parsing the first DCI, or the moment after the HARQ corresponding to the PDSCH is fed back when the PDSCH is scheduled by using the first DCI, and whether the first duration and a BWP switch delay overlap does not need to be considered. This can reduce complexity of processing by the terminal device.

According to a third aspect, this application provides a method for stopping monitoring a physical downlink control channel PDCCH. The method includes: A terminal device receives second DCI from a network device on an active DL BWP, where the second DCI indicates to perform DL BWP switching and stop monitoring a PDCCH within a first duration, the PDCCH on which monitoring is stopped includes a PDCCH in a type 3 common search space set and a PDCCH in a terminal device-specific search space set, and the second DCI is used to schedule transmission of a PDSCH. The terminal device performs, based on the second DCI, DL BWP switching, and stops monitoring the PDCCH on a switched-to DL BWP. A start moment of the first duration is determined based on at least one of the following information: a next slot after a BWP switch delay; a slot in which the PDSCH is transmitted on the switched-to DL BWP; a slot next to a slot in which the PDSCH is transmitted on the switched-to DL BWP; a time offset between the start moment of the first duration and the second DCI; a maximum value between a minimum slot offset and a duration for parsing the second DCI, where the minimum slot offset is a minimum slot offset between a PDCCH carrying the second DCI and a PDSCH that is allowed to be scheduled by using the second DCI; or a moment after a HARQ corresponding to a PDSCH is fed back when the PDSCH is scheduled by using the second DCI.

The second DCI may be carried on the PDCCH. The terminal device may detect the second DCI on the PDCCH on the active DL BWP, stop, based on the second DCI, monitoring the PDCCH within the first duration, and perform DL BWP switching. The PDCCH on which monitoring is stopped includes the PDCCH in the type 3 common search space set and the PDCCH in the terminal device-specific search space set.

A BWP indicator field in the second DCI indicates DL BWP switching, and indicates to stop monitoring the PDCCH within the first duration and schedule the transmission of the PDSCH. Specifically, the second DCI may carry scheduling information of the PDSCH, and the BWP indicator field in the second DCI indicates an ID of a DL BWP. The ID is different from an ID of the currently active DL BWP. The terminal device switches to the DL BWP in the indicator field in the second DCI based on the second DCI.

The start moment of the first duration may be at the beginning of a slot in which first DCI is located, at a start location of a next slot for first DCI, or at a start location of a next symbol of an end symbol for first DCI. This is not limited in embodiments of this application.

Optionally, a length of the first duration may be configured by using RRC or indicated by the first DCI. A specific RRC configuration manner or a DCI indication manner is not limited in embodiments of this application.

For example, the network device sends the second DCI to the terminal device on the active DL BWP, where the second DCI indicates the terminal device to stop monitoring the PDCCH within the first duration, and indicates the length of the first duration.

For example, the network device sends the second DCI to the terminal device on the active DL BWP, where the second DCI indicates the terminal device to stop monitoring the PDCCH within the first duration. RRC signaling is sent to the terminal device on the active DL BWP. The RRC signaling indicates the length of the first duration.

Optionally, the length of the first duration may be predefined in a protocol.

The start moment of the first duration may be in the next slot after the BWP switch delay, in the slot in which the PDSCH is transmitted on the switched-to DL BWP, or in the slot next to the slot in which the PDSCH is transmitted on the switched-to DL BWP.

The start moment of the first duration may be determined based on at least one of the time offset between the start moment of the first duration and the second DCI, the maximum value between the minimum slot offset and the duration for parsing the second DCI, or the moment after the HARQ corresponding to the PDSCH is fed back when the PDSCH is scheduled by using the second DCI.

According to the method for stopping monitoring a PDCCH provided in this embodiment of this application, when the start moment of the first duration is in the next slot after the BWP switch delay, in the slot in which the PDSCH is transmitted on the switched-to DL BWP, or in the slot next to the slot in which the PDSCH is transmitted on the switched-to DL BWP, so that there is no overlap between the first duration and the BWP switch delay. This helps the terminal device stop monitoring the PDCCH for a long time, and helps reduce power consumption of the terminal device. In addition, the time offset between the start moment of the first duration and the second DCI can be determined based on at least one of the time offset between the start moment of the first duration and the second DCI, the maximum value between the minimum slot offset and the duration for parsing the second DCI, or the moment after the hybrid automatic repeat request (hybrid automatic repeat request, HARQ) corresponding to the PDSCH is fed back when the PDSCH is scheduled by using the second DCI, and whether the first duration and a BWP switch delay overlap does not need to be considered. This can reduce complexity of processing by the terminal device.

With reference to the third aspect, in some implementations of the third aspect, the length of the first duration is configured by using the radio resource control RRC or indicated by the second DCI.

With reference to the third aspect, in some implementations of the third aspect, the second DCI further indicates the terminal device to switch to a first search space set group, where the first search space set group is a search space set group on the switched-to DL BWP. The method further includes: The terminal device switches to the first search space set group on the switched-to DL BWP.

With reference to the third aspect, in some implementations of the third aspect, a moment at which the terminal device switches to the first search space set group on the switched-to DL BWP is a next slot or a next symbol after the first duration, or a slot or a symbol that is the same as the start moment of the first duration.

With reference to the third aspect, in some implementations of the third aspect, the moment at which the terminal device switches to the first search space set group on the switched-to DL BWP is determined based on at least one of the following information, and is different from the start moment of the first duration: the next slot after the BWP switch delay; the slot in which the PDSCH is transmitted on the switched-to DL BWP; the slot next to the slot in which the PDSCH is transmitted on the switched-to DL BWP; the time offset between the start moment of the first duration and the second DCI; the maximum value between the minimum slot offset and the duration for parsing the second DCI; or the moment after the hybrid automatic repeat request HARQ corresponding to the PDSCH is fed back when the PDSCH is scheduled by using the second DCI.

According to a fourth aspect, this application provides a method for stopping monitoring a physical downlink control channel PDCCH. The method includes: A network device sends first downlink control information DCI to a terminal device on an active downlink DL bandwidth part BWP, where the first DCI indicates the terminal device to stop monitoring a PDCCH within a first duration, and the PDCCH on which monitoring is stopped includes a PDCCH in a type 3 common search space set and a PDCCH in a terminal device-specific search space set. The network device runs a timer, where the timer is used for BWP switching. The network device suspends running of the timer within the first duration. The network device continues to run the timer after the first duration. The network device performs DL BWP switching when the timer expires.

According to the method for stopping monitoring a PDCCH provided in this embodiment of this application, the network device indicates the terminal device to stop monitoring the PDCCH within the first duration, and configures the timer used for BWP switching. When stopping monitoring the PDCCH, the network device suspends running of the timer, and continues to run the timer after the first duration, that is, stopping monitoring the PDCCH and stopping running the timer are run in different time periods. This avoids a problem that the timer may easily expire due to stopping monitoring the PDCCH.

With reference to the fourth aspect, in some implementations of the fourth aspect, a length of the first duration is configured by using radio resource control RRC or indicated by the first DCI.

With reference to the fourth aspect, in some implementations of the fourth aspect, the network device determines a start moment of the first duration based on at least one of the following information: a time offset between the start moment of the first duration and the first DCI; a moment after a hybrid automatic repeat request HARQ corresponding to a PDSCH is fed back when the PDSCH is scheduled by using the first DCI; or a moment after a PUSCH is transmitted when the PUSCH is scheduled by using the first DCI.

According to a fifth aspect, this application provides a method for stopping monitoring a physical downlink control channel PDCCH. The method includes: A network device sends second downlink control information DCI to a terminal device on an active downlink DL bandwidth part BWP, where the second DCI indicates to perform DL BWP switching and the terminal device to stop monitoring a PDCCH within a first duration, the PDCCH on which monitoring is stopped includes a PDCCH in a type 3 common search space set and a PDCCH in a terminal device-specific search space set, and the second DCI is used to schedule transmission of a physical downlink shared channel PDSCH. The network device performs DL BWP switching based on the second DCI. A start moment of the first duration is determined based on at least one of the following information: a next slot after a BWP switch delay; a slot in which the PDSCH is transmitted on a switched-to DL BWP; a slot next to a slot in which the PDSCH is transmitted on a switched-to DL BWP; a time offset between the start moment of the first duration and the second DCI; a maximum value between a minimum slot offset and a duration for parsing the second DCI, where the minimum slot offset is a minimum slot offset between a PDCCH carrying the second DCI and a PDSCH that is allowed to be scheduled by using the second DCI; or a moment after a hybrid automatic repeat request HARQ corresponding to a PDSCH is fed back when the PDSCH is scheduled by using the second DCI.

With reference to the fifth aspect, in some implementations of the fifth aspect, a length of the first duration is configured by using radio resource control RRC or indicated by the second DCI.

With reference to the fifth aspect, in some implementations of the fifth aspect, the second DCI further indicates the terminal device to switch to a first search space set group, where the first search space set group is a search space set group on the switched-to DL BWP. The method further includes: The network device switches to the first search space set group on the switched-to DL BWP.

With reference to the fifth aspect, in some implementations of the fifth aspect, a moment at which the network device switches to the first search space set group on the switched-to DL BWP is a next slot or a next symbol after the first duration, or a slot or a symbol that is the same as the start moment of the first duration.

With reference to the fifth aspect, in some implementations of the fifth aspect, the moment at which the network device switches to the first search space set group on the DL BWP is determined based on at least one of the following information, and is different from the start moment of the first duration: the next slot after the BWP switch delay; the slot in which the PDSCH is transmitted on the switched-to DL BWP; the slot next to the slot in which the PDSCH is transmitted on the switched-to DL BWP; the time offset between the start moment of the first duration and the second DCI; the maximum value between the minimum slot offset and the duration for parsing the second DCI; or the moment after the hybrid automatic repeat request HARQ corresponding to the PDSCH is fed back when the PDSCH is scheduled by using the second DCI.

According to a sixth aspect, this application provides a communication apparatus, including: a transceiver unit, configured to receive first downlink control information DCI from a network device on an active downlink DL bandwidth part BWP, where the first DCI indicates the apparatus to stop monitoring a PDCCH within a first duration, and the PDCCH on which monitoring is stopped includes a PDCCH in a type 3 common search space set and a PDCCH in an apparatus-specific search space set; and a processing unit, configured to: run a timer, where the timer is used for BWP switching, and an expiration moment of the timer is earlier than an end moment of the first duration; stop monitoring the PDCCH within the first duration and before the timer expires; and perform DL BWP switching when the timer expires, and monitor the PDCCH on a switched-to DL BWP.

With reference to the sixth aspect, in some implementations of the sixth aspect, the processing unit is further configured to: start or restart the timer when indication information from the network device is received on the active DL BWP, where the indication information is used to schedule the apparatus to transmit a physical downlink shared channel PDSCH or a physical uplink shared channel PUSCH, or the indication information indicates the apparatus to perform DL BWP switching, and the indication information is carried in the first DCI or DCI other than the first DCI. With reference to the sixth aspect, in some implementations of the sixth aspect, a length of the first duration is configured by using radio resource control RRC or indicated by the first DCI.

With reference to the sixth aspect, in some implementations of the sixth aspect, the apparatus determines a start moment of the first duration based on at least one of the following information: a time offset between the start moment of the first duration and the first DCI; a maximum value between a minimum slot offset and a duration for parsing the first DCI, where the minimum slot offset is a minimum slot offset between a PDCCH carrying the first DCI and a PDSCH that is allowed to be scheduled by using the first DCI; a moment after a hybrid automatic repeat request HARQ corresponding to a PDSCH is fed back when the PDSCH is scheduled by using the first DCI; or a moment after a PUSCH is transmitted when the PUSCH is scheduled by using the first DCI.

According to a seventh aspect, this application provides a communication apparatus, including a transceiver unit, configured to receive first downlink control information DCI from a network device on an active downlink DL bandwidth part BWP, where the first DCI indicates the apparatus to stop monitoring a PDCCH within a first duration, and the PDCCH on which monitoring is stopped includes a PDCCH in a type 3 common search space set and a PDCCH in an apparatus-specific search space set; and a processing unit, configured to: run a timer, where the timer is used for BWP switching; stop, based on the first DCI, monitoring the PDCCH within the first duration, and suspend running of the timer; continue to run the timer after the first duration; and perform DL BWP switching when the timer expires.

With reference to the seventh aspect, in some implementations of the seventh aspect, the processing unit is further configured to: start or restart the timer when indication information from the network device is received on the active DL BWP, where the indication information is used to schedule the apparatus to transmit a physical downlink shared channel PDSCH or a physical uplink shared channel PUSCH, or the indication information indicates the apparatus to perform DL BWP switching, and the indication information is carried in the first DCI or DCI other than the first DCI. With reference to the seventh aspect, in some implementations of the seventh aspect, a length of the first duration is configured by using radio resource control RRC or indicated by the first DCI. With reference to the seventh aspect, in some implementations of the seventh aspect, the apparatus determines a start moment of the first duration based on at least one of the following information: a time offset between the start moment of the first duration and the first DCI; a maximum value between a minimum slot offset and a duration for parsing the first DCI, where the minimum slot offset is a minimum slot offset between a PDCCH carrying the first DCI and a PDSCH that is allowed to be scheduled by using the first DCI; a moment after a hybrid automatic repeat request HARQ corresponding to a PDSCH is fed back when the PDSCH is scheduled by using the first DCI; or a moment after a PUSCH is transmitted when the PUSCH is scheduled by using the first DCI.

According to an eighth aspect, this application provides a communication apparatus, including a transceiver unit, configured to receive second downlink control information DCI from a network device on an active downlink DL bandwidth part BWP, where the second DCI indicates to perform DL BWP switching and stop monitoring a PDCCH within a first duration, the PDCCH on which monitoring is stopped includes a PDCCH in a type 3 common search space set and a PDCCH in an apparatus-specific search space set, and the second DCI is used to schedule transmission of a physical downlink shared channel PDSCH; and a processing unit, configured to: perform DL BWP switching based on the second DCI, and stop monitoring the PDCCH on a switched-to DL BWP. A start moment of the first duration is determined based on at least one of the following information: a next slot after a BWP switch delay; a slot in which the PDSCH is transmitted on the switched-to DL BWP; a slot next to a slot in which the PDSCH is transmitted on the switched-to DL BWP; a time offset between the start moment of the first duration and the second DCI; a maximum value between a minimum slot offset and a duration for parsing the second DCI, where the minimum slot offset is a minimum slot offset between a PDCCH carrying the second DCI and a PDSCH that is allowed to be scheduled by using the second DCI; or a moment after a hybrid automatic repeat request HARQ corresponding to a PDSCH is fed back when the PDSCH is scheduled by using the second DCI.

With reference to the eighth aspect, in some implementations of the eighth aspect, a length of the first duration is configured by using radio resource control RRC or indicated by the first DCI.

With reference to the eighth aspect, in some implementations of the eighth aspect, the second DCI further indicates the terminal device to switch to a first search space set group, where the first search space set group is a search space set group on the switched-to DL BWP. The method further includes: The terminal device switches to the first search space set group on the switched-to DL BWP.

With reference to the eighth aspect, in some implementations of the eighth aspect, a moment at which the terminal device switches to the first search space set group on the switched-to DL BWP is a next slot or a next symbol after the first duration, or a slot or a symbol that is the same as the start moment of the first duration.

With reference to the eighth aspect, in some implementations of the eighth aspect, the moment at which the terminal device switches to the first search space set group on the switched-to DL BWP is determined based on at least one of the following information, and is different from the start moment of the first duration: the next slot after the BWP switch delay; the slot in which the PDSCH is transmitted on the switched-to DL BWP; the slot next to the slot in which the PDSCH is transmitted on the switched-to DL BWP; the time offset between the start moment of the first duration and the second DCI; the maximum value between the minimum slot offset and the duration for parsing the second DCI; or the moment after the hybrid automatic repeat request HARQ corresponding to the PDSCH is fed back when the PDSCH is scheduled by using the second DCI.

According to a ninth aspect, this application provides a communication apparatus, including a transceiver unit, configured to send first downlink control information DCI to a terminal device on an active downlink DL bandwidth part BWP, where the first DCI indicates the terminal device to stop monitoring a PDCCH within a first duration, and the PDCCH on which monitoring is stopped includes a PDCCH in a type 3 common search space set and a PDCCH in a terminal device-specific search space set; and a processing unit, configured to: run a timer, where the timer is used for BWP switching; suspend running of the timer within the first duration; and continue to run the timer after the first duration. The processing unit is further configured to perform DL BWP switching when the timer expires.

With reference to the ninth aspect, in some implementations of the ninth aspect, a length of the first duration is configured by using radio resource control RRC or indicated by the first DCI.

With reference to the ninth aspect, in some implementations of the eighth aspect, the network device determines a start moment of the first duration based on at least one of the following information: a time offset between the start moment of the first duration and the first DCI; a moment after a hybrid automatic repeat request HARQ corresponding to a PDSCH is fed back when the PDSCH is scheduled by using the first DCI; or a moment after a PUSCH is transmitted when the PUSCH is scheduled by using the first DCI.

According to a tenth aspect, this application provides a communication apparatus. The apparatus includes a transceiver unit and a processing unit. The transceiver unit is configured to send second downlink control information DCI to a terminal device on an active downlink DL bandwidth part BWP. The second DCI indicates to perform DL BWP switching and stop monitoring a PDCCH within a first duration, the PDCCH on which monitoring is stopped includes a PDCCH in a type 3 common search space set and a PDCCH in a terminal device-specific search space set, and the second DCI is used to schedule transmission of a physical downlink shared channel PDSCH. The processing unit is configured to perform DL BWP switching based on the second DCI. A start moment of the first duration is determined based on at least one of the following information: a next slot after a BWP switch delay; a slot in which the PDSCH is transmitted on a switched-to DL BWP; a slot next to a slot in which the PDSCH is transmitted on a switched-to DL BWP; a time offset between the start moment of the first duration and the second DCI; a maximum value between a minimum slot offset and a duration for parsing the second DCI, where the minimum slot offset is a minimum slot offset between a PDCCH carrying the second DCI and a PDSCH that is allowed to be scheduled by using the second DCI; or a moment after a hybrid automatic repeat request HARQ corresponding to a PDSCH is fed back when the PDSCH is scheduled by using the second DCI.

With reference to the tenth aspect, in some implementations of the tenth aspect, a length of the first duration is configured by using radio resource control RRC or indicated by the second DCI. With reference to the tenth aspect, in some implementations of the tenth aspect, the second DCI further indicates the terminal device to switch to a first search space set group, where the first search space set group is a search space set group on the switched-to DL BWP. The processing unit is further configured to switch to the first search space set group on the switched-to DL BWP. With reference to the tenth aspect, in some implementations of the tenth aspect, a moment at which the apparatus switches to the first search space set group on the switched-to DL BWP is a next slot or a next symbol after the first duration, or a slot or a symbol that is the same as the start moment of the first duration.

With reference to the tenth aspect, in some implementations of the tenth aspect, the moment at which the apparatus switches to the first search space set group on the switched-to DL BWP is determined based on at least one of the following information, and is different from the start moment of the first duration: the next slot after the BWP switch delay; the slot in which the PDSCH is transmitted on the switched-to DL BWP; the slot next to the slot in which the PDSCH is transmitted on the switched-to DL BWP; the time offset between the start moment of the first duration and the second DCI; the maximum value between the minimum slot offset and the duration for parsing the second DCI; or the moment after the hybrid automatic repeat request HARQ corresponding to the PDSCH is fed back when the PDSCH is scheduled by using the second DCI.

According to an eleventh aspect, this application provides a communication apparatus, configured to perform the method according to any one of the foregoing aspects or the possible implementations of the aspects. Specifically, the apparatus includes units configured to perform the method according to any one of the foregoing aspects or the possible implementations of the aspects.

In a design, the apparatus may include modules corresponding to performing the methods/operations/steps/actions described in the foregoing aspects. The modules may be hardware circuits, may be software, or may be implemented by hardware circuits in combination with software.

In another design, the apparatus is a communication chip. The communication chip may include an input circuit or interface configured to send information or data, and an output circuit or interface configured to receive information or data.

In another design, the apparatus is a communication device. The communication device may include a transmitter configured to send information or data, and a receiver configured to receive information or data.

In another design, the apparatus is configured to perform the method according to any one of the foregoing aspects or the possible implementations of the aspects. The apparatus may be configured in the foregoing terminal device or network device, or the apparatus is the foregoing terminal device or network device.

According to a twelfth aspect, this application provides another communication apparatus, including a processor and a memory. The memory is configured to store a computer program, and the processor is configured to invoke the computer program from the memory and run the computer program, so that the apparatus performs the method according to any one of the possible implementations of the foregoing aspects.

Optionally, there are one or more processors, and there are one or more memories.

Optionally, the memory and the processor may be integrated together, or the memory and the processor may be separately disposed.

Optionally, the communication device further includes a transmitter (transmitter) and a receiver (receiver). The transmitter and the receiver may be disposed separately, or may be integrated together, and are referred to as a transceiver (transceiver).

According to a thirteenth aspect, a communication system is provided, including an apparatus configured to implement the method according to any one of the foregoing aspects or any one of the possible implementations of the foregoing aspects.

In a possible design, the communication system may further include another device that interacts with the terminal device and/or the network device in the solutions provided in embodiments of this application.

According to a fourteenth aspect, a computer-readable medium is provided. The computer-readable medium stores a computer program (which may also be referred to as code or instructions). When the computer program is run on a computer, the computer is enabled to perform the method according to any one of the possible implementations of the foregoing aspects.

According to a fifteenth aspect, a computer program product is provided. The computer program product includes a computer program (which may also be referred to as code or instructions). When the computer program is run, a computer is enabled to perform the method according to any one of the possible implementations of the foregoing aspects.

## BRIEF DESCRIPTION OF DRAWINGS

FIG. 1 is a schematic diagram of a PDCCH monitoring skipping mechanism;

FIG. 2 is a schematic diagram of PDCCH monitoring periodicities of SS sets associated with an SSSG 0 and an SSSG 1;

FIG. 3 is a schematic diagram of BWP switching;

FIG. 4 is a schematic diagram of another BWP switching;

FIG. 5 is a schematic diagram of a communication system according to an embodiment of this application;

FIG. 6 is a schematic flowchart of a method for stopping monitoring a PDCCH according to an embodiment of this application;

FIG. 7 is a schematic diagram of stopping monitoring a PDCCH according to an embodiment of this application;

FIG. 8 is a schematic flowchart of another method for stopping monitoring a PDCCH according to an embodiment of this application;

FIG. 9 is another schematic diagram of stopping monitoring a PDCCH according to an embodiment of this application;

FIG. 10 is a schematic flowchart of still another method for stopping monitoring a PDCCH according to an embodiment of this application;

FIG. 11 is still another schematic diagram of stopping monitoring a PDCCH according to an embodiment of this application;

FIG. 12 is another schematic diagram of stopping monitoring a PDCCH according to an embodiment of this application;

FIG. 13 is still another schematic diagram of stopping monitoring a PDCCH according to an embodiment of this application;

FIG. 14 is a schematic flowchart of a communication apparatus according to an embodiment of this application;

FIG. 15 is a schematic flowchart of another communication apparatus according to an embodiment of this application;

FIG. 16 is another schematic diagram of stopping monitoring a PDCCH according to an embodiment of this application;

FIG. 17 is still another schematic diagram of stopping monitoring a PDCCH according to an embodiment of this application;

FIG. 18 is a schematic flowchart of yet another method for stopping monitoring a PDCCH according to an embodiment of this application;

FIG. 19 is another schematic diagram of stopping monitoring a PDCCH according to an embodiment of this application;

FIG. 20 is still another schematic diagram of stopping monitoring a PDCCH according to an embodiment of this application;

FIG. 21 is another schematic diagram of stopping monitoring a PDCCH according to an embodiment of this application;

FIG. 22 is still another schematic diagram of stopping monitoring a PDCCH according to an embodiment of this application; and

FIG. 23 is another schematic diagram of stopping monitoring a PDCCH according to an embodiment of this application.

## DESCRIPTION OF EMBODIMENTS

The following describes technical solutions of this application with reference to accompanying drawings.

The technical solutions in embodiments of this application may be applied to various communication systems, for example, an LTE frequency division duplex (frequency division duplex, FDD) system, an LTE time division duplex (time division duplex, TDD) system, a 5th generation (5th generation, 5G) system, a new radio (new radio, NR) system, or another evolved communication system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some terminals, for example, include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a vehicle-mounted device, a wearable device, a terminal device in a 5G network, and a terminal device in a future evolved public land mobile network (public land mobile network, PLMN). This is not limited in embodiments of this application.

In addition, in embodiments of this application, the terminal device may alternatively be a terminal device in an internet of things (internet of things, IoT) system. An IoT is an important part of future development of information technologies. A main technical feature of the IoT is connecting things to a network by using a communication technology, to implement an intelligent network for human-machine interconnection and thing-thing interconnection.

In addition, a network device in embodiments of this application may be a device configured to communicate with the terminal device. The network device may also be referred to as an access network device or a radio access network device, may be a transmission reception point (transmission reception point, TRP), may be an evolved base station (evolved NodeB, eNB or eNodeB) in an LTE system, may be a home base station (for example, home evolved NodeB, or home NodeB, HNB) or a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, may be an access point (access point, AP) in a WLAN, may be a gNB in a new radio (new radio, NR) system, or may be a satellite base station in a satellite communication system, or the like. This is not limited in embodiments of this application.

In a network structure, the network device may include a central unit (central unit, CU) node, a distributed unit (distributed unit, DU) node, a RAN device including a CU node and a DU node, or a RAN device including a control plane CU node (CU-CP node), a user plane CU node (CU-UP node), and a DU node.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing high-rate data transmission services.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, contacts, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a wireless channel, and various other media that can store, include, and/or carry instructions and/or data.

To facilitate understanding of embodiments of this application, related terms in embodiments of this application are described.

1. PDCCH monitoring skipping (skip PDCCH monitoring) mechanism

The PDCCH monitoring skipping mechanism means that a network device may indicate, based on downlink control information (downlink control information, DCI), that a terminal device may skip (skip) monitoring a PDCCH in a period of time. In other words, the terminal device may stop monitoring the PDCCH in the period of time or not monitor the PDCCH in the period of time. The terminal device enters a sleep state (which may also be referred to as a standby state) within a duration for stopping monitoring the PDCCH, to reduce power consumption.

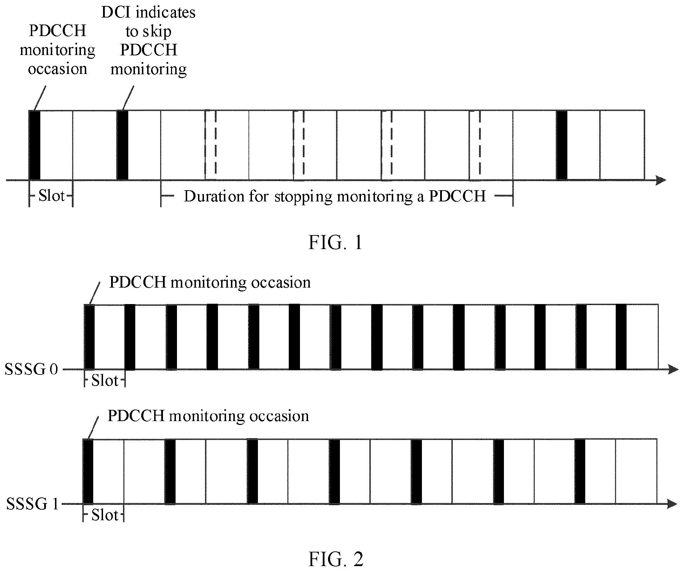

For example, FIG. 1 is a schematic diagram of the PDCCH monitoring skipping mechanism. As shown in FIG. 1, the terminal device may periodically monitor a PDCCH by using two slots as a periodicity, and a block filled with a black pattern in the figure indicates a PDCCH monitoring occasion that needs to be monitored.

When the terminal device receives the DCI that indicates the terminal device to stop monitoring the PDCCH in the period of time, the terminal device may stop monitoring the PDCCH in the period of time after the DCI is received. A duration of the period of time is the duration for stopping monitoring the PDCCH. After the duration for stopping monitoring the PDCCH, the terminal device may continue to monitor the PDCCH. The duration for stopping monitoring the PDCCH may be indicated by the DCI, or may be configured though radio resource control (radio resource control, RRC) signaling, or the duration for stopping monitoring the PDCCH may be predefined in a protocol. Particularly, when the network device configures, through the RRC signaling, a plurality of durations for stopping monitoring the PDCCH, the network device may indicate, based on the DCI, that one of the plurality of durations for stopping monitoring the PDCCH is used as a current duration for stopping monitoring the PDCCH.

It should be understood that, in FIG. 1, that the duration for stopping monitoring the PDCCH includes eight slots is merely used as an example. This is not limited in embodiments of this application.

A type 3 common search space set may be mainly used to monitor a PDCCH that carries DCI scrambled by any one of the following radio network temporary identifiers (radio network temporary identifiers, RNTIs): an interruption-RNTI (interruption-RNTI, INT-RNTI), a slot format indication-RNTI (slot format indication-RNTI, SFI-RNTI), a transmit power control-physical uplink shared channel-RNTI (transmit power control-physical uplink shared channel-RNTI, TPC-PUSCH-RNTI), a transmit power control-physical uplink control channel-RNTI (transmit power control-physical uplink control channel-RNTI, TPC-PUCCH-RNTI), a transmit power control-sounding reference signal-RNTI (transmit power control-sounding reference symbols-RNTI, TPC-SRS-RNTI), a cancellation indication-RNTI (cancellation indication-RNTI, CI-RNTI), a cell-RNTI (cell-RNTI, C-RNTI) on a primary cell, a modulation and coding scheme-C-RNTI (modulation and coding scheme-Cell-RNTI, MCS-C-RNTI), a configured scheduling-RNTI (configured scheduling-RNTI, CS-RNTI), a power saving-RNTI (power saving-RNTI, PS-RNTI) power reduction, or the like. User equipment-specific search space set may be used to monitor a PDCCH that carries DCI scrambled by any one of the following RNTIs: a C-RNTI, an MCS-C-RNTI, a semi-persistent-channel state indication-RNTI (semi persistent-channel state indication-RNTI, SP-CSI-RNTI), a CS-RNTI, a side link-RNTI (side link-RNTI, SL-RNTI), an SL-CS-RNTI, a side link semi-persistent scheduling vehicle-RNTI (SL semi-persistent scheduling V-RNTI), and the like.

A type 0 common search space set and a type 0A common search space set may be used to monitor a PDCCH for DCI scrambled by a system information-RNTI (system information-RNTI, SI-RNTI). A type 1 common search space set may be used to monitor a PDCCH for DCI scrambled by a random access-RNTI (random access-RNTI, RA-RNTI), a message B-RNTI (message B-RNTI, MsgB-RNTI), or a temporary cell-RNTI (temporary cell-RNTI, TC-RNTI). A type 2 common search space set may be used to monitor a PDCCH for DCI scrambled by a paging-RNTI (paging-RNTI, P-RNTI). For the type 0 common search space set, the type 0A common search space set, the type 1 common search space set, and the type 2 common search space set, the UE may monitor, in a slot in which the UE monitors the PDCCH for the DCI scrambled by the SI-RNTI, the RA-RNTI, the MsgB-RNTI, or the P-RNTI, the PDCCH for the DCI (DCI format 0_0 and DCI format 1_0) scrambled by the C-RNTI, the MCS-C-RNTI, or the CS-RNTI.

It should be noted that skipping PDCCH monitoring by the terminal device may also be referred to as stopping (stopping) PDCCH monitoring, not monitoring a PDCCH, or the like. This term is not limited in embodiment of this disclosure.

When the terminal device is further configured with a connected mode-discontinuous reception (connected mode-discontinuous reception, C-DRX) mechanism, the PDCCH monitoring skipping mechanism may also be used in an active duration for C-DRX, in other words, the terminal device may stop monitoring the PDCCH in a period of time in the active duration for the C-DRX.

2. Search space set group (search space set group, SSSG) switching mechanism

The SSSG switching mechanism means that a network device may indicate a terminal device to switch from a current search space set group to another search space set group to monitor a PDCCH. When a periodicity for monitoring the PDCCH in the switched-to search space set group is greater than a periodicity for monitoring the PDCCH in a switched-from search space set group, that is, when PDCCH monitoring occasions of the switched-to search space set group are sparse compared with PDCCH monitoring occasions of the switched-from search space set group, power consumption of the terminal device can be reduced.

For one downlink BWP, the network device may configure a plurality of search space sets (search space sets, SS sets) for the terminal device, and may group the plurality of configured SS sets. A specific quantity of groups is not limited in embodiments of this application. For example, the network device may group the plurality of configured SS sets into two groups or three groups.

For example, the network device groups the plurality of configured SS sets into two groups: an SSSG 0 and an SSSG 1. The network device may configure, in configuration information of an SS set, that the SS set belongs to the SSSG 0 or the SSSG 1. The terminal device may monitor the PDCCH based on the SS set of the SSSG 0 or the SSSG 1. The SSSG 0 is also described as an SSSGO, and the SSSG 1 may also be described as an SSSG1. This is not limited in embodiments of this application.

It should be understood that the SSSG 0 may be understood as that an index of an SSSG is 0, and the SSSG 1 may be understood as that an index of an SSSG is 1.

Optionally, one SS set may belong to a plurality of SSSGs, that is, may belong to the SSSG 0 and also belong to the SSSG 1.

Optionally, an SSSG parameter may not be configured in the configuration information of the SS set, and it indicates that the SS set is not grouped and belongs to neither the SSSG0 nor the SSSG1. For an SS set that is not grouped in the DL BWP, the UE monitors the PDCCH based on configuration information of the SS set. This is not limited in embodiments of this disclosure.

PDCCH monitoring occasions of SS sets associated with different SSSGs on one downlink BWP may be different, that is, PDCCH monitoring occasions of different SSSGs may be different in sparsity.

For example, the network device groups, based on configuration information of SS sets, the SS sets into two groups of SSSGs: the SSSG 0 and the SSSG 1. FIG. 2 is a schematic diagram of PDCCH monitoring periodicities of SS sets associated with the SSSG 0 and the SSSG 1. As shown in FIG. 2, on the PDCCH monitoring occasion of the SS set associated with the SSSG 0, one slot is used as a periodicity, to periodically monitor the PDCCH, and on the PDCCH monitoring occasion of the SS set associated with the SSSG 1, two slots are used as a periodicity, to periodically monitor the PDCCH. It should be understood that PDCCH monitoring occasions of the SSSG 1 are sparse compared with PDCCH monitoring occasions of the SSSG 0.

The terminal device monitors the PDCCH based on the SS set of the SSSG 0. After receiving information indicating that the network device indicates the terminal device to switch to the SSSG 1, the terminal device switches to the SSSG 1, and monitors the PDCCH based on the SS set of the SSSG1.

The terminal device switches to the SSSG 1 with the sparse PDCCH monitoring occasions, so that PDCCH monitoring is reduced, and power consumption of the terminal device can be reduced.

The SSSG switching mechanism is applicable to a type 3 common search space set (common search space set, CSS set) and a user equipment-specific search space set (UE-specific search space set, USS set), that is, the USS set and the type 3 CSS set may be grouped.

The terminal device implements dynamic SSSG switching, and the network device may explicitly indicate or implicitly indicate, by using a bit field in the DCI or the DCI, the terminal device to perform SSSG switching.

For example, there are two search space set groups: the SSSG 0 and the SSSG 1, and explicit indication of the bit field in the DCI may be: When the terminal device monitors the PDCCH based on the SS set of the SSSG 1, and a field indicator in the received DCI is 0, the terminal device switches to the SSSG 0, that is, monitors the PDCCH based on the SS set of the SSSG 0, and stops monitoring the PDCCH based on the SS set of the SSSG 1. When the terminal device monitors the PDCCH based on the SS set of the SSSG 0, and the field indicator in the received DCI is 1, the terminal device switches to the SSSG 1.

For implicit indication of the DCI, in a possible implementation, when the terminal device monitors the PDCCH based on the SS set of the SSSG1, and the terminal device detects any DCI format (format) or detects a specific DCI format, the terminal device switches to the SSSG 0. Alternatively, switching from the SSSG0 to the SSSG1 is performed in this manner.

In another possible implementation, when the terminal device monitors the PDCCH based on the SS set of the SSSG 1, the terminal device starts a timer used for SSSG switching. After the timer expires, the terminal device switches to the SSSG 0. Alternatively, switching from the SSSG0 to the SSSG1 is performed in this manner.

The network device may configure both the search space set group (search space set group, SSSG) switching mechanism and the PDCCH monitoring skipping (skip PDCCH monitoring) mechanism. In this case, after stopping monitoring the PDCCH for a period of time, the terminal device monitors the PDCCH based on the SS set of one of the SSSGs.

3. BWP switching mechanism

For one cell, a network device may configure a plurality of downlink (downlink, DL) BWPs and/or a plurality of uplink (uplink, UL) BWPs for a terminal device, and frequency domain resources of different BWPs may overlap or do not overlap. At the same time, one DL BWP and one UL BWP are active in a cell.

For a time division duplex (time division duplex, TDD) scenario (or referred to as an unpaired spectrum (unpaired spectrum) scenario), DL BWPs and UL BWPs with a same ID are associated, and center frequencies of each pair of associated DL BWPs and UL BWPs are the same. When the DL BWP is switched, the UL BWP is also switched accordingly. When the UL BWP is switched, the UL BWP is also switched accordingly.

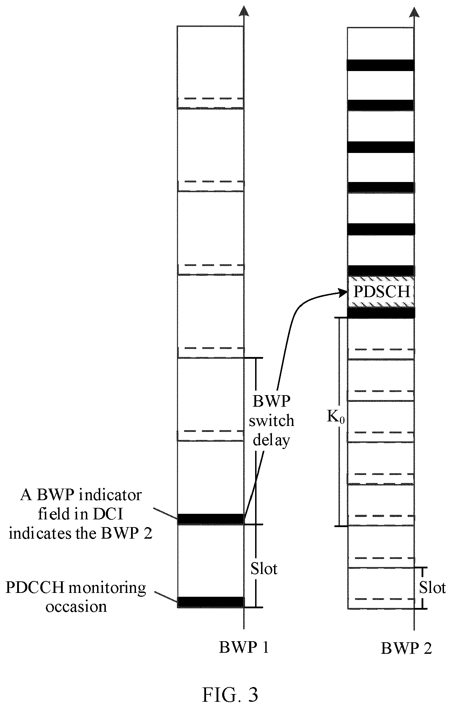

The BWP switching mechanism can be implemented in two manners. In a possible implementation, the network device may dynamically switch the DL BWP or the UL BWP based on the PDCCH. For example, the network device may dynamically switch the DL BWP based on the PDCCH. FIG. 3 is a schematic diagram of DL BWP switching. As shown in FIG. 3, the network device configures two BWPs: a BWP 1 and a BWP 2. A subcarrier spacing of the BWP 1 is 30 kilohertz (kilohertz, kHz), and a subcarrier spacing of the BWP 2 is 60 kHz. Currently, the BWP 1 is in an active state. When the terminal device detects that a BWP indicator (indicator) field in the DCI indicates the BWP 2, the terminal device performs BWP switching, and monitors a PDCCH on the BWP 2 after a BWP switch delay.

The DCI is further used to schedule a PDSCH, and the terminal device may receive the PDSCH on the BWP 2 based on scheduling information of the DCI. A slot offset $K_0$ (namely, a slot offset between the PDCCH and the scheduled PDSCH) indicated by a time domain resource allocation field of the DCI need to be not less than the BWP switch delay. As shown in FIG. 3, $K_0$ is one slot more than the BWP switch delay, and the terminal device starts to receive the PDSCH on the BWP 2 in a slot corresponding to the slot offset $K_0$ indicated by the DCI, and continues to monitor the PDCCH. After an end symbol for the DCI and before the slot offset indicated by the DCI, the terminal device does not need to receive or send data, and the terminal device does not need to monitor the PDCCH.

It should be understood that different subcarrier spacings correspond to different slot lengths. In FIG. 3, the BWP switch delay includes two slots, and the slot length is a slot length corresponding to a subcarrier spacing of 30 kHz. $K_0$ includes five slots, and the slot length is a slot length corresponding to a subcarrier spacing of 60 kHz. $K_0$ is one slot more than the BWP switch delay, and the slot length is the slot length corresponding to the subcarrier spacing of 60 kHz.

It should be further understood that, that the BWP switch delay includes two slots and $K_0$ includes five slots is merely an example. This is not limited in embodiments of this application.

In another possible implementation, the network device may configure a timer for BWP switching (bwp-InactivityTimer) for the terminal device. The timer is used by the terminal device to roll back from a currently active BWP to a default (default) BWP. The network device may configure an identifier (identity, ID) of the default BWP by using RRC signaling, and the terminal device may roll back from the currently active BWP to a BWP corresponding to the identifier of the default BWP. Alternatively, when the network device does not configure the identifier of the default BWP, the terminal device may fall back to an initial (initial) BWP configured by the network device.

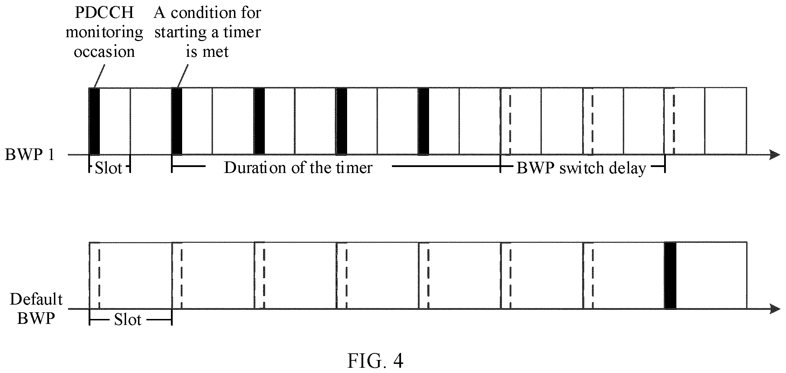

For example, FIG. 4 is a schematic diagram of another DL BWP switching. As shown in FIG. 4, the terminal device monitors a PDCCH on a currently active BWP 1, where a subcarrier spacing of a BWP 1 may be 60 kHz. When a condition for starting or restarting a timer is met, the timer is started or restarted and runs. If the condition for restarting the timer is not met, the timer decreases in descending order per subframe or per half subframe. When the timer expires (that is, the timer is 0), the terminal device performs BWP switching, and monitors a PDCCH on a default BWP after a BWP switch delay. A subcarrier spacing of the default BWP is 30 kHz. It should be understood that the terminal device does not monitor the PDCCH between BWP switch delays.

The subcarrier spacing of the BWP 1 is 60 kHz, and one subframe corresponds to four slots. In FIG. 4, a duration of the timer includes eight slots, that is, the duration of the timer is two milliseconds, namely, two subframes. When the timer runs, the timer may decrease in descending order per subframe or per half subframe until the timer expires.

It should be understood that, in FIG. 4, that the duration of the timer includes six slots and the BWP switch delay includes four slots is merely an example. This is not limited in embodiments of this application.

It should be further understood that different BWPs may correspond to different subcarrier spacings, and different subcarrier spacings correspond to different slot lengths. In FIG. 4, the subcarrier spacing of the BWP 1 is different from that of the default BWP. Therefore, a slot length corresponding to the BWP 1 is different from that corresponding to the default BWP.

A condition for starting or restarting a timer used for BWP switching in a cell 1 may include any one of the following.

(1) A terminal device receives, on an active BWP in the cell 1, a PDCCH that is scrambled by a C-RNTI or a CS-RNTI and that indicates downlink scheduling or uplink scheduling.
(2) The terminal device receives, in a cell other than the cell 1, a PDCCH that is scrambled by a C-RNTI or a CS-RNTI and that indicates downlink scheduling or uplink scheduling on an active BWP in the cell 1.
This condition is applicable to inter-carrier scheduling and TDD scenarios.
(3) The terminal device sends uplink semi-persistent scheduling or receives downlink semi-persistent scheduling in the cell 1.
(4) The terminal device receives a PDCCH that indicates BWP switching of the cell 1.

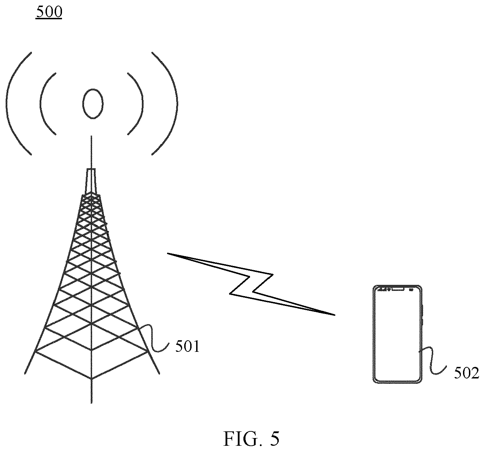

For ease of understanding embodiments of this application, a communication system applicable to embodiments of this application is first described in detail with reference to FIG. 5.

FIG. 5 is a schematic diagram of a communication system 500 according to an embodiment of this application. As shown in FIG. 5, the communication system 500 may include a network device 501 and at least one terminal device 502. The network device 501 and the at least one terminal device 502 may perform wireless communication. Specifically, the network device 501 may send, to the terminal device 502, a PDCCH that carries scheduling information of uplink data or downlink data, and the terminal device 502 may periodically monitor the PDCCH to obtain the scheduling information.

When the terminal device 502 detects that the PDCCH has the scheduling information, based on the scheduling information, the terminal device 502 receives the data through a PDSCH or sends data through a PUSCH. In many cases, the network device 501 does not constantly schedule data to the terminal device 502, but the terminal device 502 constantly periodically monitors the PDCCH to determine whether scheduling is performed. When there is no service transmission between the network device 501 and the terminal device 502, the network device 501 may not send a PDCCH to the terminal device 502. If the terminal device 502 still periodically monitors the PDCCH, power consumption is increased. To reduce power consumption of the terminal device 502, one manner is to reduce unnecessary PDCCH monitoring as much as possible.

Currently, in an active DL BWP, a network device may use the PDCCH monitoring skipping (skip PDCCH monitoring) mechanism or the search space set group (search space set group, SSSG) switching mechanism to reduce PDCCH monitoring, so as to reduce power consumption of a terminal device. For each cell, the network device may configure a plurality of downlink BWPs and/or a plurality of uplink BWPs for the terminal device, and the network device may dynamically switch an active BWP.

However, when both the PDCCH monitoring skipping mechanism and a BWP switching mechanism are configured for the terminal device, how the terminal device stops monitoring the PDCCH is not clearly defined.

For example, the network device indicates, based on DCI, the terminal device to stop monitoring a PDCCH in a period of time, and the terminal device may stop monitoring the PDCCH in the period of time based on the DCI. The network device further configures a timer used for BWP switching for the terminal device, and starts the timer when a condition for starting the timer is met. The terminal device stops monitoring the PDCCH in this period of time. As a result, the condition for starting the timer is not met, and the timer is more likely to expire, resulting in frequent BWP switching.

For example, the network device indicates, based on DCI, the terminal device to stop monitoring a PDCCH in a period of time and perform BWP switching, and the terminal device performs BWP switching based on an indication of the DCI, and stops monitoring the PDCCH in the period of time. However, a start moment for stopping monitoring the PDCCH is not clearly defined currently. In view of this, embodiments of this application provide a method for stopping monitoring a PDCCH and a communication apparatus. When a terminal device supports both a PDCCH monitoring skipping mechanism and a BWP switching mechanism, time for stopping monitoring a PDCCH is specified, to help reduce power consumption of the terminal device.

For ease of understanding of embodiments of this application, the following several descriptions are provided.

1. In embodiments of this application, "used for indication" may include "used for direct indication" and "used for indirect indication", or may include "used for explicit indication" and "used for implicit indication". Information indicated by a piece of information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, it may alternatively be agreed upon in advance (for example, specified in a protocol) that the to-be-indicated information is to be indicated depending on whether an information element exists, thereby reducing indication overheads to some extent.

2. In the following embodiments, "first", "second", "third", and various numbers are merely used for distinguishing for ease of description, and are not intended to limit the scope of embodiments of this application. For example, different downlink control information is distinguished.

3. In the following embodiments, "pre-definition" may be a protocol definition. "Being predefined" may be implemented by prestoring corresponding code or a corresponding table in a device (for example, including a terminal device and a network device) or in another manner that may indicate related information. A specific implementation of "being predefined" is not limited in this application.

4. A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

The following describes in detail embodiments provided in this application.

In embodiments of this application, a terminal device and a network device are used as examples for description. It should be understood that the terminal device may be replaced with an apparatus or a chip that can implement a function similar to that of the terminal device, or the network device may be replaced with an apparatus or a chip that can implement a function similar to that of the network device. A name thereof is not limited in embodiments of this application.

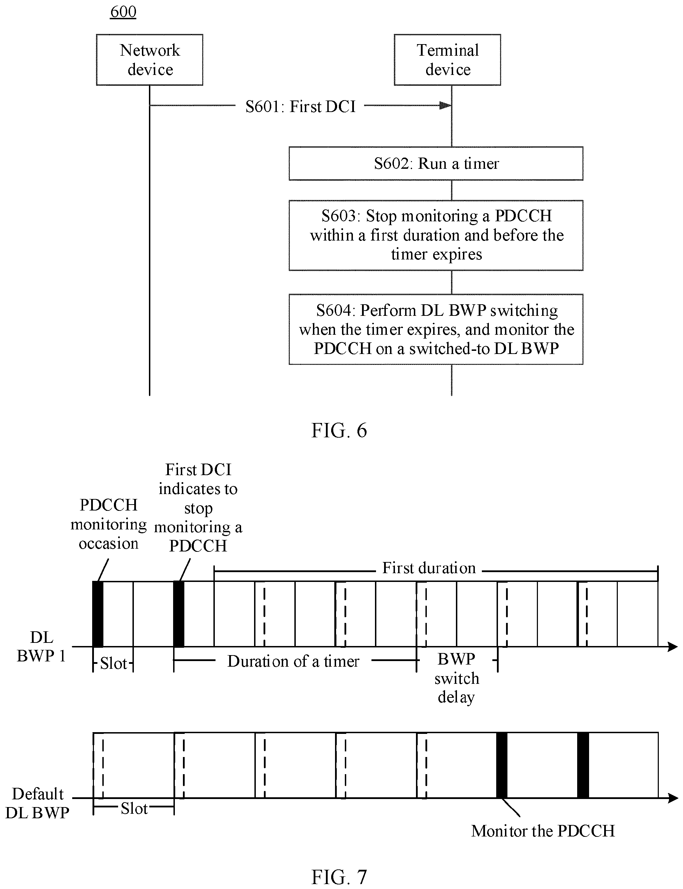

FIG. 6 is a schematic flowchart of a method 600 for stopping monitoring a PDCCH according to an embodiment of this application. The method 600 may be applied to the communication system 500 shown in FIG. 5. However, this embodiment of this application is not limited thereto. As shown in FIG. 6, the method 600 may include the following steps.

S601: A network device sends first DCI to a terminal device on an active DL BWP, where the first DCI indicates the terminal device to stop monitoring a PDCCH within a first duration, and the PDCCH on which monitoring is stopped includes a PDCCH in a type 3 common search space set and a PDCCH in a terminal device-specific search space set. Correspondingly, the terminal device receives the first DCI on the active DL BWP.

The first DCI may be carried on the PDCCH. The terminal device may detect the first DCI on the PDCCH, stop, based on the first DCI, monitoring the PDCCH within the first duration, and continue to monitor the PDCCH after the first duration. The PDCCH on which monitoring is stopped includes the PDCCH in the type 3 common search space set and the PDCCH in the terminal device-specific search space set. For common search space sets of other types, for example, a type 0 common search space set, a type 0A common search space set, a type 1 common search space set, and a type 2 common search space set, the UE may skip or not skip monitoring a PDCCH for DCI scrambled by a C-RNTI, an MCS-C-RNTI, or a CS-RNTI. This is not limited in embodiments of this disclosure. For the type 0 common search space set, the type 0A common search space set, the type 1 common search space set, and the type 2 common search space set, whether the UE monitors an SI-RNTI, an RA-RNTI, a TC-RNTI, or a P-RNTI is not limited in embodiments of this disclosure.

If a C-DRX mechanism is further configured for the terminal device, the first DCI may indicate the terminal device to stop monitoring the PDCCH within the first duration in an active duration for C-DRX. In the active duration for the C-DRX, the terminal device stops monitoring the PDCCH within the first duration, and after the first duration, the terminal device may continue to monitor the PDCCH in the active duration.

A unit of the first duration may be a second, a millisecond, a frame, a subframe, a slot, a PDCCH monitoring periodicity, a quantity of PDCCH monitoring occasions, a slot set including several consecutive slots, or the like. This is not limited in this disclosure. For example, the first duration may be eight slots, and the terminal device may stop monitoring the PDCCH in the eight slots. A start moment of the first duration may be at the beginning of a slot in which the first DCI is located, at the beginning of a next slot for the first DCI, or at the beginning of a next symbol of an end symbol for the first DCI. This is not limited in embodiments of this application.

Optionally, a length of the first duration may be configured by using RRC or indicated by the first DCI. A specific RRC configuration manner or a DCI indication manner is not limited in embodiments of this application.

For example, the network device sends the first DCI to the terminal device on the active DL BWP, where the first DCI indicates the terminal device to stop monitoring the PDCCH within the first duration, and indicates the length of the first duration.

For example, the network device sends the first DCI to the terminal device on the active DL BWP, where the first DCI indicates the terminal device to stop monitoring the PDCCH within the first duration. RRC signaling is sent to the terminal device on the active DL BWP. The RRC signaling indicates the length of the first duration.

Optionally, the length of the first duration may be predefined in a protocol.

S602: The terminal device runs a timer, where the timer is used for BWP switching, and an expiration moment of the timer is earlier than an end moment of the first duration.

It should be understood that, in a BWP switching process, that is, within a BWP switch delay, the terminal device does not need to monitor the PDCCH. Therefore, it may alternatively be described as that the terminal device runs the timer, where the timer is used for BWP switching, and the expiration moment of the timer and the BWP switch delay are earlier than the end moment of the first duration. It may be understood as that an end moment of the BWP switch delay is earlier than the end moment of the first duration.

A duration of the timer may be configured by the network device by using RRC signaling or predefined in a protocol. A unit of the duration of the timer may be a second, a millisecond, a frame, a subframe, a slot, or the like. This is not limited in embodiments of this application. For example, the duration of the timer may be three milliseconds.

The terminal device may start and run the timer before S601.

When a condition for starting or restarting the timer is met (for example, the first DCI includes scheduling information), the terminal device starts or restarts the timer and runs the timer, to be specific, the timer decreases in descending order per subframe or per half subframe. After the timer expires, the terminal device performs DL BWP switching. If the condition for restarting the timer is met before the timer expires, the timer is restarted, that is, the timer is started to run again.

For example, the duration of the timer is three milliseconds. After the timer is started or restarted, when the condition for starting or restarting the timer is not met, the terminal device runs the timer, to be specific, the timer decreases one subframe each time. When the timer shows 0, the terminal device performs DL BWP switching. If the timer shows two milliseconds, and the condition for restarting the timer is met, the timer shows three milliseconds again, and the timer decreases one subframe each time. The foregoing steps are repeated.

The expiration moment of the timer is earlier than the end moment of the first duration. For example, the first duration is greater than a duration within which the timer expires. For example, the first duration is greater than the duration within which the timer expires, the first duration may be eight slots, and the duration of the timer may be three milliseconds, namely, six slots.

A specific time location at which the timer is started or restarted may be at the beginning of the slot in which the first DCI is located, at a start location of the next slot for the first DCI, or at a start location of the next symbol of the end symbol for the first DCI. This is not limited in embodiments of this application.

Correspondingly, the network device starts or restarts a timer and runs the timer.

S603: The terminal device stops monitoring the PDCCH within the first duration and before the timer expires.

It should be understood that the PDCCH on which monitoring is stopped includes the PDCCH in the type 3 common search space set and the PDCCH in the terminal device-specific search space set.

Correspondingly, the network device does not send the PDCCH to the terminal device within the first duration and before the timer expires, where the PDCCH includes the PDCCH in the type 3 common search space set and the PDCCH in the terminal device-specific search space set.

It should be understood that, in the BWP switching process, that is, within the BWP switch delay, the terminal device does not need to monitor the PDCCH. Therefore, S603 may alternatively be described as that, within the first duration, before the timer expires, and before the BWP switch delay, the terminal device stops monitoring the PDCCH. It may be understood as that the terminal device stops monitoring the PDCCH within the first duration and before the BWP switch delay ends.

S604: The terminal device performs DL BWP switching when the timer expires, and monitors the PDCCH on a switched-to DL BWP.

The end moment of the first duration is later than the expiration moment of the timer. When the timer expires, a duration for stopping monitoring the PDCCH does not end, but the terminal device may monitor the PDCCH on the switched-to DL BWP. The switched-to DL BWP is a new active DL BWP. The switched-to DL BWP may also be referred to as a default DL BWP.

For example, FIG. 7 is a schematic diagram of stopping monitoring a PDCCH. As shown in FIG. 7, a block filled with a black pattern indicates a PDCCH monitoring occasion on which a terminal device may perform monitoring. A network device configures a DL BWP 1 and a default DL BWP in a cell. A subcarrier spacing of the DL BWP 1 may be 30 kHz, a duration of a timer may be six slots, a first duration may be 11 slots, the first duration is greater than the duration of the timer, a subcarrier spacing of the default DL BWP may be 15 kHz, and a BWP switch delay may be two slots. It should be understood that different subcarrier spacings correspond to different slot lengths. Slot lengths included in the duration of the timer, the first duration, and the BWP switch delay are all slot lengths corresponding to a subcarrier spacing of 30 kHz. It should be further understood that quantities of slots included in the duration of the timer, the first duration, and the BWP switch delay are merely examples. This is not limited in embodiments of this application.

When the subcarrier spacing of the DL BWP 1 is 30 kHz, one subframe corresponds to two slots. In FIG. 7, the duration of the timer is six slots, that is, the duration of the timer is three subframes. When the timer runs, the timer may decrease in descending order per subframe or per half subframe until the timer expires.

The DL BWP 1 is a currently active BWP, and the terminal device monitors a PDCCH on the active DL BWP 1. The network device indicates, based on a PDCCH carrying the first DCI, the terminal device to stop monitoring the PDCCH within the first duration. The terminal device obtains, through monitoring, the PDCCH carrying the first DCI, and obtains an indication of the first DCI by detecting the PDCCH carrying the first DCI. As shown in FIG. 7, when a condition for starting or restarting the timer is met, the terminal device may start to run the timer from a slot in which the first DCI is located, and start to stop monitoring the PDCCH from a next slot for the first DCI. When the timer expires (after three subframes), the terminal device performs DL BWP switching. After the BWP switch delay (two slots), the terminal device switches to the default DL BWP to monitor the PDCCH.

It should be understood that, in this case, a duration for stopping monitoring the PDCCH does not end. However, the terminal device may monitor the PDCCH on the default DL BWP. It may alternatively be understood as that the duration for stopping monitoring the PDCCH is terminated in advance.

Correspondingly, when the timer expires, the network device performs DL BWP switching, and may send the PDCCH on a switched-to DL BWP. According to the method for stopping monitoring a PDCCH provided in this embodiment of this application, the network device indicates the terminal device to stop monitoring the PDCCH within the first duration, and configures the timer used for BWP switching. The terminal device may run the timer and start to stop monitoring the PDCCH, stop monitoring the PDCCH within the first duration and before the timer expires, and monitor the PDCCH on the switched-to BWP. In the method, the timer can be run and PDCCH monitoring can be started to be stopped, and running of the timer is not changed. Therefore, the impact on the protocol is low, and the implementation is simple. It may be understood that, in the method for stopping monitoring a PDCCH provided in this embodiment of this application, the BWP is switched in a timer manner, and default behavior of the terminal device on the switched-to BWP is PDCCH monitoring. Optionally, an SSSG may or may not be configured on the switched-to DL BWP. A method for configuring the SSSG by the network device is not limited in this embodiment.

When no SSSG is configured on the switched-to BWP, the terminal device monitors the PDCCH on the switched-to BWP based on a configured SS set.

When SSSGs are configured on the switched-to BWP, the terminal device monitors the PDCCH based on an SS set of one of the SSSGs. For example, the network device configures SSSGs on the switched-to BWP. There may be two SSSGs: an SSSG0 (that is, an index of the SSSG is 0) and an SSSG1 (that is, an index of the SSSG is 1). The terminal device may monitor the PDCCH based on an SS set of the SSSG0 or an SS set of the SSSG1.

Optionally, there may be three SSSGs: an SSSG0 (that is, an index of the SSSG is 0), an SSSG1 (that is, an index of the SSSG is 1), and an SSSG2 (that is, an index of the SSSG is 2). The terminal device may monitor the PDCCH based on an SS set of the SSSG0, an SS set of the SSSG1, or an SS set of the SSSG2. In an implementation, the SSSG is configured on the switched-to BWP, and on the switched-to BWP, the terminal device monitors the PDCCH based on an SS set of an SSSG agreed in a protocol, where the SSSG agreed in the protocol may be the SSSG0, the SSSG1, or the SSSG2. For example, the SSSG is configured on the switched-to BWP, and it is agreed in the protocol that the terminal device monitors the PDCCH on the switched-to BWP based on the SS set of the SSSG0. In another implementation, the network device may configure one SSSG as an SSSG used by the terminal device to monitor the PDCCH on the switched-to BWP. For example, the SSSG configured by the network device is the SSSG0. In this case, the terminal device monitors the PDCCH on the switched-to BWP based on the SS set of the SSSG0.

Optionally, the active DL BWP may be configured in a first cell, and the terminal device may monitor the PDCCH on the active DL BWP of the first cell. The network device may configure the duration of the timer in the first cell.

It should be understood that when there are a plurality of cells, the network device may configure the duration of the timer in each of the plurality of cells.

The terminal device may receive the first DCI on the active DL BWP of the first cell. The first DCI indicates the terminal device to stop monitoring the PDCCH within the first duration. In a scenario with the plurality of cells, the terminal device may alternatively receive the first DCI on an active DL BWP of a cell other than the first cell. The first DCI indicates the terminal device to stop monitoring the PDCCH on the active DL BWP of the first cell. In addition, a duration for stopping monitoring the PDCCH is the first duration.

Optionally, the first DCI may be further used to schedule transmission of a PDSCH or a PUSCH. For example, the terminal device may receive the first DCI on the active DL BWP of the first cell. The first DCI indicates the terminal device to stop monitoring the PDCCH within the first duration and is used to schedule the transmission of the PDSCH or the PUSCH. In the scenario with the plurality of cells, the terminal device may alternatively receive the first DCI on the active DL BWP of the cell other than the first cell. The first DCI indicates the terminal device to stop monitoring the PDCCH on the active DL BWP of the first cell. In addition, the duration for stopping monitoring the PDCCH is the first duration. At the same time, the first DCI is used to schedule the transmission of the PDSCH or the PUSCH.

It should be understood that, when the first DCI includes the scheduling information, and the network device configures the timer used for BWP switching, the terminal device starts to run the timer.

Optionally, the terminal device may monitor the PDCCH based on an SS set configured on the active DL BWP. If a plurality of SSSGs are configured on the BWP, the terminal device may monitor the PDCCH based on an SS set of one of the SSSGs. Therefore, if no SSSG is configured on the switched-to DL BWP, the terminal device performs DL BWP switching when the timer expires, and monitors the PDCCH on the switched-to DL BWP based on the configured SS set. In other words, default behavior of the terminal device on the switched-to BWP is PDCCH monitoring based on the configured SS set. If the SSSGs are configured on the switched-to DL BWP, the terminal device performs DL BWP switching when the timer expires, and monitors the PDCCH on the switched-to DL BWP based on the SS set of one of the SSSGs. In other words, default behavior of the terminal device on the switched-to BWP is PDCCH monitoring based on the SS set of one of the SSSGs. The SSSG may be agreed in a protocol, or may be configured by the network device, and the SSSG may be the SSSG0, the SSSG1, or the SSSG2. For example, the terminal device monitors the PDCCH on the switched-to BWP based on the SS set whose SSSG index is 0.

Optionally, when the network device initially configures or reconfigures a parameter for a PDCCH monitoring skipping mechanism and/or a parameter for an SSSG switching mechanism by using the RRC signaling, behavior of the terminal device on the active DL BWP may be the same as that described above. In other words, when no SSSG is configured on the active DL BWP, the terminal device monitors the PDCCH on the active DL BWP based on the configured SS set. In other words, the default behavior of the terminal device on the active DL BWP is PDCCH monitoring based on the configured SS set. When the SSSGs are configured on the active DL BWP, the terminal device monitors the PDCCH on the active DL BWP based on the SS set of one of the SSSGs. In other words, default behavior of the terminal device on the active DL BWP is PDCCH monitoring based on the SS set of one of the SSSGs. The SSSG may be agreed in a protocol, or may be configured by the network device, and the SSSG may be the SSSG0, the SSSG1, or the SSSG2. For example, the terminal device monitors the PDCCH on the active DL BWP based on the SS set whose SSSG index is 0.

In the method 600, the terminal device stops monitoring the PDCCH while running the timer. An embodiment of this application further provides another method 800 for stopping monitoring a PDCCH. The method 800 is a parallel solution with the method 600. A terminal device stops running a timer while stopping monitoring a PDCCH.

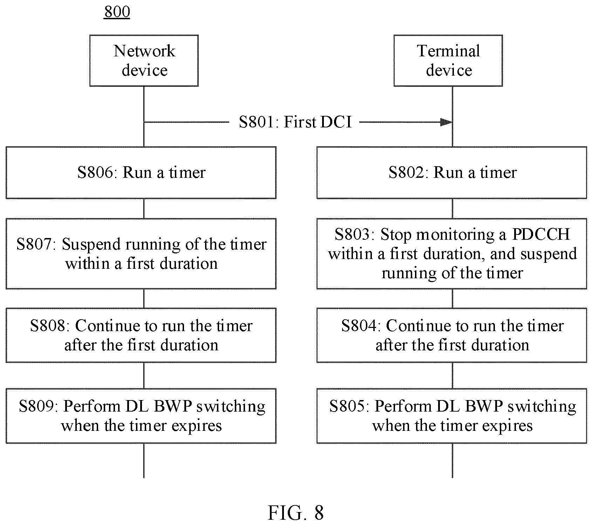

Specifically, FIG. 8 is a schematic flowchart of the another method 800 for stopping monitoring a PDCCH according to this embodiment of this application. The method 800 may be applied to the communication system 500 shown in FIG. 5. However, this embodiment of this application is not limited thereto. As shown in FIG. 8, the method 800 may include the following steps.

S801: A network device sends first DCI to the terminal device on an active DL BWP, where the first DCI indicates the terminal device to stop monitoring the PDCCH within a first duration, and the PDCCH on which monitoring is stopped includes a PDCCH in a type 3 common search space set and a PDCCH in a terminal device-specific search space set. Correspondingly, the terminal device receives the first DCI on the active DL BWP. A start moment of the first duration may be at the beginning of a slot in which the first DCI is located, at the beginning of a next slot for the first DCI, or at the beginning of a next symbol of an end symbol for the first DCI. This is not limited in embodiments of this application.

Optionally, a length of the first duration may be configured by using RRC or indicated by the first DCI. A specific RRC configuration manner or a DCI indication manner is not limited in embodiments of this application.

For example, the network device sends the first DCI to the terminal device on the active DL BWP, where the first DCI indicates the terminal device to stop monitoring the PDCCH within the first duration, and indicates the length of the first duration.

For example, the network device sends the first DCI to the terminal device on the active DL BWP, where the first DCI indicates the terminal device to stop monitoring the PDCCH within the first duration. RRC signaling is sent to the terminal device on the active DL BWP. The RRC signaling indicates the length of the first duration.

Optionally, the length of the first duration may be predefined in a protocol.

For this step, refer to S601 in the method 600. Details are not described herein again.

S802: The terminal device runs a timer, where the timer is used for BWP switching.

A duration of the timer may be configured by the network device by using RRC signaling or predefined in a protocol. A unit of the duration of the timer may be a second, a millisecond, a frame, a subframe, a slot, or the like. This is not limited in embodiments of this application. For example, the duration of the timer may be three milliseconds.

The terminal device may start and run the timer before S801.

When a condition for starting or restarting the timer is met (for example, the first DCI includes scheduling information), the terminal device starts or restarts the timer and runs the timer, to be specific, the timer decreases in descending order per subframe or per half subframe. After the timer expires, the terminal device performs DL BWP switching. If the condition for restarting the timer is met before the timer expires, the timer is restarted, that is, the timer is started to run again.

A specific time location at which the timer is started or restarted may be at the beginning of the slot in which the first DCI is located, at a start location of the next slot for the first DCI, or at a start location of the next symbol of the end symbol for the first DCI. This is not limited in embodiments of this application.

Correspondingly, the network device starts or restarts a timer and runs the timer.

S803: The terminal device stops, based on the first DCI, monitoring the PDCCH within the first duration, and suspends running of the timer.

The terminal device suspends running of the timer within the duration for stopping monitoring the PDCCH, that is, within the duration for stopping monitoring the PDCCH, suspending of the timer decreases in descending order per subframe or per half subframe.

Optionally, the terminal device suspends the running of the timer from a slot or a subframe in which the first DCI is located, or stops the running of the timer from a next slot or a next subframe for the first DCI.

Optionally, the terminal device suspends the running of the timer from a start moment of the first duration.

S804: The terminal device continues to run the timer after the first duration. The terminal device suspends the running of the timer. After the first duration, the terminal device may continue to run the timer, that is, the timer decreases in descending order per subframe or per half subframe. After the first duration, when the condition for restarting the timer is met, the terminal device may restart and run the timer.

For example, the duration of the timer may be three milliseconds. When the timer decreases to two milliseconds, the terminal device receives the PDCCH carrying the first DCI, and stops monitoring the PDCCH based on the first DCI. In addition, the timer keeps a duration of two milliseconds. After the first duration, the terminal device may continue to run the timer, and the timer decreases one subframe each time until the timer expires.

S805: The terminal device performs DL BWP switching when the timer expires.

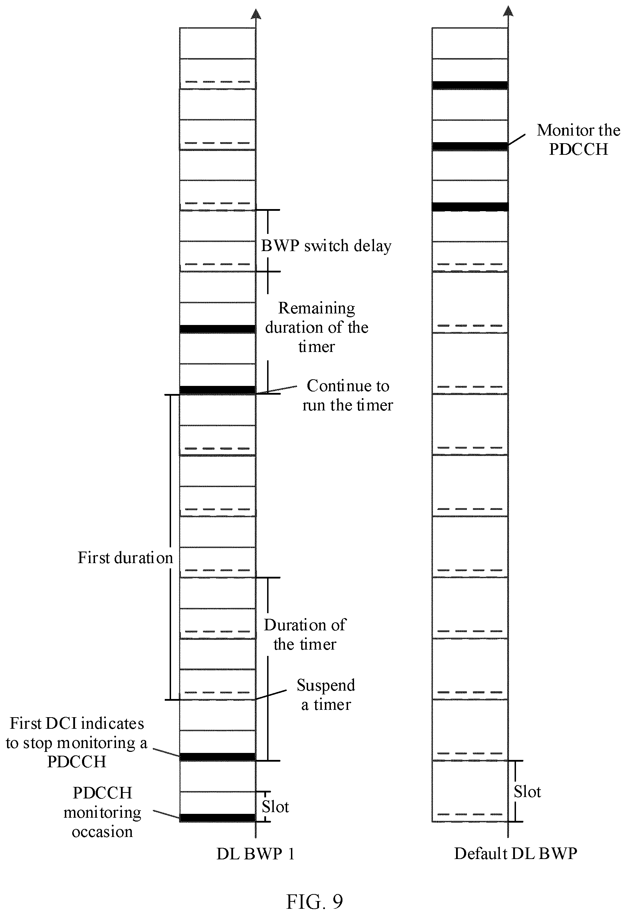

After performing DL BWP switching, the terminal device may monitor the PDCCH on a switched-to DL BWP. The switched-to DL BWP may be referred to as a default BWP. For example, FIG. 9 is a schematic diagram of stopping monitoring a PDCCH. As shown in FIG. 9, a block filled with a black pattern indicates a PDCCH monitoring occasion on which a terminal device may perform monitoring. A network device configures a DL BWP 1 and a default DL BWP in a cell. A subcarrier spacing of the DL BWP 1 may be 30 kHz, a duration of a timer may be six slots, a first duration may be 10 slots, a subcarrier spacing of the default DL BWP may be 15 kHz, and a BWP switch delay may be two slots. It should be understood that different subcarrier spacings correspond to different slot lengths. Slot lengths included in the duration of the timer, the first duration, and the BWP switch delay are all slot lengths corresponding to a subcarrier spacing of 30 kHz. It should be further understood that quantities of slots included in the duration of the timer, the first duration, and the BWP switch delay are merely examples. This is not limited in embodiments of this application.

When the subcarrier spacing of the DL BWP 1 is 30 kHz, one subframe corresponds to two slots. In FIG. 9, the duration of the timer is six slots, that is, the duration of the timer is three subframes. When the timer runs, the timer may decrease in descending order per subframe or per half subframe until the timer expires.

The DL BWP 1 is a currently active BWP, and the terminal device monitors a PDCCH on the active DL BWP 1. The network device indicates, based on a PDCCH carrying the first DCI, the terminal device to stop monitoring the PDCCH within the first duration. The terminal device obtains, through monitoring, the PDCCH carrying the first DCI, and obtains an indication of the first DCI by detecting the PDCCH carrying the first DCI. As shown in FIG. 9, when a condition for starting or restarting the timer is met, the terminal device may start to run the timer from the slot in which the first DCI is located, where the timer decreases in descending order per subframe. At the same time, from a start moment of the first duration, PDCCH monitoring is stopped while running of the timer is suspended. In this case, the duration of the timer is four slots, namely, two subframes.

The terminal device stops monitoring the PDCCH in 10 slots. After the 10 slots, the terminal device continues to monitor the PDCCH and continues to run the timer. In this case, the timer decreases from two subframes in descending order per subframe until the timer expires. When the timer expires, the terminal device performs DL BWP switching. After the BWP switch delay (two slots), the terminal device switches to the default DL BWP to monitor the PDCCH.

S806: The network device runs the timer.

The network device may also correspondingly run the timer while the terminal device runs the timer.

Optionally, it may be agreed in the protocol that the terminal device and the network device run the timer at the same time.

S807: The network device suspends running of the timer within a first duration.

When the terminal device suspends the running of the timer within the first duration, the network device may also suspend the running of the timer within the first duration.

Optionally, it may be agreed in the protocol that the terminal device and the network device suspend the running of the timer within the first duration at the same time.

S808: The network device continues to run the timer after the first duration.

After the first duration, the network device may also continue to run the timer while the terminal device runs the timer.

Optionally, it may be agreed in the protocol that, after the first duration, the terminal device and the network device simultaneously continue to run the timer.

S809: The network device performs DL BWP switching when the timer expires.

When the timer expires, the network device may switch a BWP, and send the PDCCH on a switched-to BWP, and the terminal device may monitor the PDCCH on the switched-to BWP.

In another possible implementation, S803 may be: The terminal device stops, based on the first DCI, monitoring the PDCCH within the first duration, and terminates running of the timer. S804 may be: After the first duration, the terminal device may restart and run the timer. Correspondingly, in S807, the network device may terminate running of the timer within the first duration. S808 may be: After the first duration, the network device restarts and runs the timer.

According to the method for stopping monitoring a PDCCH provided in this embodiment of this application, the network device indicates the terminal device to stop monitoring the PDCCH within the first duration, and configures the timer used for BWP switching. When stopping monitoring the PDCCH, the terminal device suspends running of the timer, and continues to run the timer after the first duration, that is, stopping monitoring the PDCCH and stopping running the timer are run in different time periods. This avoids a problem that the timer may easily expire due to stopping monitoring the PDCCH. In addition, the terminal device may stop monitoring the PDCCH within the first duration, to reduce power consumption of the terminal device.

Optionally, an SSSG may or may not be configured on the switched-to DL BWP.

When no SSSG is configured on the switched-to BWP, the terminal device monitors the PDCCH on the switched-to BWP based on a configured SS set.

When SSSGs are configured on the switched-to BWP, the terminal device monitors the PDCCH based on an SS set of one of the SSSGs. For example, the network device configures SSSGs on the switched-to BWP. There may be two SSSGs: an SSSG0 (that is, an index of the SSSG is 0) and an SSSG1 (that is, an index of the SSSG is 1). The terminal device may monitor the PDCCH based on an SS set of the SSSG0 or an SS set of the SSSG1. Optionally, there may be three SSSGs: an SSSG0 (that is, an index of the SSSG is 0), an SSSG1 (that is, an index of the SSSG is 1), and an SSSG2 (that is, an index of the SSSG is 2). The terminal device may monitor the PDCCH based on an SS set of the SSSG0, an SS set of the SSSG1, or an SS set of the SSSG2. In an implementation, the SSSG is configured on the switched-to BWP, and on the switched-to BWP, the terminal device monitors the PDCCH based on an SS set of an SSSG agreed in a protocol, where the SSSG agreed in the protocol may be the SSSG0, the SSSG1, or the SSSG2. For example, the SSSG is configured on the switched-to BWP, and it is agreed in the protocol that the terminal device monitors the PDCCH on the switched-to BWP based on the SS set of the SSSG0. In another implementation, the network device may configure one SSSG as an SSSG used by the terminal device to monitor the PDCCH on the switched-to BWP. For example, the SSSG configured by the network device is the SSSG0. In this case, the terminal device monitors the PDCCH on the switched-to BWP based on the SS set of the SSSG0.

Optionally, when the network device initially configures or reconfigures a parameter for a PDCCH monitoring skipping mechanism and/or a parameter for an SSSG switching mechanism by using the RRC signaling, behavior of the terminal device on the active DL BWP may be the same as that described above. In other words, when no SSSG is configured on the active DL BWP, the terminal device monitors the PDCCH on the active DL BWP based on the configured SS set. In other words, default behavior of the terminal device on the active DL BWP is PDCCH monitoring based on the configured SS set. When the SSSGs are configured on the active DL BWP, the terminal device monitors the PDCCH on the active DL BWP based on the SS set of one of the SSSGs. In other words, default behavior of the terminal device on the active DL BWP is PDCCH monitoring based on the SS set of one of the SSSGs. The SSSG may be agreed in a protocol, or may be configured by the network device, and the SSSG may be the SSSG0, the SSSG1, or the SSSG2. For example, the terminal device monitors the PDCCH on the active DL BWP based on the SS set whose SSSG index is 0.

In the method 600 and the method 800, the terminal device runs the timer includes: The terminal device starts or restarts the timer when the terminal device receives indication information from the network device on the active DL BWP. The indication information is used to schedule the terminal device to transmit a PDSCH or a PUSCH, or the indication information indicates the terminal device to perform DL BWP switching, and the indication information is carried in the first DCI or DCI other than the first DCI.

The indication information may be carried in the first DCI, or may be carried in the DCI different from the first DCI. This is not limited in embodiments of this application.

In a possible implementation, the indication information is used to schedule the terminal device to transmit the PDSCH or the PUSCH, and is carried in first DCI. The first DCI may be carried on a PDCCH scrambled by a C-RNTI or a CS-RNTI.

The terminal device receives, on an active DL BWP in a first cell, the PDCCH that carries the first DCI and that is scrambled by the C-RNTI, where the first DCI is used to schedule transmission of the PDSCH or the PUSCH, and the terminal device starts or restarts the timer. The terminal device receives, in a cell other than the first cell, a PDCCH that carries DCI other than the first DCI and that is scrambled by the C-RNTI, where the DCI indicates to transmit the PDSCH or the PUSCH on the active DL BWP in the first cell, and the terminal device starts or restarts the timer.

In another possible implementation, the indication information indicates the terminal device to perform DL BWP switching, and the indication information is carried in DCI other than the first DCI.

The terminal device receives the DCI other than the first DCI, where the DCI other than the first DCI indicates the terminal device to perform DL BWP switching, and the terminal device performs BWP switching based on the DCI, and starts the timer on the switched-to BWP.

The start moment of the first duration is not clearly defined in the method 600 and the method 800. An embodiment of this application provides a method 1000 for stopping monitoring a PDCCH, to specify the start moment of the first duration.

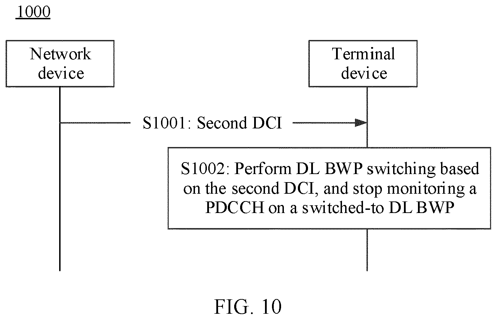

Specifically, FIG. 10 is a schematic flowchart of the still another method 1000 for stopping monitoring a PDCCH according to this embodiment of this application. The method 1000 may be applied to the communication system 500 shown in FIG. 5. However, this embodiment of this application is not limited thereto. As shown in FIG. 10, the method 1000 may include the following steps.

S1001: A network device sends second DCI to a terminal device on an active DL BWP, where the second DCI indicates to perform DL BWP switching and stop monitoring a PDCCH within a first duration, the PDCCH on which monitoring is stopped includes a PDCCH in a type 3 common search space set and a PDCCH in a terminal device-specific search space set, and the second DCI is used to schedule transmission of a PDSCH. Correspondingly, the terminal device receives the second DCI on the active DL bandwidth part BWP.

The second DCI may be carried on the PDCCH. The terminal device may detect the second DCI on the PDCCH on the active DL BWP, stop, based on the second DCI, monitoring the PDCCH within the first duration, and perform DL BWP switching. The PDCCH on which monitoring is stopped includes the PDCCH in the type 3 common search space set and the PDCCH in the terminal device-specific search space set. For common search space sets of other types, for example, a type 0 common search space set, a type 0A common search space set, a type 1 common search space set, and a type 2 common search space set, the UE may skip or not skip monitoring a PDCCH for DCI scrambled by a C-RNTI, an MCS-C-RNTI, or a CS-RNTI. This is not limited in embodiments of this disclosure. For the type 0 common search space set, the type 0A common search space set, the type 1 common search space set, and the type 2 common search space set, whether the UE monitors an SI-RNTI, an RA-RNTI, a TC-RNTI, or a P-RNTI is not limited in embodiments of this disclosure.

A BWP indicator field in the second DCI indicates DL BWP switching, and indicates to stop monitoring the PDCCH within the first duration and schedule the transmission of the PDSCH. Specifically, the second DCI may carry scheduling information of the PDSCH, and the BWP indicator field in the second DCI indicates an ID of a DL BWP. The ID is different from an ID of the currently active DL BWP. The terminal device switches to the DL BWP in the indicator field in the second DCI based on the second DCI.

A start moment of the first duration may be at the beginning of a slot in which first DCI is located, at a start location of a next slot for the first DCI, or at a start location of a next symbol of an end symbol for the first DCI. This is not limited in embodiments of this application.

Optionally, a length of the first duration may be configured by using RRC or indicated by the first DCI. A specific RRC configuration manner or a DCI indication manner is not limited in embodiments of this application.

For example, the network device sends the second DCI to the terminal device on the active DL BWP, where the second DCI indicates the terminal device to stop monitoring the PDCCH within the first duration, and indicates the length of the first duration.

For example, the network device sends the second DCI to the terminal device on the active DL BWP, where the second DCI indicates the terminal device to stop monitoring the PDCCH within the first duration. RRC signaling is sent to the terminal device on the active DL BWP. The RRC signaling indicates the length of the first duration.

Optionally, the length of the first duration may be predefined in a protocol.

S1002: The terminal device performs DL BWP switching based on the second DCI, and stops monitoring the PDCCH on a switched-to DL BWP. The start moment of the first duration is determined based on at least one of the following information: a next slot after a BWP switch delay; a slot in which the PDSCH is transmitted on the switched-to DL BWP; a slot next to a slot in which the PDSCH is transmitted on the switched-to DL BWP; a time offset between the start moment of the first duration and the second DCI; a maximum value between a minimum slot offset and a duration for parsing the second DCI, where the minimum slot offset is a minimum slot offset between a PDCCH carrying the second DCI and a PDSCH that is allowed to be scheduled by using the second DCI; or a moment after a HARQ corresponding to a PDSCH is fed back when the PDSCH is scheduled by using the second DCI.

The start moment of the first duration may be in the next slot after the BWP switch delay, in the slot in which the PDSCH is transmitted on the switched-to DL BWP, or in the slot next to the slot in which the PDSCH is transmitted on the switched-to DL BWP. Being in the slot next to the slot in which the PDSCH is transmitted on the switched-to DL BWP may alternatively be understood as being the slot next to the slot in which the PDSCH is transmitted on the switched-to DL BWP. The start moment of the first duration may be determined based on at least one of the time offset between the start moment of the first duration and the second DCI, the maximum value between the minimum slot offset and the duration for parsing the second DCI, or the moment after the HARQ corresponding to the PDSCH is fed back when the PDSCH is scheduled by using the second DCI. For ease of description, the start moment of the first duration that is determined in one of these manners is denoted as a start moment 2 of the first duration.

According to the method for stopping monitoring a PDCCH provided in this embodiment of this application, when the start moment of the first duration is in the next slot after the BWP switch delay, in the slot in which the PDSCH is transmitted on the switched-to DL BWP, or in the slot next to the slot in which the PDSCH is transmitted on the switched-to DL BWP, it can be ensured that there is no overlap between the first duration and the BWP switch delay. This helps the terminal device stop monitoring the PDCCH for a long time, and helps reduce power consumption of the terminal device. In addition, the start moment of the first duration is determined based on at least one of the time offset between the start moment of the first duration and the second DCI, the maximum value between the minimum slot offset and the duration for parsing the second DCI, or the moment after the hybrid automatic repeat request (hybrid automatic repeat request, HARQ) corresponding to the PDSCH is fed back when the PDSCH is scheduled by using the second DCI, and whether the first duration and the BWP switch delay overlap does not need to be considered. The start moment of the first duration in a BWP switching scenario may be determined in a manner the same as a manner of determining the start moment of the first duration in a BWP scenario. This can reduce complexity of processing by the terminal device.

The following separately describes in detail a plurality of possible implementations for the start moment of the first duration.

In a first possible implementation, the start moment of the first duration is in the next slot after the BWP switch delay.

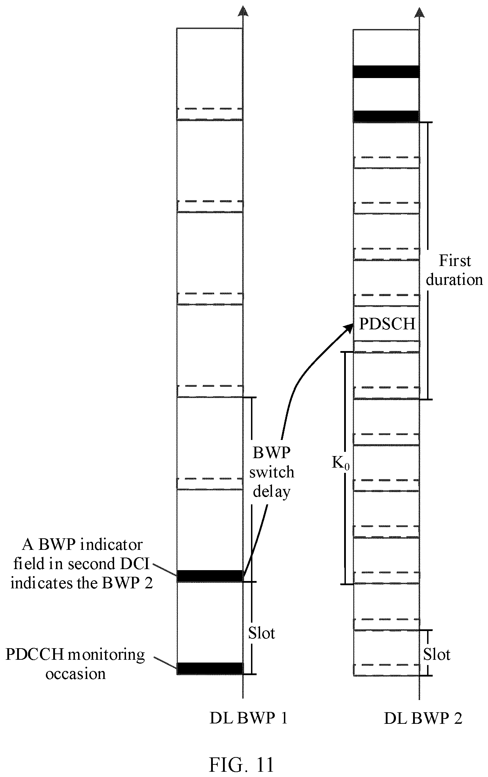

For example, FIG. 11 is a schematic diagram of stopping monitoring a PDCCH. As shown in FIG. 11, a block filled with a black pattern indicates a PDCCH monitoring occasion on which a terminal device may perform monitoring. A network device configures a DL BWP 1 and a DL BWP 2 in a cell. A subcarrier spacing of the DL BWP 1 may be 30 kHz, a BWP switch delay may be two slots, a subcarrier spacing of the DL BWP 2 may be 60 kHz, a first duration may be six slots, and a slot offset $K_0$ between a PDCCH carrying the second DCI and a PDSCH scheduled by using the second DCI may be five slots. It should be understood that $K_0$ is greater than or equal to the BWP switch delay. It should be further understood that different subcarrier spacings correspond to different slot lengths. Lengths of slots included in the first duration and $K_0$ are a slot length corresponding to a subcarrier spacing of the switched-to BWP, that is, a slot length corresponding to a subcarrier spacing of 60 kHz. A length of a slot included in the BWP switch delay is a slot length corresponding to a subcarrier spacing of 30 kHz. It should be further understood that quantities of slots included in the first duration, $K_0$, and the BWP switch delay are merely examples. This is not limited in embodiments of this application.

The DL BWP 1 is a currently active BWP, and the terminal device monitors a PDCCH on the active DL BWP 1. The terminal device detects that a BWP indicator field in the second DCI indicates the DL BWP 2, the second DCI indicates the terminal device to stop monitoring the PDCCH within the first duration, and the second DCI is used to schedule transmission of the PDSCH. As shown in FIG. 11, the terminal device transmits, based on the second DCI, the PDSCH on the DL BWP 2 after the slot offset $K_0$ (five slots), starts to stop monitoring the PDCCH from a next slot of the BWP switch delay, and starts to monitor the PDCCH after the first duration (six slots). After the slot offset $K_0$ (five slots) may be replaced with during the slot offset $K_0$ (five slots). The terminal device transmits, based on the second DCI, the PDSCH on the DL BWP 2 during the slot offset $K_0$ (five slots) in a slot corresponding to the slot offset $K_0$.

In a second possible implementation, the start moment of the first duration is in the slot in which the PDSCH is transmitted on the switched-to DL BWP.

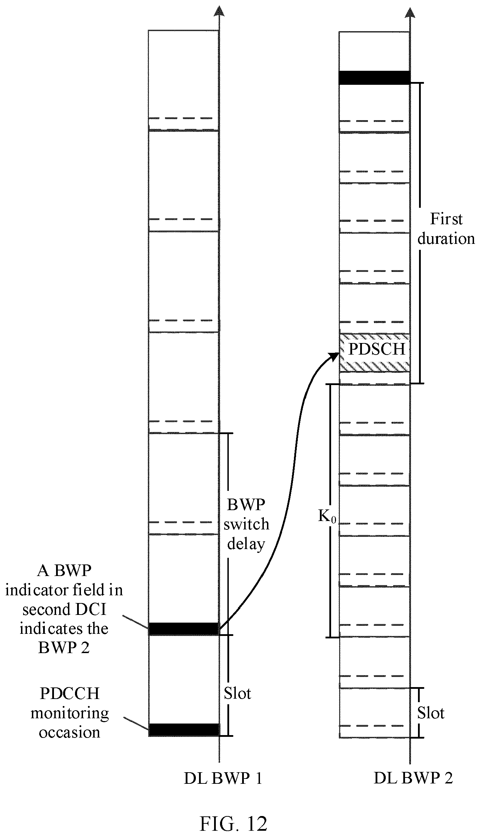

For example, FIG. 12 is another schematic diagram of stopping monitoring a PDCCH. As shown in FIG. 12, a block filled with a black pattern indicates a PDCCH monitoring occasion on which a terminal device may perform monitoring. A network device configures a DL BWP 1 and a DL BWP 2 in a cell. A subcarrier spacing of the DL BWP 1 may be 30 kHz, a BWP switch delay may be two slots, a subcarrier spacing of the DL BWP 2 may be 60 kHz, a first duration may be six slots, and a slot offset $K_0$ between a PDCCH carrying the second DCI and a PDSCH scheduled by using the second DCI may be five slots. It should be understood that $K_0$ is greater than the BWP switch delay. It should be further understood that different subcarrier spacings correspond to different slot lengths. Lengths of slots included in the first duration and $K_0$ are a slot length corresponding to a subcarrier spacing of 60 kHz. A length of a slot included in the BWP switch delay is a slot length corresponding to a subcarrier spacing of 30 kHz. It should be further understood that quantities of slots included in the first duration, $K_0$, and the BWP switch delay are merely examples. This is not limited in embodiments of this application.

The DL BWP 1 is a currently active BWP, and the terminal device monitors a PDCCH on the active DL BWP 1. The terminal device detects that a BWP indicator field in the second DCI indicates the DL BWP 2, the second DCI indicates the terminal device to stop monitoring the PDCCH within the first duration, and the second DCI is used to schedule transmission of the PDSCH. As shown in FIG. 12, the terminal device transmits, based on the second DCI, the PDSCH on the DL BWP 2 after the slot offset $K_0$ (five slots), starts to stop monitoring the PDCCH from a slot in which the PDSCH is transmitted on the DL BWP 2, and starts to monitor the PDCCH after the first duration (six slots). After the slot offset $K_0$ (five slots) may be replaced with during the slot offset $K_0$ (five slots). The terminal device transmits, based on the second DCI, the PDSCH on the DL BWP 2 during the slot offset $K_0$ (five slots) in a slot corresponding to the slot offset $K_0$, and starts to stop monitoring the PDCCH from the slot in which the PDSCH is transmitted on the DL BWP 2.

If the PDSCH scheduled by using the second DCI occupies a plurality of slots, the start moment of the first duration is at the beginning of a first slot of the plurality of slots occupied by the PDSCH. Data transmitted on the PDSCH that occupies the plurality of slots may be repeatedly sent on a same transport block or sent on different transport blocks.

In a third possible implementation, the start moment of the first duration is in the slot next to the slot in which the PDSCH is transmitted on the switched-to DL BWP.

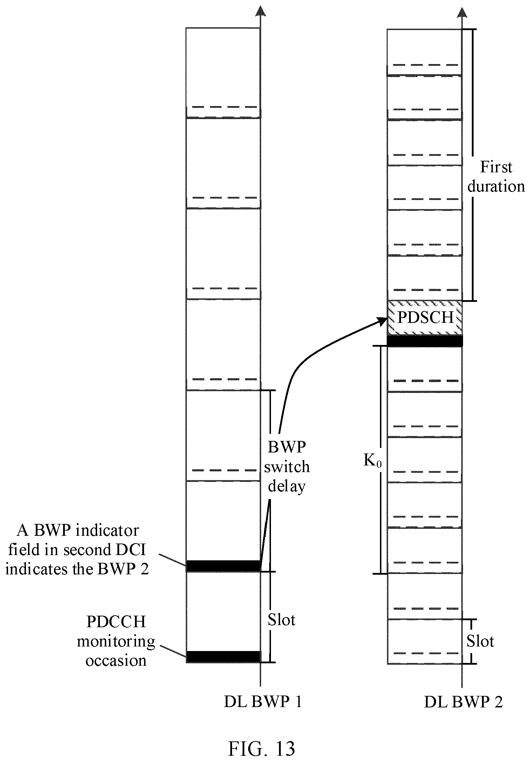

For example, FIG. 13 is still another schematic diagram of stopping monitoring a PDCCH. As shown in FIG. 13, a block filled with a black pattern indicates a PDCCH monitoring occasion on which a terminal device may perform monitoring. A network device configures a DL BWP 1 and a DL BWP 2 in a cell. A subcarrier spacing of the DL BWP 1 may be 30 kHz. In this case, a BWP switch delay may be two slots 1. A subcarrier spacing of the DL BWP 2 may be 60 kHz. In this case, a first duration may be six slots 2. A slot offset $K_0$ between a PDCCH carrying the second DCI and a PDSCH scheduled by using the second DCI may be five slots 2. It should be understood that $K_0$ is greater than the BWP switch delay. Different subcarrier spacings correspond to different slot lengths. Lengths of slots included in the first duration and $K_0$ are a slot length corresponding to a subcarrier spacing of 60 kHz. A length of a slot included in the BWP switch delay is a slot length corresponding to a subcarrier spacing of 30 kHz. It should be further understood that quantities of slots included in the first duration, $K_0$, and the BWP switch delay are merely examples. This is not limited in embodiments of this application.

The DL BWP 1 is a currently active BWP, and the terminal device monitors a PDCCH on the active DL BWP 1. The terminal device detects that a BWP indicator field in the second DCI indicates the DL BWP 2, the second DCI indicates the terminal device to stop monitoring the PDCCH within the first duration, and the second DCI is used to schedule transmission of the PDSCH. As shown in FIG. 13, the terminal device transmits, based on the second DCI, the PDSCH on the DL BWP 2 after the slot offset $K_0$ (five slots), starts to stop monitoring the PDCCH from a slot next to a slot in which the PDSCH is transmitted on the DL BWP 2, and starts to monitor the PDCCH after the first duration (six slots). After the slot offset $K_0$ (five slots) may be replaced with during the slot offset $K_0$ (five slots). The terminal device transmits, based on the second DCI, the PDSCH on the DL BWP 2 during the slot offset $K_0$ (five slots) in a slot corresponding to the slot offset $K_0$, and starts to stop monitoring the PDCCH from the slot next to the slot in which the PDSCH is transmitted on the DL BWP 2.

If the PDSCH scheduled by using the second DCI occupies a plurality of slots, the start moment of the first duration is a slot next to a first slot of the plurality of slots occupied by the PDSCH, or a slot next to the end of the plurality of slots occupied by the PDSCH. Data transmitted on the PDSCH that occupies the plurality of slots may be repeatedly sent on a same transport block or sent on different transport blocks.

In a fourth possible implementation, the start moment of the first duration is the time offset between the start moment of the first duration and the second DCI.

The time offset between the start moment of the first duration and the second DCI may be predefined, or may be configured by the network device by using RRC signaling.

The time offset between the start moment of the first duration and the second DCI may be predefined. A unit of the time offset between the start moment of the first duration and the second DCI may be a symbol or a slot.

Different BWPs may have different subcarrier spacings. The protocol may predefine that different subcarrier spacings correspond to different time offsets, or the protocol may predefine that different subcarrier spacings correspond to a same time offset. The time offset between the start moment of the first duration and the second DCI may be based on a slot offset corresponding to a subcarrier spacing corresponding to the currently active DL BWP, or based on a slot offset corresponding to a subcarrier spacing corresponding to the switched-to DL BWP.

For example, the time offset between the start moment of the first duration and the second DCI may be greater than or equal to 0.

For example, the protocol may predefine that different subcarrier spacings correspond to a same time offset. Table 1 shows a correspondence between a subcarrier spacing and a time offset.

**Table 1**

| Subcarrier spacing $\mu$ (kHz) | Time offset (symbol) |
|---|---|
| 15 | 25 |
| 30 | 25 |
| 60 | 25 |
| 120 | 25 |

As shown in Table 1, the subcarrier spacing may be 15 kHz, 30 kHz, 60 kHz, or 120 kHz, and different subcarrier spacings may correspond to a same time offset, namely, 25 symbols.

For example, the protocol may predefine that different subcarrier spacings correspond to different time offsets. Table 2 shows the correspondence between the subcarrier spacing and the time offset. Table 2 shows another correspondence between a subcarrier spacing and a time offset.

**Table 2**

| Subcarrier spacing $\mu$ (kHz) | Time offset (symbol) |
|---|---|
| 15 | 10 |
| 30 | 12 |
| 60 | 22 |
| 120 | 25 |

As shown in Table 2, the subcarrier spacing may be 15 kHz, 30 kHz, 60 kHz, or 120 kHz. Different subcarrier spacings may correspond to different time offsets. When the subcarrier spacing is 15 kHz, the time offset may be 10 symbols. When the subcarrier spacing is 30 kHz, the time offset may be 12 symbols. When the subcarrier spacing is 60 kHz, the time offset may be 22 symbols. When the subcarrier spacing is 120 kHz, the time offset may be 25 symbols.

The time offset shown in Table 1 and Table 2 is in a unit of a symbol, and the time offset may also be in a unit of a slot.

For example, Table 3 shows another correspondence between a subcarrier spacing and a time offset.

**Table 3**

| Subcarrier spacing $\mu$ (kHz) | Time offset (slot) |
| --- | --- |
| 15 | 1 |
| 30 | 1 |
| 60 | 2 |
| 120 | 2 |

As shown in Table 2, the subcarrier spacing may be 15 kHz, 30 kHz, 60 kHz, or 120 kHz. When the subcarrier spacing is 15 kHz or 30 kHz, the time offset may be one slot. When the subcarrier spacing is 60 kHz or 120 kHz, the time offset may be two slots.

It should be understood that the correspondences between the subcarrier spacings and the time offsets shown in Table 1, Table 2, and Table 3 are merely examples. This is not limited in embodiments of this application.

The start moment of the first duration may be determined based on a time offset between the start moment of the first duration and the beginning of a symbol in which the second DCI is located, or the start moment of the first duration may be determined based on a time offset between the start moment of the first duration and the end of the symbol occupied by the second DCI. If the moment determined based on the time offset is not the beginning of a slot, the start moment of the first duration may be the beginning of a next slot of the time offset.

For example, the second DCI occupies three symbols, the time offset between the start moment of the first duration and the second DCI is 25 symbols, and a first symbol occupied by the second DCI may be a first symbol of the 25 symbols, or a fourth symbol after a third symbol occupied by the second DCI is a first symbol of the 25 symbols.

The start moment of the first duration may be determined based on a time offset between the start moment of the first duration and the beginning of a slot in which the second DCI is located, or the start moment of the first duration may be determined based on a time offset between the start moment of the first duration and the end of a slot in which the second DCI is located.

For example, a slot occupied by the second DCI is one slot, the time offset between the start moment of the first duration and the second DCI is one slot, and the slot occupied by the second DCI may be the slot of the time offset, or a slot next to the slot in which the second DCI is located is the slot of the time offset.

In a fifth possible implementation, the terminal device may determine the start moment of the first duration based on the maximum value between the minimum slot offset and the duration for parsing the second DCI. The minimum slot offset is a minimum slot offset between a PDCCH carrying the second DCI and a PDSCH that is allowed to be scheduled by using the second DCI. The minimum slot offset may be represented by $K_{0min}$, and a value range of $K_{0min}$ may be a value greater than or equal to 0. The maximum value between the minimum slot offset and the duration for parsing the second DCI may be represented as $\max(K_{0min,} Z)$, and the duration for parsing the second DCI is Z. For a specific subcarrier spacing, Z is a constant. For a value of Z, refer to Table 3.

Optionally, in a cross-carrier scheduling scenario, the terminal device may determine the time offset between

$$\max\left(\left[K_{0\min} * \frac{2^{\mu PDCCH}}{2^{\mu PDSCH}}\right],\ Z_{\mu}\right)$$

the start moment of the first duration and the second DCI according to a formula .

$K_{0min}$ is valid $K_{0min}$ on an active DL BWP of a scheduled cell, $Z_{\mu}$ is a value corresponding to $Z_{\mu}$ of an active DL BWP of a scheduling cell (for a value of $Z_{\mu}$, refer to Table 3), $\mu PDCCH$ is a subcarrier spacing parameter of the active DL BWP of the scheduling cell, and $\mu PDSCH$ is a subcarrier spacing parameter of the active DL BWP of the scheduled cell.

The foregoing implementation can ensure that the terminal device can stop monitoring the PDCCH after obtaining information about the second DCI through parsing, which helps improve communication efficiency between the terminal device and the network device.

In a sixth possible implementation, the start moment of the first duration is a moment after a HARQ corresponding to a PDSCH is fed back when the PDSCH is scheduled by using the second DCI. HARQ feedbacks may include an acknowledgement (acknowledgement, ACK) feedback or a negative acknowledgement (non acknowledgement, NACK) feedback.

After receiving the PDSCH, the terminal device further performs ACK feedback or NACK feedback. The start moment of the first duration may be after the terminal device feeds back an ACK or a NACK. The second DCI may indicate a slot in which the HARQ feedback is located.

Optionally, the start moment of the first duration may be the beginning of a slot in which the terminal device transmits the ACK or the NACK or the beginning of a slot next to a slot in which the terminal device transmits the ACK or the NACK. The start moment of the first duration may be the beginning or end of a symbol on which the terminal device transmits the ACK or the NACK. Optionally, the terminal device stops monitoring the PDCCH within the first duration only when the terminal device feeds back the ACK. The start moment of the first duration may be after the terminal device feeds back the ACK. Optionally, the start moment of the first duration may be the beginning of a slot in which the terminal device transmits the ACK or the beginning of a slot next to a slot in which the terminal device transmits the ACK. The start moment of the first duration may be the beginning or end of a symbol on which the terminal device transmits the ACK.

In the foregoing implementation, the terminal device starts to stop monitoring the PDCCH after performing PDSCH transmission, which helps implement communication between the terminal device and the network device.

Optionally, the start moment of the first duration may alternatively be a moment later than that determined in at least two of the first possible implementation to the sixth possible implementation. For example, the start moment of the first duration is a moment later than that determined in at least one of the first possible implementation to the third possible implementation and that determined in at least one of the fourth possible implementation to the sixth possible implementation.

For example, the BWP switch delay in the first possible implementation is compared with the time offset in the fourth possible implementation, and the start moment of the first duration is determined based on a larger one of the two. For another example, the BWP switch delay in the first possible implementation is compared with the maximum value between and the minimum slot offset and the duration for parsing the second DCI in the fifth possible implementation, and the start moment of the first duration is determined based on a larger one of the two. For another example, the BWP switch delay in the first possible implementation is compared with an ACK or NACK feedback moment in the sixth possible implementation, and the start moment of the first duration is determined based on a larger one of the two. For another example, the slot offset $K_0$ (used to indicate the slot in which the PDSCH is transmitted on the switched-to DL BWP) of the PDSCH indicated by the second DCI in the second possible implementation is compared with the time offset in the fourth possible implementation, and the start moment of the first duration is determined based on a larger one of the two. For another example, the slot offset $K_0$ (used to indicate the slot in which the PDSCH is transmitted on the switched-to DL BWP) of the PDSCH indicated by the second DCI in the second possible implementation is compared with the maximum value between the minimum slot offset and the duration for parsing the second DCI in the fifth possible implementation, and the start moment of the first duration is determined based on a larger one of the two. For another example, the slot offset $K_0$ of the PDSCH indicated by the second DCI in the second possible implementation is compared with an ACK or NACK feedback moment in the sixth possible implementation, and the start moment of the first duration is determined based on a larger one of the two. Generally, a symbol location for transmitting the ACK or the NACK is after the symbol location for transmitting the PDSCH, and the slot for transmitting the ACK or the NACK and the slot for transmitting the PDSCH may be a same slot, or may be different slots.

When the start moment of the first duration is later than an end moment of the BWP switch delay, or the start moment of the first duration is after the slot in which the PDSCH scheduled by using the second DCI is transmitted on the switched-to DL BWP, behavior of monitoring the PDCCH by the terminal device after the BWP switch delay and before the start moment of the first duration may include:

When no SSSG is configured on the switched-to BWP, the terminal device monitors the PDCCH on the switched-to BWP based on a configured SS set; or

when SSSGs are configured on the switched-to BWP, the terminal device monitors the PDCCH based on an SS set of one of the SSSGs. For example, the network device configures SSSGs on the switched-to BWP. There may be two SSSGs: an SSSG0 (that is, an index of the SSSG is 0) and an SSSG1 (that is, an index of the SSSG is 1). The terminal device may monitor the PDCCH based on an SS set of the SSSG0 or an SS set of the SSSG1.

Optionally, there may be three SSSGs: an SSSG0 (that is, an index of the SSSG is 0), an SSSG1 (that is, an index of the SSSG is 1), and an SSSG2 (that is, an index of the SSSG is 2). The terminal device may monitor the PDCCH based on an SS set of the SSSGO, an SS set of the SSSG1, or an SS set of the SSSG2.

In an implementation, the SSSG is configured on the switched-to BWP, and on the switched-to BWP, the terminal device monitors the PDCCH based on an SS set of an SSSG agreed in a protocol, where the SSSG agreed in the protocol may be the SSSGO, the SSSG1, or the SSSG2. For example, the SSSG is configured on the switched-to BWP, and it is agreed in the protocol that the terminal device monitors the PDCCH on the switched-to BWP based on the SS set of the SSSG0. In another implementation, the network device may configure one SSSG as an SSSG used by the terminal device to monitor the PDCCH on the switched-to BWP. For example, the SSSG configured by the network device is the SSSG0. In this case, the terminal device monitors the PDCCH on the switched-to BWP based on the SS set of the SSSG0. On the switched-to BWP, the terminal device starts to monitor the PDCCH from the slot in which the PDSCH scheduled by using the second DCI is located. Therefore, the behavior of monitoring the PDCCH by the terminal device after the BWP switch delay and before the start moment of the first duration may include the foregoing method. It may alternatively be understood as that the behavior of monitoring the PDCCH by the terminal device before the start moment of the first duration and from the slot in which the PDSCH scheduled by using the second DCI is located may include the foregoing method.

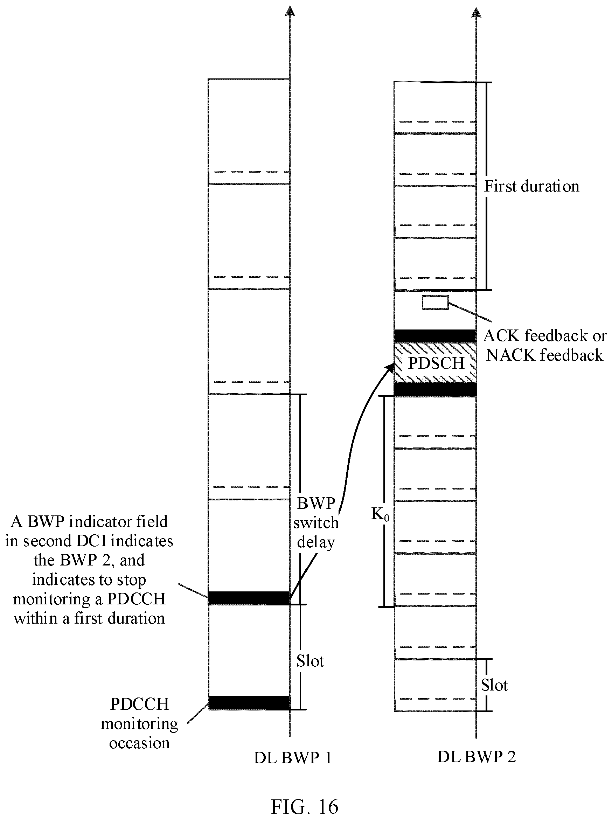

For example, FIG. 16 is a schematic diagram of stopping monitoring a PDCCH. As shown in FIG. 16, a block filled with a black pattern indicates a PDCCH monitoring occasion on which a terminal device needs to perform monitoring. A network device configures a DL BWP 1 and a DL BWP 2 in a cell. A subcarrier spacing of the DL BWP 1 may be 30 kHz, a BWP switch delay may be two slots, a subcarrier spacing of the DL BWP 2 may be 60 kHz, and a slot offset $K_0$ between a PDCCH carrying the second DCI and a PDSCH scheduled by using the second DCI may be four slots. It should be understood that $K_0$ may be greater than or equal to the BWP switch delay. It should be further understood that different subcarrier spacings correspond to different slot lengths. Lengths of slots included in the first duration and $K_0$ are a slot length corresponding to a subcarrier spacing of the switched-to BWP, that is, a slot length corresponding to a subcarrier spacing of 60 kHz. A length of a slot included in the BWP switch delay is a slot length corresponding to a subcarrier spacing of 30 kHz. It should be further understood that quantities of slots included in the first duration, $K_0$, and the BWP switch delay are merely examples. This is not limited in embodiments of this application.

The DL BWP 1 is a currently active BWP, and the terminal device monitors a PDCCH on the active DL BWP 1. The terminal device detects that a BWP indicator field in the second DCI indicates the DL BWP 2 and indicates to stop monitoring the PDCCH within the first duration. In addition, the second DCI is used to schedule transmission of the PDSCH. In addition, the terminal device needs to perform ACK or NCK feedback to the network device. A start moment of the first duration is after an ACK or NACK feedback duration. It should be understood that the ACK or the ACK in the figure only indicates that a time sequence is after the PDSCH, and does not indicate that the ACK or the NACK and the PDSCH are on a same BWP.

As shown in FIG. 16, the terminal device transmits, based on the second DCI, the PDSCH on the DL BWP 2 after the BWP switch delay (two slots), and performs ACK or NCK feedback.

If no SSSG is configured on the DL BWP 2, after the BWP switch delay and before the start moment of the first duration, the terminal device may monitor the PDCCH based on a configured SS set.

For the method 1000, when a parameter for an SSSG switching mechanism and/or a parameter for a PDCCH monitoring skipping mechanism are/is not configured on the active DL BWP, if no bit field in the second DCI indicates to perform SSSG switching and/or skip PDCCH monitoring within the first duration, the second DCI may indicate to perform DL BWP switching, but does not indicate to perform SSSG switching and/or skip PDCCH monitoring within the first duration. The terminal device receives the second DCI on the active DL BWP, performs DL BWP switching, and monitors the PDCCH on the switched-to DL BWP.

That the terminal device monitors the PDCCH on the switched-to DL BWP includes:
When no SSSG is configured on the switched-to BWP, the terminal device monitors the PDCCH on the switched-to BWP based on a configured SS set; or
when SSSGs are configured on the switched-to BWP, the terminal device monitors the PDCCH based on an SS set of one of the SSSGs. For example, the network device configures SSSGs on the switched-to BWP. There may be two SSSGs: an SSSG0 and an SSSG1. The terminal device may monitor the PDCCH based on an SS set of the SSSG0 or an SS set of the SSSG1.

Optionally, there may be three SSSGs: an SSSG0, an SSSG1, and an SSSG2. The terminal device may monitor the PDCCH based on an SS set of the SSSG0, an SS set of the SSSG1, or an SS set of the SSSG2.

In an implementation, the SSSG is configured on the switched-to BWP, and on the switched-to BWP, the terminal device monitors the PDCCH based on an SS set of an SSSG agreed in a protocol, where the SSSG agreed in the protocol may be the SSSG0, the SSSG1, or the SSSG2. For example, the SSSG is configured on the switched-to BWP, and it is agreed in the protocol that the terminal device monitors the PDCCH on the switched-to BWP based on the SS set of the SSSG0. In another implementation, the network device may configure one SSSG as an SSSG used by the terminal device to monitor the PDCCH on the switched-to BWP. For example, the SSSG configured by the network device is the SSSG0. In this case, the terminal device monitors the PDCCH on the switched-to BWP based on the SS set of the SSSG0.

Optionally, the network device may send third DCI to the terminal device on the currently active DL BWP, and the third DCI may further carry scheduling information of a PUSCH. In a TDD scenario, the terminal device switches to a UL BWP in an indicator field in the third DCI based on the third DCI, and switches the DL BWP at the same time. In other words, the terminal device switches a UL BWP and the DL BWP at the same time. The terminal device stops, based on that monitoring of the PDCCH is stopped within the first duration that is indicated by the third DCI, monitoring the PDCCH in the switched-to DL BWP, and determines the start moment of the first duration in at least one of the following manners: a next slot after a UL BWP switch delay; a slot in which the PUSCH is transmitted on a switched-to UL BWP; a slot next to a slot in which the PUSCH is transmitted on a switched-to UL BWP; a time offset between the start moment of the first duration and the third DCI; a maximum value between a minimum slot offset and a duration for parsing the third DCI, where for description of the duration for parsing the third DCI, refer to the duration for parsing the second DCI; a moment after the PUSCH is transmitted when the PUSCH is scheduled by using the third DCI; or a moment after an uplink retransmission timer (UL retransmission timer) in C-DRX ends. Optionally, at least two of the manners may be further compared to determine a later moment as the start moment of the first duration. For details, refer to the description in the foregoing paragraph. Details are not described herein again.

The BWP indicator field in the third DCI indicates an identifier of a UL BWP (UL BWP 2), and the identifier is different from an identifier of the currently active UL BWP (UL BWP 1). Based on the third DCI, the network device and the terminal device may switch from the currently active UL BWP 1 to the UL BWP 2, and use the UL BWP 2 as a newly active UL BWP. The terminal device receives, on the UL BWP 2, the PUSCH scheduled by using the third DCI.

In the TDD scenario, the UL BWP and the DL BWP are associated, and a DL BWP and a UL BWP with a same identifier have a same center frequency. Therefore, in the TDD scenario, when the UL BWP is switched, the DL BWP is also correspondingly switched. To be specific, if the terminal device switches from the UL BWP 1 to the UL BWP 2, the terminal device may also switch from the DL BWP 1 to the DL BWP 2.

In the TDD scenario, the terminal device may determine the start moment of the first duration based on at least one of the next slot after the UL BWP switch delay, the slot in which the PUSCH is transmitted on the switched-to UL BWP, the slot next to the slot in which the PUSCH is transmitted on the switched-to UL BWP, the time offset between the start moment of the first duration and the third DCI, the maximum value between the minimum slot offset and the duration for parsing the third DCI, or the moment after the PUSCH is transmitted when the PUSCH is scheduled by using the third DCI.

Optionally, if the search space set group (SSSG) switching mechanism is configured for the terminal device, when the second DCI or the third DCI indicates to perform SSSG switching, that is, the second DCI or the third DCI indicates the terminal device to monitor the PDCCH based on one of search space set groups, and indicates to perform BWP switching. The method in the method 1000 is also applicable. The start moment of the first duration is a moment at which an SSSG indicated by the second DCI or the third DCI starts to take effect on the switched-to DL BWP. This may be understood as follows: A start moment of the SSSG (or referred to as an effect taking moment of the SSSG), namely, a start moment at which the terminal device monitors the PDCCH on the switched-to DL BWP based on the SSSG indicated by the second DCI or the third DCI, may be determined according to the method in the method 1000. A difference lies in that the start moment of the first duration is replaced with the effect taking moment of the SSSG. Details are not described again. Optionally, an implementation for the start moment at which the terminal device monitors the PDCCH on the switched-to DL BWP based on the SSSG indicated by the second DCI or the third DCI (which may be referred to as the start moment of the SSSG for short) may be different from the implementation of determining the start moment of the first duration.

The second DCI or the third DCI may indicate to perform SSSG switching and indicate to perform BWP switching. When the start moment of the SSSG is later than the end moment of the BWP switch delay, or the start moment of the SSSG is after the slot in which the PDSCH scheduled by using the second DCI is located, behavior of monitoring the PDCCH by the terminal device after the BWP switch delay and before the start moment of the SSSG may be: The terminal device monitors the PDCCH based on an SS set of one of the SSSGs.

For example, the network device configures SSSGs on the switched-to BWP. There may be two SSSGs: an SSSG0 (that is, an index of the SSSG is 0) and an SSSG1 (that is, an index of the SSSG is 1). The terminal device may monitor the PDCCH based on an SS set of the SSSG0 or an SS set of the SSSG1.

Optionally, there may be three SSSGs: an SSSG0 (that is, an index of the SSSG is 0), an SSSG1 (that is, an index of the SSSG is 1), and an SSSG2 (that is, an index of the SSSG is 2). The terminal device may monitor the PDCCH based on an SS set of the SSSG0, an SS set of the SSSG1, or an SS set of the SSSG2.

In an implementation, the SSSG is configured on the switched-to BWP, and on the switched-to BWP, the terminal device monitors the PDCCH based on an SS set of an SSSG agreed in a protocol, where the SSSG agreed in the protocol may be the SSSG0, the SSSG1, or the SSSG2. For example, the SSSG is configured on the switched-to BWP, and it is agreed in the protocol that the terminal device monitors the PDCCH on the switched-to BWP based on the SS set of the SSSG0. In another implementation, the network device may configure one SSSG as an SSSG used by the terminal device to monitor the PDCCH on the switched-to BWP. For example, the SSSG configured by the network device is the SSSG0. In this case, the terminal device monitors the PDCCH on the switched-to BWP based on the SS set of the SSSG0.

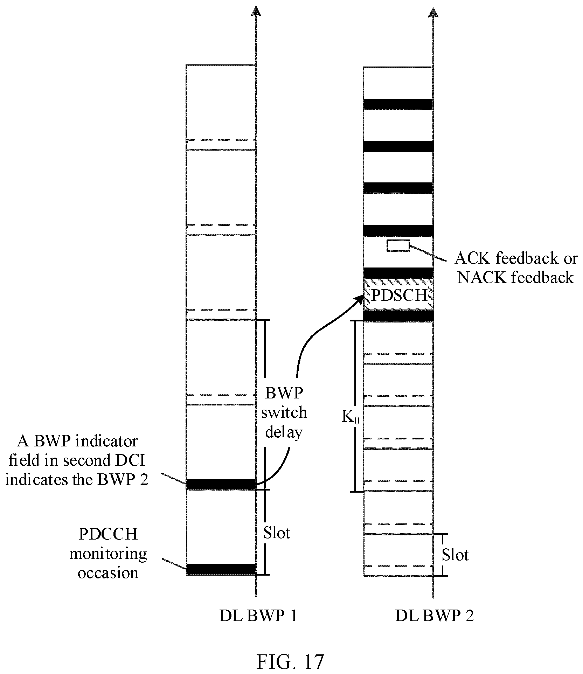

On the switched-to BWP, the terminal device starts to monitor the PDCCH from the slot in which the PDSCH scheduled by using the second DCI is located. Therefore, the behavior of monitoring the PDCCH by the terminal device after the BWP switch delay and before the effect taking moment of the SSSG may include the foregoing method. It may alternatively be understood as that the behavior of monitoring the PDCCH by the terminal device before the effect taking moment of the SSSG and from the slot in which the PDSCH scheduled by using the second DCI is located may include the foregoing method. For example, FIG. 17 is a schematic diagram of stopping monitoring a PDCCH. As shown in FIG. 17, a block filled with a black pattern indicates a PDCCH monitoring occasion on which a terminal device needs to perform monitoring. A network device configures a DL BWP 1 and a DL BWP 2 in a cell. A subcarrier spacing of the DL BWP 1 may be 30 kHz, a BWP switch delay may be two slots, a subcarrier spacing of the DL BWP 2 may be 60 kHz, and a slot offset $K_0$ between a PDCCH carrying the second DCI and a PDSCH scheduled by using the second DCI may be four slots. It should be understood that $K_0$ is equal to the BWP switch delay. It should be further understood that different subcarrier spacings correspond to different slot lengths. A length of a slot included in $K_0$ is a slot length corresponding to a subcarrier spacing of the switched-to BWP, that is, a slot length corresponding to a subcarrier spacing of 60 kHz. A length of a slot included in the BWP switch delay is a slot length corresponding to a subcarrier spacing of 30 kHz. It should be further understood that quantities of slots included in $K_0$ and the BWP switch delay are merely examples. This is not limited in embodiments of this application.

The DL BWP 1 is a currently active BWP, and the terminal device monitors a PDCCH on the active DL BWP 1. The terminal device detects that a BWP indicator field in the second DCI indicates the DL BWP 2, the second DCI indicates the terminal device to perform SSSG switching, and the second DCI is used to schedule transmission of the PDSCH. In addition, the terminal device needs to perform ACK or NCK feedback to the network device. A start moment of an SSSG is after an ACK or NACK feedback duration.

As shown in FIG. 17, the terminal device transmits, based on the second DCI, the PDSCH on the DL BWP 2 after the BWP switch delay (two slots), and performs SSSG switching while performing ACK or NCK feedback. An SSSG mechanism is configured on the DL BWP 2. It should be understood that the ACK or the ACK in the figure only indicates that a time sequence is after the PDSCH, and does not indicate that the ACK or the NACK and the PDSCH are on a same BWP.

After the BWP switch delay and before the start moment of the SSSGs, the terminal device may monitor the PDCCH based on an SS set of one of SSSGs.

Optionally, the method in the method 1000 that the terminal device can determine the start moment of the first duration based on at least one of the time offset between the start moment of the first duration and the first DCI, the maximum value between the minimum slot offset and the duration for parsing the first DCI, the moment after the hybrid automatic repeat request HARQ corresponding to the PDSCH is fed back when the PDSCH is scheduled by using the first DCI, or the moment after the PUSCH is transmitted when the PUSCH is scheduled by using the first DCI is also applicable to the method 600 and the method 800. Details are not described herein again.

The terminal device may support a PDCCH monitoring skipping mechanism but does not support the SSSG switching mechanism, or the terminal device may support the SSSG switching mechanism but does not support a PDCCH monitoring skipping mechanism. In addition, the terminal device may further support both the PDCCH monitoring skipping mechanism and the SSSG switching mechanism.

When there are a plurality of DL BWPs, the network device may configure a same mechanism or different mechanisms for the terminal device on different DL BWPs.

For example, when there are three DL BWPs, the three DL BWPs are a DL BWP 1, a DL BWP 2, and a DL BWP 3. The DL BWP 1, the DL BWP 2, and the DL BWP 3 all may support the PDCCH monitoring skipping mechanism, but do not support the SSSG switching mechanism. Alternatively, the DL BWP 1 supports the PDCCH monitoring skipping mechanism but does not support the SSSG switching mechanism, the DL BWP 2 supports the SSSG switching mechanism but does not support the PDCCH monitoring skipping mechanism, and the DL BWP 3 supports the PDCCH monitoring skipping mechanism and supports the SSSG switching mechanism.

Optionally, the DL BWP may not support the PDCCH monitoring skipping mechanism, and may not support the SSSG mechanism.

The terminal device may report, to the network device in an explicit or implicit manner, the mechanism supported by the terminal device (the PDCCH monitoring skipping mechanism and/or the SSSG switching mechanism), the network device may perform configuration for the terminal device based on the mechanism reported by the terminal device. For example, the network device configures, by using RRC signaling, the PDCCH monitoring skipping mechanism and/or the SSSG switching mechanism for the terminal device. In embodiments of this application, a specific reporting manner of the terminal device is not limited, and a specific configuration manner of the network device is not limited.

For example, a supported mechanism reported by the terminal device to the network device is the PDCCH monitoring skipping mechanism, and the network device may configure the PDCCH monitoring skipping mechanism for the terminal device.

When the network device and the terminal device determine the supported mechanism, the network device may further indicate behavior of the terminal device by using the DCI.

In a possible implementation, a mechanism determined by the network device and the terminal device on the active DL BWP is the PDCCH monitoring skipping mechanism, and the network device may indicate the behavior of the terminal device by using a bit value in the DCI. It may be understood as that the network device configures the PDCCH monitoring skipping mechanism for the terminal device on the active DL BWP.

For example, when a quantity of first durations T in the PDCCH monitoring skipping mechanism is one, the network device may indicate the behavior of the terminal device based on a mapping relationship shown in Table 4. When a quantity of first durations T in the PDCCH monitoring skipping mechanism is greater than one (for example, three), the network device may indicate the behavior of the terminal device based on a mapping relationship shown in Table 5. Different first durations T may be represented by subscript numbers, for example, $T_1$, $T_2$, and $T_3$. The network device may configure one or more first durations for the terminal device by using RRC signaling. The table is merely an example. Alternatively, a mapping relationship between a bit in the DCI and behavior of the terminal device may be in another form. This is not limited in the present invention.

**Table 4**

| One bit in the DCI | Behavior of the terminal device |
| --- | --- |
| 0 | Monitor a PDCCH, that is, monitor a PDCCH based on a configured SS set |
| 1 | Stop monitoring a PDCCH within the first duration |

**Table 5**

| Two bits in the DCI | Behavior of the terminal device |
| --- | --- |
| 00 | Monitor a PDCCH, that is, monitor a PDCCH based on a configured SS set |
| 01 | Stop monitoring a PDCCH within a first duration $T_1$ |
| 10 | Stop monitoring a PDCCH within a first duration $T_2$ |
| 11 | Stop monitoring a PDCCH within a first duration $T_3$, or if the first duration $T_3$ is not configured, reservation is made |

As shown in Table 4, the quantity of first durations T in the PDCCH monitoring skipping mechanism is 1, and the network device may indicate the behavior of the terminal device by using the bit in the DCI. When a value of the bit is 0, the DCI indicates the terminal device to monitor the PDCCH (that is, monitor the PDCCH based on the configured SS set). It may alternatively be understood as that the terminal device does not skip PDCCH monitoring. When a value of the bit is 1, the DCI indicates the terminal device to stop monitoring the PDCCH within the first duration. As shown in Table 5, the quantity of first durations T in the PDCCH monitoring skipping mechanism is equal to 3, and the three first durations are $T_1$, $T_2$, and $T_3$. The network device may indicate the behavior of the terminal device by using the two bits in the DCI. When a value of the two bits is 00, the DCI indicates the terminal device to monitor the PDCCH (that is, monitor the PDCCH based on the configured SS set). When a value of the two bits is 01, the DCI indicates the terminal device to stop monitoring the PDCCH within the first duration $T_1$. When a value of the two bits is 10, the DCI indicates the terminal device to stop monitoring the PDCCH within the first duration $T_2$. When a value of the two bits is 11, the DCI indicates the terminal device to stop monitoring the PDCCH within the first duration $T_3$. Optionally, when the network device does not configure the first duration $T_3$, that a value of the two bits is 11 is reserved, that is, meaningless.

In another possible implementation, a mechanism determined by the network device and the terminal device on the active DL BWP is the SSSG switching mechanism, and the network device may indicate the behavior of the terminal device by using a bit value in the DCI. It may be understood as that the network device configures the SSSG switching mechanism for the terminal device on the active DL BWP.

For example, when the network device configures two SSSGs, the network device may indicate the behavior of the terminal device based on a mapping relationship shown in Table 6. When the network device configures three SSSGs, the network device may indicate the behavior of the terminal device based on a mapping relationship shown in Table 7.

**Table 6**

| One bit in the DCI | Behavior of the terminal device |
| --- | --- |
| 0 | Monitor a PDCCH based on an SS set of an SSSG0, and do not monitor the PDCCH based on an SS set of an SSSG1 |
| 1 | Monitor a PDCCH based on an SS set of an SSSG1, and do not monitor the PDCCH based on an SS set of an SSSG0 |

**Table 7**

| Two bits in the DCI | Behavior of the terminal device |
|---|---|
| 00 | Monitor a PDCCH based on an SS set of an SSSG0, and do not monitor the PDCCH based on an SS set of an SSSG1 and an SS set of an SSSG2 |
| 01 | Monitor a PDCCH based on an SS set of an SSSG1, and do not monitor the PDCCH based on an SS set of an SSSG0 and an SS set of an SSSG2 |
| 10 | Monitor a PDCCH based on an SS set of an SSSG2, and do not monitor the PDCCH based on an SS set of an SSSG0 and an SS set of an SSSG1 |
| 11 | Reserved |

As shown in Table 6, when the network device configures two SSSGs: the SSSG0 and the SSSG1, the network device may indicate the behavior of the terminal device by using the bit in the DCI. When a value of the bit is 0, the DCI indicates the terminal device to monitor the PDCCH based on the SS set of the SSSG0, and not to monitor the PDCCH based on the SS set of the SSSG1. When a value of the bit is 1, the DCI indicates the terminal device to monitor the PDCCH based on the SS set of the SSSG1, and not to monitor the PDCCH based on the SS set of the SSSG0.

As shown in Table 7, when the network device configures three SSSGs: the SSG0, the SSSG1, and the SSSG2, the network device may indicate the behavior of the terminal device by using the two bits in the DCI. When a value of the two bits is 00, the DCI indicates the terminal device to monitor the PDCCH based on the SS set of the SSSG0, and not to monitor the PDCCH based on the SS sets of the SSSG1 and the SSSG2. When a value of the two bits is 01, the DCI indicates the terminal device to monitor the PDCCH based on the SS set of the SSSG1, and not to monitor the PDCCH based on the SS sets of the SSSG0 and the SSSG2. When a value of the two bits is 10, the DCI indicates the terminal device to monitor the PDCCH based on the SS set of the SSSG2, and not to monitor the PDCCH based on the SS sets of the SSSG0 and the SSSG1. That a value of the two bits is 11 is reserved.

In still another possible implementation, mechanisms determined by the network device and the terminal device on the active DL BWP are the PDCCH monitoring skipping mechanism and the SSSG switching mechanism, and the network device may indicate the behavior of the terminal device by using a bit value in the DCI. It may be understood as that the network device configures the PDCCH monitoring skipping mechanism and the SSSG switching mechanism for the terminal device on the active DL BWP.

For example, the mechanisms determined by the network device and the terminal device are the PDCCH monitoring skipping mechanism and the SSSG switching mechanism. When the network device configures two SSSGs: an SSSG0 and an SSSG1, and a quantity of first durations T is one, the network device may indicate the behavior of the terminal device based on a mapping relationship shown in Table 8 or Table 9. When the network device configures two SSSGs: an SSSG0 and an SSSG1, and a quantity of first durations T is two, the network device may indicate the behavior of the terminal device based on a mapping relationship shown in Table 10 or Table 11.

**Table 8**

| Two bits in the DCI | Behavior of the terminal device |
|---|---|
| 00 | Monitor a PDCCH based on an SS set of an SSSG0, and do not monitor the PDCCH based on an SS set of an SSSG1 |
| 01 | Monitor a PDCCH based on an SS set of an SSSG1, and do not monitor the PDCCH based on an SS set of an SSSG0 |
| 10 | Stop monitoring a PDCCH within a first duration T |
| 11 | Reserved |

**Table 9**

| Two bits in the DCI | Behavior of the terminal device |
|---|---|
| 00 | Monitor a PDCCH based on an SS set of an SSSG0, and do not monitor the PDCCH based on an SS set of an SSSG1 |

(continued)

| Two bits in the DCI | Behavior of the terminal device |
| --- | --- |
| 01 | Monitor a PDCCH based on an SS set of an SSSG1, and do not monitor the PDCCH based on an SS set of an SSSG0 |
| 10 | Switch to or remain in an SSSG0, and stop monitoring a PDCCH within a first duration T |
| 11 | Switch to or remain in an SSSG1, and stop monitoring a PDCCH within a first duration T |

**Table 10**

| Two bits in the DCI | Behavior of the terminal device |
| --- | --- |
| 00 | Monitor a PDCCH based on an SS set of an SSSG0, and do not monitor the PDCCH based on an SS set of an SSSG1 |
| 01 | Monitor a PDCCH based on an SS set of an SSSG1, and do not monitor the PDCCH based on an SS set of an SSSG0 |
| 10 | Switch to or remain in an SSSG0, and stop monitoring a PDCCH within a first duration $T_1$ |
| 11 | Switch to or remain in an SSSG0, and stop monitoring a PDCCH within a first duration $T_2$ |

**Table 11**

| Two bits in the DCI | Behavior of the terminal device |
| --- | --- |
| 00 | Monitor a PDCCH based on an SS set of an SSSG0, and do not monitor the PDCCH based on an SS set of an SSSG1 |
| 01 | Monitor a PDCCH based on an SS set of an SSSG1, and do not monitor the PDCCH based on an SS set of an SSSG0 |
| 10 | Stop monitoring a PDCCH within a first duration $T_1$ |
| 11 | Stop monitoring a PDCCH within a first duration $T_2$ |

As shown in Table 8, the network device may indicate the behavior of the terminal device by using the two bits in the DCI. When a value of the two bits is 00, the DCI indicates the terminal device to monitor the PDCCH based on the SS set of the SSSG0, and not to monitor the PDCCH based on the SS set of the SSSG1. When a value of the two bits is 01, the DCI indicates the terminal device to monitor the PDCCH based on the SS set of the SSSG1, and not to monitor the PDCCH based on the SS set of the SSSG0. When a value of the two bits is 10, the DCI indicates the terminal device to stop monitoring the PDCCH within the first duration T, and the terminal device may remain in a current SSSG without switching the SSSG. That a value of the two bits is 11 is reserved. As shown in Table 9, the network device may indicate the behavior of the terminal device by using the two bits in the DCI. When a value of the two bits is 00, the DCI indicates the terminal device to monitor the PDCCH based on the SS set of the SSSG0, and to monitor the PDCCH based on the SS set of the SSSG1. When a value of the two bits is 01, the DCI indicates the terminal device to monitor the PDCCH based on the SS set of the SSSG1, and not to monitor the PDCCH based on the SS set of the SSSG0. When a value of the two bits is 10, the DCI indicates the terminal device to switch to or remain in the SSSG0 and stop monitoring the PDCCH within the first duration T. When a value of the two bits is 11, the DCI indicates the terminal device to switch to or remain in the SSSG1 and stop monitoring the PDCCH within the first duration T.

As shown in Table 10, the network device may indicate the behavior of the terminal device by using the two bits in the DCI. When a value of the two bits is 00, the DCI indicates the terminal device to monitor the PDCCH based on the SS set of the SSSG0, and not to monitor the PDCCH based on the SS set of the SSSG1. When a value of the two bits is 01, the DCI indicates the terminal device to monitor the PDCCH based on the SS set of the SSSG1, and not to monitor the PDCCH based on the SS set of the SSSG0. When a value of the two bits is 10, the DCI indicates the terminal device to switch to or remain in the SSSG0 and stop monitoring the PDCCH within the first duration $T_1$. When a value of the two bits is 11, the DCI indicates the terminal device to switch to or remain in the SSSG0 and stop monitoring the PDCCH within the first duration $T_2$.

As shown in Table 11, the network device may indicate the behavior of the terminal device by using the two bits in the DCI. When a value of the two bits is 00, the DCI indicates the terminal device to monitor the PDCCH based on the SS set of the SSSG0, and not to monitor the PDCCH based on the SS set of the SSSG1. When a value of the two bits is 01, the DCI indicates the terminal device to monitor the PDCCH based on the SS set of the SSSG1, and not to monitor the PDCCH based on the SS set of the SSSG0. When a value of the two bits is 10, the DCI indicates the terminal device to stop monitoring the PDCCH within the first duration $T_1$, and the terminal device may remain in a current SSSG without switching the SSSG. When a value of the two bits is 11, the DCI indicates the terminal device to stop monitoring the PDCCH within the first duration $T_2$, and the terminal device may remain in a current SSSG without switching the SSSG.

For example, the mechanisms determined by the network device and the terminal device are the PDCCH monitoring skipping mechanism and the SSSG switching mechanism. When the network device configures three SSSGs: an SSSG0, an SSSG1, and an SSSG2, and a first duration is T, the network device may indicate the behavior of the terminal device based on any one of the mapping relationships shown in Table 12.

**Table 12**

| Two bits in the DCI | Behavior of the terminal device |
|---|---|
| 00 | Monitor a PDCCH based on an SS set of an SSSG0, and do not monitor the PDCCH based on an SS set of an SSSG1 and an SS set of an SSSG2 |
| 01 | Monitor a PDCCH based on an SS set of an SSSG1, and do not monitor the PDCCH based on an SS set of an SSSG0 and an SS set of an SSSG2 |
| 10 | Monitor a PDCCH based on an SS set of an SSSG2, and do not monitor the PDCCH based on an SS set of an SSSG0 and an SS set of an SSSG1 |
| 11 | Stop monitoring a PDCCH within a first duration T |

As shown in Table 12, the network device may indicate the behavior of the terminal device by using the two bits in the DCI. When a value of the two bits is 00, the DCI indicates the terminal device to monitor the PDCCH based on the SS set of the SSSG0, and not to monitor the PDCCH based on the SS sets of the SSSG1 and the SSSG2. When a value of the two bits is 01, the DCI indicates the terminal device to monitor the PDCCH based on the SS set of the SSSG1, and not to monitor the PDCCH based on the SS sets of the SSSG0 and the SSSG2. When a value of the two bits is 10, the DCI indicates the terminal device to monitor the PDCCH based on the SS set of the SSSG2, and not to monitor the PDCCH based on the SS sets of the SSSG0 and the SSSG1. When a value of the two bits is 11, the DCI indicates the terminal device to stop monitoring the PDCCH within the first duration T, and the terminal device may remain in a current SSSG without switching the SSSG.

In this embodiment of this application, one bit or two bits in the mapping relationships shown in Table 4 to Table 12 are referred to as a "first field". A name is not limited in embodiments of this application.

In the method 600, the method 800, and the method 1000, behavior of the terminal device on the switched-to BWP may be determined based on a value of the first field in the DCI and a mapping relationship for the first field in the switched-to BWP.

For example, in the method 600, the method 800, and the method 1000, the terminal device supports the PDCCH monitoring skipping mechanism, and the terminal device may perform the following operations based on a value of a first field in the second DCI or the third DCI: the behavior of the terminal device corresponding to the value of the first field separately determined in Table 4 to Table 12, so as to determine the behavior on the switched-to BWP. In other words, monitoring of the PDCCH is stopped at the start moment of the first duration, or the PDCCH is monitored at the start moment of the SSSG based on the SSSG indicated by the second DCI or the third DCI.

Optionally, when the terminal device monitors the PDCCH on the switched-to BWP, the network device may send DCI on the switched-to BWP to indicate the behavior of the terminal device, that is, indicate the terminal device to switch the SSSG and/or skip PDCCH monitoring. The terminal device may perform corresponding behavior based on the received DCI.

Optionally, based on the first field, the behavior of monitoring the PDCCH by the terminal device after the BWP switch delay and before the start moment of the first duration or the start moment of the SSSG may be by default the behavior of the terminal device corresponding to "0" or "00" in the mapping relationship for the first field in the DCI. The mapping relationship for the first field may be understood as being agreed in the foregoing protocol.

Optionally, the network device configures the timer for the terminal device, and the timer is used for BWP switching. When the timer expires, the terminal device performs DL BWP switching. Correspondingly, the network device may also perform DL BWP switching. On a switched-to DL BWP, the default behavior of monitoring the PDCCH by the terminal device may be the behavior of the terminal device corresponding to "0" or "00" in the mapping relationship for the first field in the DCI.

Optionally, in the method 1000, if the second DCI or the third DCI does not have the first field, but may indicate to perform BWP switching, the terminal device performs DL BWP switching based on the second DCI or the third DCI. On a switched-to DL BWP, the default behavior of monitoring the PDCCH by the terminal device may be the behavior of the terminal device corresponding to "0" or "00" in the mapping relationship for the first field in the DCI.

The terminal device may support both the PDCCH monitoring skipping mechanism and the SSSG switching mechanism. The network device may indicate, by using one piece of DCI, the terminal device to stop monitoring the PDCCH within the first duration and indicate the terminal device to perform SSSG switching.

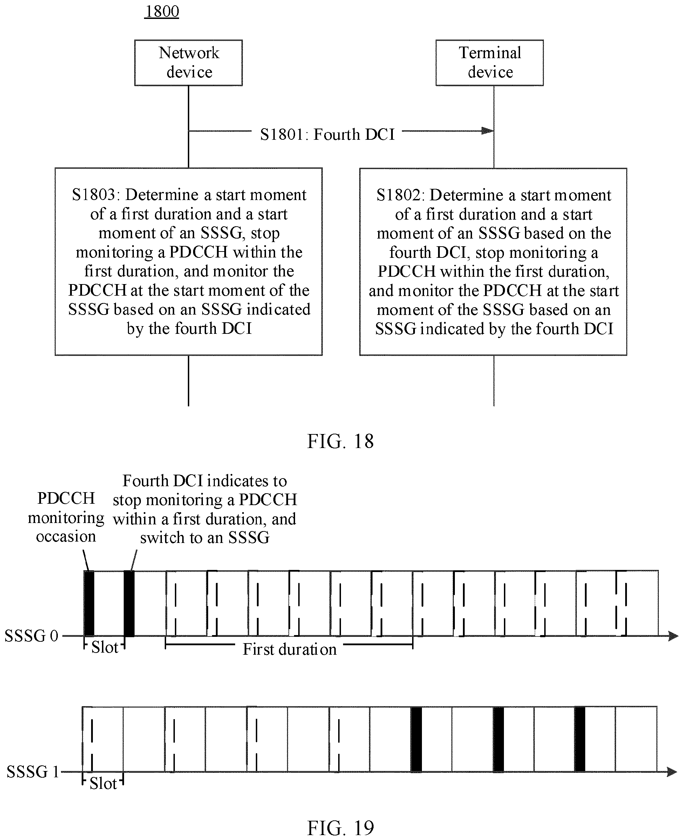

For example, FIG. 18 is a schematic flowchart of another method 1800 for stopping monitoring a PDCCH according to an embodiment of this application. The method 1800 may be applied to the communication system 500 shown in FIG. 5. However, this embodiment of this application is not limited thereto. As shown in FIG. 18, the method 1800 may include the following steps.

S1801: A network device sends fourth DCI to a terminal device on an active DL BWP, where the fourth DCI indicates the terminal device to stop monitoring a PDCCH within a first duration, and indicates to perform SSSG switching, and the PDCCH on which monitoring is stopped includes a PDCCH in a type 3 common search space set and a PDCCH in a terminal device-specific search space set. Correspondingly, the terminal device receives the fourth DCI on the active DL BWP. The fourth DCI may indicate to perform SSSG switching, to be specific, the fourth DCI may indicate the terminal device to switch to a first search space set group. For example, the fourth DCI may indicate the terminal device to switch to an SSSG0, an SSSG1, or an SSSG2.

The terminal device may currently monitor the PDCCH based on an SS set of the SSSG0, the terminal device may currently monitor the PDCCH based on an SS set of the SSSG1, or the terminal device may currently monitor the PDCCH based on an SS set of the SSSG2. This is not limited in embodiments of this application. When an SSSG currently used by the terminal device is the same as an SSSG indicated by the fourth DCI, it indicates that the SSSG used by the terminal device is not switched.

S 1802: The terminal device determines a start moment of the first duration and a start moment of the SSSG based on the fourth DCI, stops monitoring the PDCCH within the first duration, and monitors the PDCCH at the start moment of the SSSG based on the SSSG indicated by the fourth DCI.

S1803: The network device determines a start moment of the first duration and a start moment of the SSSG.

A sequence of S1802 and S1803 is not distinguished.

The network device does not send the PDCCH within the first duration, and may send the PDCCH in the SSSG indicated by the fourth DCI after the start moment of the SSSG.

A method for determining the start moment of the first duration and the start moment of the SSSG by the network device may be the same as the method for determining the start moment of the first duration and the start moment of the SSSG by the terminal device.

Optionally, in a scenario with a plurality of DL BWPs, the fourth DCI may simultaneously indicate to stop monitoring the PDCCH within the first duration, perform SSSG switching, and perform BWP switching.

If a function of indicating SSSG switching is added to the second DCI in the method 1000, it may be understood as that the second DCI is the same as the four DCI.

There are a plurality of possible implementations for the method for determining the start moment of the first duration and the start moment of the SSSG by the terminal device.

In a possible implementation, the terminal device first determines the start moment of the first duration. The terminal device may determine the start moment of the first duration based on the implementation of determining the start moment of the first duration in the method 1000. Then, after the first duration, the terminal device monitors the PDCCH based on an SS set of an SSSG indicated by DCI (for example, the fourth DCI). It may be understood as that before the first duration ends, the terminal device remains in the current SSSG, and after the first duration, the terminal device monitors the PDCCH based on the SS set of the SSSG indicated by the fourth DCI. Correspondingly, the network device may determine the start moment of the first duration in the same implementation, and after the first duration, the network device may send the PDCCH to the terminal device based on the SS set of the SSSG indicated by the fourth DCI. It should be understood that, in this manner, the start moment of the SSSG is a moment after the first duration. It may alternatively be understood as that the start moment of the SSSG is a next slot or symbol after the first duration.

Specifically, the implementation of determining the start moment of the first duration may include:

(1) a time offset between the start moment of the first duration and the fourth DCI;
(2) a start moment of the first duration is a maximum value between a minimum slot offset and a duration for parsing the fourth DCI, where the minimum slot offset is a minimum slot offset between a PDCCH carrying the fourth DCI and a PDSCH that is allowed to be scheduled by using the fourth DCI;

(3) a moment after a HARQ corresponding to a PDSCH is fed back when the PDSCH is scheduled by using the fourth DCI; and

(4) a moment after a PUSCH is transmitted when the PUSCH is scheduled by using the fourth DCI, or a moment after an uplink retransmission timer (UL retransmission timer) in C-DRX ends.

For specific descriptions of the four implementations, refer to the descriptions of the fourth possible implementation to the sixth possible implementation. Details are not described herein again.

The terminal device and the network device may determine the start moment of the first duration in at least one of the four manners.

For example, FIG. 19 is a schematic diagram of stopping monitoring a PDCCH. As shown in FIG. 19, a block filled with a black pattern indicates a PDCCH monitoring occasion on which a terminal device needs to perform monitoring. A network device configures an SSSG 0 and an SSSG 1 on an active DL BWP. A PDCCH monitoring occasion of an SS set of the SSSG 0 uses one slot as a periodicity. A PDCCH monitoring occasion of an SS set of the SSSG 1 uses two slots as a periodicity. It should be understood that PDCCH monitoring occasions of the SSSG 1 are sparse compared with PDCCH monitoring occasions of the SSSG 0. A first duration may be six slots.

The terminal device monitors a PDCCH on the active DL BWP, and monitors the PDCCH based on the SS set of the SSSG0. The network device indicates, by using a PDCCH carrying the fourth DCI, the terminal device to stop monitoring the PDCCH within the first duration and indicates the terminal device to switch to the SSSG1. The terminal device obtains, through monitoring, the PDCCH carrying the fourth DCI. As shown in FIG. 19, the terminal device determines, based on the fourth DCI, that a time offset between a start moment of the first duration and the fourth DCI is one slot, and does not monitor the PDCCH within the first duration (six slots). After the first duration, the terminal device monitors the PDCCH based on the SS set of the SSSG1. Within the first duration (six slots), the terminal device still remains in the SSSG0.

Optionally, in a scenario with a plurality of DL BWPs, the fourth DCI may simultaneously indicate to stop monitoring the PDCCH within the first duration, perform SSSG switching, and perform BWP switching. The terminal device may first determine the start moment of the first duration. On a switched-to BWP, the terminal device stops monitoring the PDCCH within the first duration, and after the first duration, the terminal device monitors the PDCCH based on the SS set of the SSSG indicated by the fourth DCI. On the switched-to BWP, before the first duration ends, the terminal device may be in one of SSSGs, for example, the SSSG0 or an SSSG that has a same index as an SSSG used by the terminal device on a switched-from BWP.

In another possible implementation, the start moment of the first duration is the same as the start moment of the SSSG. A specific method may include: a manner 1: determining the start moment of the first duration, and using the start moment of the first duration as the start moment of the SSSG; a manner 2: determining the start moment of the SSSG, and using the start moment of the SSSG as the start moment of the first duration; or a manner 3: separately determining the start moment of the first duration and the start moment of the SSSG, and using a later moment of the two as the start moment of the first duration and the start moment of the SSSG.

The implementation of determining the start moment of the SSSG may include:

(1) a time offset between the start moment of the SSSG and the fourth DCI;

(2) a start moment of the SSSG is a maximum value between a minimum slot offset and a duration for parsing the fourth DCI, where the minimum slot offset is a minimum slot offset between a PDCCH carrying the fourth DCI and a PDSCH that is allowed to be scheduled by using the fourth DCI;

(3) a moment after a HARQ corresponding to a PDSCH is fed back when the PDSCH is scheduled by using the fourth DCI; and

(4) a moment after a PUSCH is transmitted when the PUSCH is scheduled by using the fourth DCI, or a moment after an uplink retransmission timer (UL retransmission timer) in C-DRX ends.

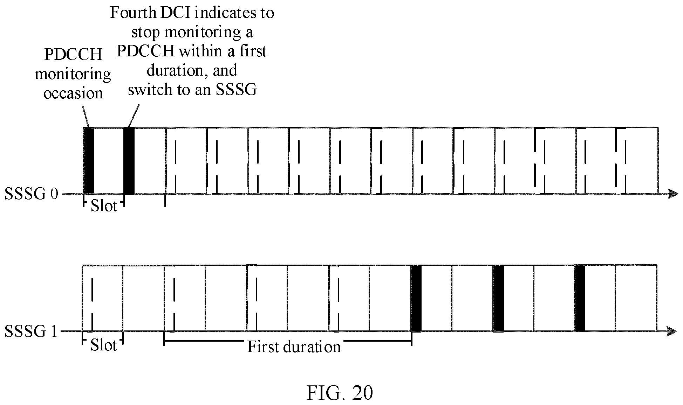

For example, FIG. 20 is a schematic diagram of stopping monitoring a PDCCH. As shown in FIG. 20, a block filled with a black pattern indicates a PDCCH monitoring occasion on which a terminal device needs to perform monitoring. A network device configures an SSSG 0 and an SSSG 1 on an active DL BWP. A PDCCH monitoring occasion of an SS set of the SSSG 0 uses one slot as a periodicity. A PDCCH monitoring occasion of an SS set of the SSSG 1 uses two slots as a periodicity. It should be understood that PDCCH monitoring occasions of the SSSG 1 are sparse compared with PDCCH monitoring occasions of the SSSG 0. A first duration may be six slots.

The terminal device monitors a PDCCH on the active DL BWP, and monitors the PDCCH based on the SS set of the SSSG0. The network device indicates, by using a PDCCH carrying the fourth DCI, the terminal device to stop monitoring the PDCCH within the first duration and indicates the terminal device to switch to the SSSG1. The terminal device obtains, through monitoring, the PDCCH carrying the fourth DCI. As shown in FIG. 20, the manner 1 is used as an example. The terminal device determines, based on fourth DCI, that a time offset between the start moment of the first duration and the fourth DCI is one slot, and uses the start moment of the first duration as the start moment of the SSSG. In this case, a time offset between both the start moment of the first duration and the start moment of the SSSG and the fourth DCI is one slot, and the terminal device switches to the SSSG1 at the start moment of the first duration, stops monitoring the PDCCH within the first duration (six slots), and monitors the PDCCH based on the SS set of the SSSG1 after the first duration (six slots). It may be understood as that, within the first duration (six slots), an SSSG in which the terminal device is located is the SSSG1.

Optionally, a same specific implementation for the start moment of the first duration and the start moment of the SSSG further includes the manner 3: The foregoing implementation of determining the start moment of the first duration may be used for the start moment of the first duration. The foregoing implementation of determining the start moment of the first duration may also be used for the start moment of the SSSG. When the determined start moment of the first duration is different from the determined start moment of the SSSG, a later moment of the two is determined as the start moment of the first duration and the start moment of the SSSG.

Optionally, in a scenario with a plurality of DL BWPs, the fourth DCI may simultaneously indicate to stop monitoring the PDCCH within the first duration, perform SSSG switching, and perform BWP switching. The terminal device determines that the start moment of the first duration is the same as the start moment of the SSSG. A specific method may also include: a manner 1: determining the start moment of the first duration, and using the start moment of the first duration as the start moment of the SSSG; a manner 2: determining the start moment of the SSSG, and using the start moment of the SSSG as the start moment of the first duration; or a manner 3: separately determining the start moment of the first duration and the start moment of the SSSG, and using a later moment of the two as the start moment of the first duration and the start moment of the SSSG. For determining the start moment of the first duration and the start moment of determining the SSSG, refer to the description in the method 1000. Details are not described herein again.

For example, the implementation of determining the start moment of the first duration or the start moment of the SSSG may further include at least one of the following manners:

(1) a next slot after a BWP switch delay;
(2) a slot in which the PDSCH is transmitted on a switched-to DL BWP; and
(3) a slot next to a slot in which the PDSCH is transmitted on a switched-to DL BWP.

The terminal device may determine the start moment of the first duration and the start moment of the SSSG in at least one of the foregoing three manners.

In still another possible implementation, the start moment of the first duration and the start moment of the SSSG are separately determined. The implementation of determining the start moment of the first duration in the method 1800 may be used for the start moment of the first duration. The implementation of determining the start moment of the first duration in the method 1800 may also be used for the start moment of the SSSG. The determined start moment of the first duration may be different from the determined start moment of the SSSG. For example, the start moment of the first duration may be determined based on a time offset between the start moment of the first duration and the fourth DCI, and the start moment of the SSSG may be determined based on a moment at which a HARQ corresponding to a PDSCH scheduled by using the fourth DCI is fed back. The obtained start moment of the first duration is different from the determined start moment of the SSSG.

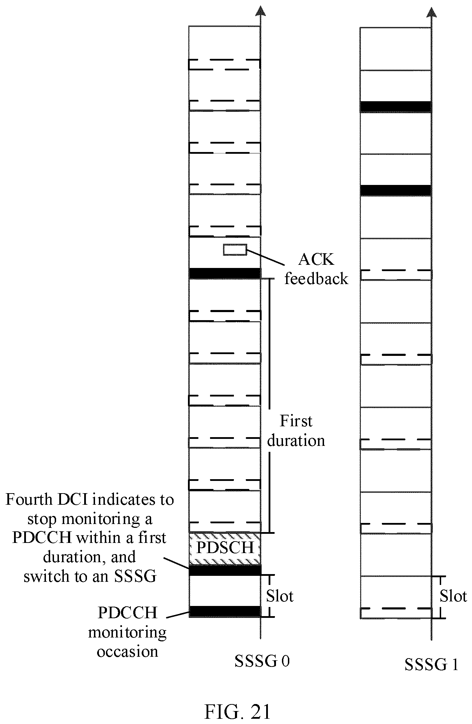

For example, FIG. 21 is a schematic diagram of stopping monitoring a PDCCH. As shown in FIG. 21, a block filled with a black pattern indicates a PDCCH monitoring occasion on which a terminal device needs to perform monitoring. A network device configures an SSSG 0 and an SSSG 1 on an active DL BWP. A PDCCH monitoring occasion of an SS set of the SSSG 0 uses one slot as a periodicity. A PDCCH monitoring occasion of an SS set of the SSSG 1 uses two slots as a periodicity. It should be understood that PDCCH monitoring occasions of the SSSG 1 are sparse compared with PDCCH monitoring occasions of the SSSG 0. A first duration may be six slots.

The terminal device monitors a PDCCH on the active DL BWP, and monitors the PDCCH based on the SS set of the SSSG0. The network device indicates, by using a PDCCH carrying the fourth DCI, the terminal device to stop monitoring the PDCCH within the first duration, switch to the SSSG1, and schedule the PDSCH. The terminal device obtains, through monitoring, the PDCCH carrying the fourth DCI. As shown in FIG. 21, the terminal device determines, based on the fourth DCI, that the time offset between the start moment of the first duration and the fourth DCI is one slot, and the PDSCH is transmitted in a slot in which the start moment of the first duration is located. The terminal device further determines that the start moment of the SSSG is after an ACK is transmitted, that is, stops monitoring the PDCCH within the first duration (6 slots), and a valid SSSG within the first duration is the SSSG0, that is, the terminal device is still in the SSSG0. After the terminal device transmits the ACK, the terminal device monitors the PDCCH based on the SS set of the SSSG1. It may be understood as that the valid SSSG of the terminal device does not change before the start moment of the SSSG.

Optionally, in a scenario with a plurality of DL BWPs, the start moment of the first duration and the start moment of the SSSG may also be separately determined. The implementation of determining the start moment of the first duration in the method 1000 may be used for the start moment of the first duration. The implementation of determining the start moment of the first duration in the method 1000 may also be used for the start moment of the SSSG. The determined start moment of the first duration may be different from the determined start moment of the SSSG. The valid SSSG of the terminal device does not change before the start moment of the SSSG.

In another possible implementation, the terminal device may first determine the start moment of the first duration. For an implementation of determining the start moment of the first duration, refer to the description in the method 1000. Details are not described herein again. Then, the terminal device determines the start moment of the SSSG after the first duration, skips SSSG switching before the start moment of the SSSG, and monitors, after the start moment of the SSSG, the PDCCH based on an SS set of the SSSG indicated by the DCI. It may be understood as that the terminal device and the network device determine the start moment of the SSSG by using an end moment of the first time as a reference point.

The start moment of the SSSG may be determined based on a time offset between the start moment of the SSSG and the end moment of the first duration. The time offset between the start moment of the SSSG and the end moment of the first duration may be predefined or configured by the network device. For a value of the time offset, refer to the value of the time offset between the start moment of the first duration and the DCI in the method 1000. Details are not described herein again.

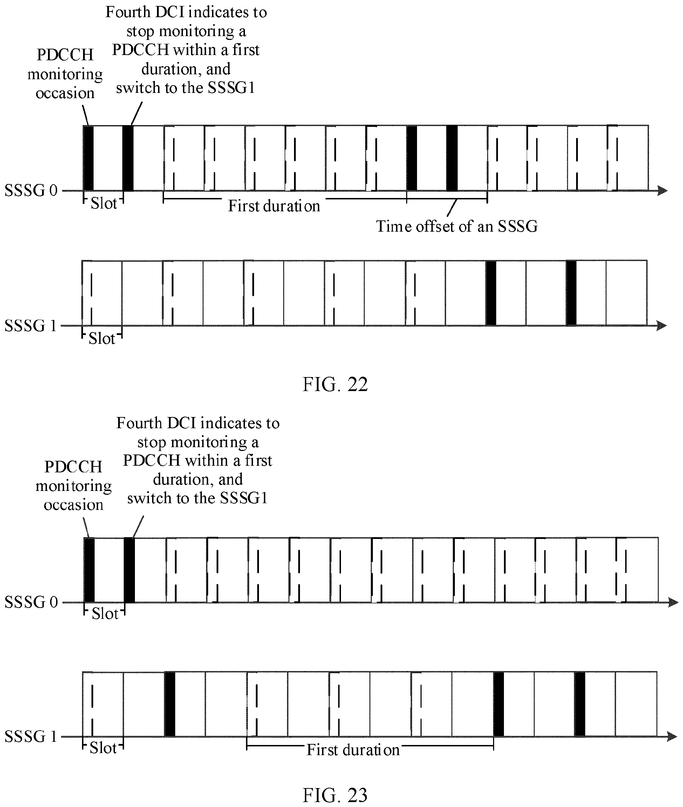

For example, FIG. 22 is a schematic diagram of stopping monitoring a PDCCH. As shown in FIG. 22, a block filled with a black pattern indicates a PDCCH monitoring occasion on which a terminal device needs to perform monitoring. A network device configures an SSSG0 and an SSSG1 on an active DL BWP. A PDCCH monitoring occasion of an SS set of the SSSG0 uses one slot as a periodicity. A PDCCH monitoring occasion of an SS set of SSSG1 uses two slots as a periodicity. It should be understood that PDCCH monitoring occasions of the SSSG1 are sparse compared with PDCCH monitoring occasions of the SSSG0. A first duration may be six slots.

The terminal device monitors a PDCCH on the active DL BWP, and monitors the PDCCH based on the SS set of the SSSG0. The network device indicates, by using a PDCCH carrying the fourth DCI, the terminal device to stop monitoring the PDCCH within the first duration and indicates the terminal device to switch to the SSSG1. The terminal device obtains, through monitoring, the PDCCH carrying the fourth DCI. As shown in FIG. 22, the terminal device determines, based on the fourth DCI, that a time offset between the start moment of the first duration and the fourth DCI is one slot, and stops monitoring the PDCCH within the first duration (six slots). The terminal device determines that the time offset between the start moment of the SSSG and the end moment of the first duration is two slots, that is, after two slots of the end moment of the first duration, the terminal device switches to the SS set of the SSSG1 to monitor the PDCCH. After the end moment of the first duration and before the start moment of the SSSG, the terminal device monitors the PDCCH based on the SS set of the SSSG0.

Optionally, in a scenario with a plurality of DL BWPs, the fourth DCI may simultaneously indicate to stop monitoring the PDCCH within the first duration, switch to the SSSG1, and perform BWP switching. For determining the start moment of the first duration by the terminal device, refer to the description in the method 1000. Details are not described herein again.

In still another possible implementation, the terminal device may first determine the start moment of the SSSG. For an implementation of determining the start moment of the SSSG, refer to the description in the method 1000. Details are not described herein again. Then, the terminal device determines the start moment of the first duration. Before the start moment of the first duration, the terminal device monitors the PDCCH based on the SS set of the SSSG indicated by the DCI. After the start moment of the first duration, the terminal device stops monitoring the PDCCH within the first duration. It may be understood as that the terminal device and the network device determine the start moment of the first duration by using the start moment of the SSSG as a reference point.

The start moment of the first duration may be determined based on a time offset between the start moment of the SSSG and the start moment of the first duration. The time offset between the start moment of the SSSG and the start moment of the first duration may be predefined or configured by the network device. For a value of the time offset, refer to the value of the time offset between the start moment of the first duration and the DCI in the method 1000. Details are not described herein again.

For example, FIG. 23 is a schematic diagram of stopping monitoring a PDCCH. As shown in FIG. 23, a block filled with a black pattern indicates a PDCCH monitoring occasion on which a terminal device needs to perform monitoring. A network device configures an SSSG0 and an SSSG1 on an active DL BWP. A PDCCH monitoring occasion of an SS set of the SSSG0 uses one slot as a periodicity. A PDCCH monitoring occasion of an SS set of SSSG1 uses two slots as a periodicity. It should be understood that PDCCH monitoring occasions of the SSSG1 are sparse compared with PDCCH monitoring occasions of the SSSG0. A first duration may be six slots.

The terminal device monitors a PDCCH on the active DL BWP, and monitors the PDCCH based on the SS set of the SSSG0. The network device indicates, by using a PDCCH carrying the fourth DCI, the terminal device to stop monitoring the PDCCH within the first duration and indicates the terminal device to switch to the SSSG1. The terminal device obtains, through monitoring, the PDCCH carrying the fourth DCI. As shown in FIG. 22, the terminal device determines, based on the fourth DCI, that a time offset between the start moment of the SSSG and the fourth DCI is one slot. The terminal device switches to the SS set of the SSSG1 to monitor the PDCCH. The terminal device determines that the time offset between the start moment of the first duration and the start moment of the SSSG is two slots, that is, after two slots of the start moment of the SSSG, the terminal device stops monitoring the PDCCH within the first duration. After the first duration, the PDCCH is still monitored based on the SS set of the SSSG1.

Optionally, in a scenario with a plurality of DL BWPs, the fourth DCI may simultaneously indicate to stop monitoring the PDCCH within the first duration, switch to the SSSG1, and perform BWP switching. For determining the start moment of the SSSG by the terminal device, refer to the description in the method 1000. Details are not described herein again.

Sequence numbers of the foregoing processes do not mean execution sequences. The execution sequences of the processes should be determined based on functions and internal logic of the processes, but should not be construed as any limitation on the implementation processes of embodiments of this application.

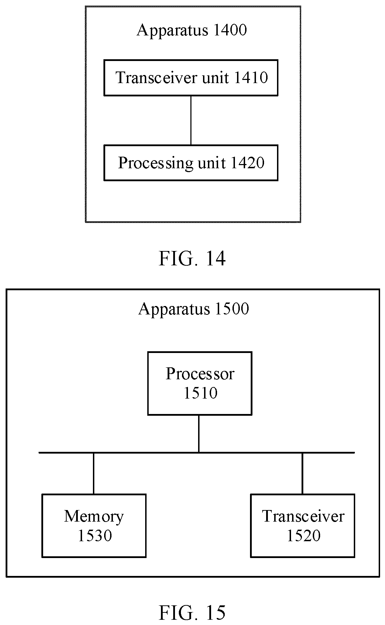

The foregoing describes in detail the method for stopping monitoring a PDCCH in embodiments of this application with reference to FIG. 1 to FIG. 13. The following describes in detail a communication apparatus in embodiments of this application with reference to FIG. 14 and FIG. 15.

FIG. 14 shows a communication apparatus 1400 according to an embodiment of this application. The apparatus 1400 includes a transceiver unit 1410 and a processing unit 1420.

In an optional example, a person skilled in the art may understand that the apparatus 1400 may be specifically the terminal device in the method 600, the method 800, or the method 1000, or a function of the terminal device in the method 600, the method 800, the method 1800, or the method 1000 may be integrated into the apparatus 1400. The foregoing function may be implemented by hardware, or may be implemented by hardware executing corresponding software. The hardware or the software includes one or more modules corresponding to the foregoing function. The apparatus 1400 may be configured to perform procedures and/or steps corresponding to the terminal device in the foregoing method embodiments.

For example, the apparatus 1400 may be specifically the terminal device in the method 600. The transceiver unit 1410 is configured to receive first downlink control information DCI from a network device on an active downlink DL bandwidth part BWP, where the first DCI indicates the apparatus to stop monitoring a PDCCH within a first duration, and the PDCCH on which monitoring is stopped includes a PDCCH in a type 3 common search space set and a PDCCH in an apparatus-specific search space set. The processing unit 1420 is configured to: run a timer, where the timer is used for BWP switching, and an expiration moment of the timer is earlier than an end moment of the first duration; stop monitoring the PDCCH within the first duration and before the timer expires; and perform DL BWP switching when the timer expires, and monitor the PDCCH on a switched-to DL BWP.

Optionally, the processing unit 1420 is further configured to: start or restart the timer when indication information from the network device is received on the active DL BWP, where the indication information is used to schedule the apparatus to transmit a physical downlink shared channel PDSCH or a physical uplink shared channel PUSCH, or the indication information indicates the apparatus to perform DL BWP switching, and the indication information is carried in the first DCI or DCI other than the first DCI.

Optionally, a length of the first duration is configured by using radio resource control RRC or indicated by the first DCI.

Optionally, the apparatus 1400 determines a start moment of the first duration based on at least one of the following information: a time offset between the start moment of the first duration and the first DCI; a maximum value between a minimum slot offset and a duration for parsing the first DCI, where the minimum slot offset is a minimum slot offset between a PDCCH carrying the first DCI and a PDSCH that is allowed to be scheduled by using the first DCI; a moment after a hybrid automatic repeat request HARQ corresponding to a PDSCH is fed back when the PDSCH is scheduled by using the first DCI; or a moment after a PUSCH is transmitted when the PUSCH is scheduled by using the first DCI.

For example, the apparatus 1400 may be specifically the terminal device in the method 800. The transceiver unit 1410 is configured to perform a transceiver action corresponding to the terminal device in S801 in the method 800, and the processing unit 1420 is configured to perform a processing action corresponding to the terminal device in the method 800. In an optional example, a person skilled in the art may understand that the apparatus 1400 may be specifically the network device in the method 600, the method 800, the method 1800, or the method 1000, or a function of the network device in the method 600, the method 800, the method 1800, or the method 1000 may be integrated into the apparatus 1400. The foregoing function may be implemented by hardware, or may be implemented by hardware executing corresponding software. The hardware or the software includes one or more modules corresponding to the foregoing function. The apparatus 1400 may be configured to perform procedures and/or steps corresponding to the network device in the foregoing method embodiments.

For example, the apparatus 1400 may be specifically the network device in the method 800. The transceiver unit 1410 is configured to perform a transceiver action corresponding to the network device in S801 in the method 800, and the processing unit 1420 is configured to perform a processing action corresponding to the network device in the method 800.

It should be understood that the apparatus 1400 is all implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1400 may be specifically the terminal device or the network device in the foregoing method embodiments, or a function of the terminal device or the network device in the foregoing method embodiments may be integrated into the apparatus 1400. The apparatus 1400 may be configured to perform procedures and/or steps corresponding to the terminal device or the network device in the foregoing method embodiments. To avoid repetition, details are not described herein again.

The apparatus 1400 has a function of implementing a corresponding step performed by the terminal device or the network device in the foregoing method embodiments. The foregoing function may be implemented by hardware, or may be implemented by hardware executing corresponding software. The hardware or the software includes one or more modules corresponding to the foregoing function.

In this embodiment of this application, the communication apparatus in FIG. 14 may alternatively be a chip or a chip system, for example, a system on chip (system on chip, SoC).

FIG. 15 is a schematic block diagram of another communication apparatus 1500 according to an embodiment of this application. The apparatus 1500 includes a processor 1510, a transceiver 1520, and a memory 1530. The processor 1510, the transceiver 1520, and the memory 1530 communicate with each other through an internal connection path. The memory 1530 is configured to store instructions. The processor 1510 is configured to execute the instructions stored in the memory 1530, to control the transceiver 1520 to send a signal and/or receive a signal.

It should be understood that the apparatus 1500 may be specifically the terminal device or the network device in the method 600, the method 800, the method 1800, or the method 1000, or a function of the terminal device or the network device in the method 600, the method 800, the method 1800, or the method 1000 may be integrated into the apparatus 1500. The apparatus 1500 may be configured to perform steps and/or procedures corresponding to the terminal device or the network device in the method 600, the method 800, the method 1800, or the method 1000. Optionally, the memory 1530 may include a read-only memory and a random access memory, and provide instructions and data for the processor. A part of the memory may further include a nonvolatile random access memory. For example, the memory may further store information of a device type. The processor 1510 may be configured to execute the instructions stored in the memory. When the processor executes the instructions, the processor may perform the steps and/or procedures corresponding to the terminal device or the network device in the method 600, the method 800, the method 1800, or the method 1000.

It should be understood that, in this embodiment of this application, the processor 1510 may be a central processing unit (central processing unit, CPU). Alternatively, the processor may be another general-purpose processor, a digital signal processor (DSP), an application-specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, the steps of the foregoing methods may be implemented by an integrated logic circuit of hardware or instructions in a form of software in the processor. The steps of the methods disclosed with reference to embodiments of this application may be directly performed and accomplished by a hardware processor, or may be performed and accomplished by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor executes the instructions in the memory, and implements the steps of the foregoing methods in combination with hardware of the processor. To avoid repetition, details are not described herein again.

An embodiment of this application further provides a computer-readable storage medium. The computer-readable storage medium is configured to store a computer program, and the computer program is used to implement a method corresponding to the terminal device or the network device in the foregoing method embodiments.

An embodiment of this application further provides a computer program product. The computer program product includes a computer program (which may also be referred to as code or instructions). When the computer program is run on a computer, the computer may perform a method corresponding to the terminal device or the network device shown in the foregoing method embodiments.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A method for stopping monitoring a physical downlink control channel PDCCH, comprising:

receiving, by a terminal device, first downlink control information DCI from a network device on an active downlink DL bandwidth part BWP, wherein the first DCI indicates the terminal device to stop monitoring a PDCCH within a first duration, and the PDCCH on which monitoring is stopped comprises a PDCCH in a type 3 common search space set and a PDCCH in a terminal device-specific search space set;
running, by the terminal device, a timer, wherein the timer is used for BWP switching, and an expiration moment of the timer is earlier than an end moment of the first duration;
stopping, by the terminal device, monitoring the PDCCH within the first duration and before the timer expires; and
performing, by the terminal device, DL BWP switching when the timer expires, and monitoring the PDCCH on a switched-to DL BWP.

2.   A method for stopping monitoring a physical downlink control channel PDCCH, comprising:

receiving, by a terminal device, first downlink control information DCI from a network device on an active downlink DL bandwidth part BWP, wherein the first DCI indicates the terminal device to stop monitoring a PDCCH within a first duration, and the PDCCH on which monitoring is stopped comprises a PDCCH in a type 3 common search space set and a PDCCH in a terminal device-specific search space set;
running, by the terminal device, a timer, wherein the timer is used for BWP switching;
stopping, by the terminal device based on the first DCI, monitoring the PDCCH within the first duration, and suspending running of the timer;
continuing, by the terminal device, to run the timer after the first duration; and
performing, by the terminal device, DL BWP switching when the timer expires.

3.   The method according to claim 1 or 2, wherein the running, by the terminal device, a timer comprises:

starting or restarting, by the terminal device, the timer when the terminal device receives indication information from the network device on the active DL BWP, wherein
the indication information is used to schedule the terminal device to transmit a physical downlink shared channel PDSCH or a physical uplink shared channel PUSCH, or the indication information indicates the terminal device to perform DL BWP switching, and the indication information is carried in the first DCI or DCI other than the first DCI.

4. The method according to any one of claims 1 to 3, wherein a length of the first duration is configured through radio resource control RRC or indicated by the first DCI.

5. The method according to any one of claims 1 to 4, wherein the terminal device determines a start moment of the first duration based on at least one of the following information:

a time offset between the start moment of the first duration and the first DCI;
a maximum value between a minimum slot offset and a duration for parsing the first DCI, wherein the minimum slot offset is a minimum slot offset between a PDCCH carrying the first DCI and a PDSCH that is allowed to be scheduled by using the first DCI;
a moment after a hybrid automatic repeat request HARQ corresponding to a PDSCH is fed back when the PDSCH is scheduled by using the first DCI; or
a moment after a PUSCH is transmitted when the PUSCH is scheduled by using the first DCI.

6. A method for stopping monitoring a physical downlink control channel PDCCH, comprising:

receiving, by a terminal device, second downlink control information DCI from a network device on an active downlink DL bandwidth part BWP, wherein the second DCI indicates to perform DL BWP switching and stop monitoring a PDCCH within a first duration, the PDCCH on which monitoring is stopped comprises a PDCCH in a type 3 common search space set and a PDCCH in a terminal device-specific search space set, and the second DCI is used to schedule transmission of a physical downlink shared channel PDSCH; and
performing, by the terminal device, DL BWP switching based on the second DCI, and stopping monitoring the PDCCH on a switched-to DL BWP, wherein
a start moment of the first duration is determined based on at least one of the following information:

a next slot after a BWP switch delay;
a slot in which the PDSCH is transmitted on the switched-to DL BWP;
a slot next to a slot in which the PDSCH is transmitted on the switched-to DL BWP;
a time offset between the start moment of the first duration and the second DCI;
a maximum value between a minimum slot offset and a duration for parsing the second DCI, wherein the minimum slot offset is a minimum slot offset between a PDCCH carrying the second DCI and a PDSCH that is allowed to be scheduled by using the second DCI; or
a moment after a hybrid automatic repeat request HARQ corresponding to a PDSCH is fed back when the PDSCH is scheduled by using the second DCI.

7. The method according to claim 6, wherein a length of the first duration is configured through radio resource control RRC or indicated by the second DCI.

8. The method according to claim 6 or 7, wherein the second DCI further indicates the terminal device to switch to a first search space set group, wherein the first search space set group is a search space set group on the switched-to DL BWP; and
the method further comprises:
switching, by the terminal device, to the first search space set group on the switched-to DL BWP.

9. The method according to claim 8, wherein a moment at which the terminal device switches to the first search space set group on the switched-to DL BWP is a next slot or a next symbol after the first duration, or is a slot or a symbol that is the same as the start moment of the first duration.

10. The method according to claim 8, wherein a moment at which the terminal device switches to the first search space set group on the switched-to DL BWP is determined based on at least one of the following information, and is different from the start moment of the first duration:

the next slot after the BWP switch delay;
the slot in which the PDSCH is transmitted on the switched-to DL BWP;
the slot next to the slot in which the PDSCH is transmitted on the switched-to DL BWP;

the time offset between the start moment of the first duration and the second DCI;

the maximum value between the minimum slot offset and the duration for parsing the second DCI; or

the moment after the hybrid automatic repeat request HARQ corresponding to the PDSCH is fed back when the PDSCH is scheduled by using the second DCI.

11. A method for stopping monitoring a physical downlink control channel PDCCH, comprising:

sending, by a network device, first downlink control information DCI to a terminal device on an active downlink DL bandwidth part BWP, wherein the first DCI indicates the terminal device to stop monitoring a PDCCH within a first duration, and the PDCCH on which monitoring is stopped comprises a PDCCH in a type 3 common search space set and a PDCCH in a terminal device-specific search space set;

running, by the network device, a timer, wherein the timer is used for BWP switching;

suspending, by the network device, running of the timer within the first duration;

continuing, by the network device, to run the timer after the first duration; and

performing, by the network device, DL BWP switching when the timer expires.

12. The method according to claim 11, wherein a length of the first duration is configured through radio resource control RRC or indicated by the first DCI.

13. The method according to claim 11 or 12, wherein the network device determines a start moment of the first duration based on at least one of the following information:

a time offset between the start moment of the first duration and the first DCI;

a moment after a hybrid automatic repeat request HARQ corresponding to a PDSCH is fed back when the PDSCH is scheduled by using the first DCI; or

a moment after a PUSCH is transmitted when the PUSCH is scheduled by using the first DCI.

14. A method for stopping monitoring a physical downlink control channel PDCCH, comprising:

sending, by a network device, second downlink control information DCI to a terminal device on an active downlink DL bandwidth part BWP, wherein the second DCI indicates to perform DL BWP switching and the terminal device to stop monitoring a PDCCH within a first duration, the PDCCH on which monitoring is stopped comprises a PDCCH in a type 3 common search space set and a PDCCH in a terminal device-specific search space set, and the second DCI is used to schedule transmission of a physical downlink shared channel PDSCH; and

performing, by the network device, DL BWP switching based on the second DCI, wherein

a start moment of the first duration is determined based on at least one of the following information:

a next slot after a BWP switch delay;

a slot in which the PDSCH is transmitted on a switched-to DL BWP;

a slot next to a slot in which the PDSCH is transmitted on a switched-to DL BWP;

a time offset between the start moment of the first duration and the second DCI;

a maximum value between a minimum slot offset and a duration for parsing the second DCI, wherein the minimum slot offset is a minimum slot offset between a PDCCH carrying the second DCI and a PDSCH that is allowed to be scheduled by using the second DCI; or

a moment after a hybrid automatic repeat request HARQ corresponding to a PDSCH is fed back when the PDSCH is scheduled by using the second DCI.

15. The method according to claim 14, wherein a length of the first duration is configured through radio resource control RRC or indicated by the second DCI.

16. The method according to claim 14 or 15, wherein the second DCI further indicates the terminal device to switch to a first search space set group, wherein the first search space set group is a search space set group on the switched-to DL BWP; and

the method further comprises:

switching, by the network device, to the first search space set group on the switched-to DL BWP.

17. The method according to claim 16, wherein a moment at which the network device switches to the first search space set group on the switched-to DL BWP is a next slot or a next symbol after the first duration, or is a slot or a symbol that is the same as the start moment of the first duration.

18. The method according to claim 16, wherein a moment at which the network device switches to the first search space set group on the switched-to DL BWP is determined based on at least one of the following information, and is different from the start moment of the first duration:

the next slot after the BWP switch delay;
the slot in which the PDSCH is transmitted on the switched-to DL BWP;
the slot next to the slot in which the PDSCH is transmitted on the switched-to DL BWP;
the time offset between the start moment of the first duration and the second DCI;
the maximum value between the minimum slot offset and the duration for parsing the second DCI; or
the moment after the hybrid automatic repeat request HARQ corresponding to the PDSCH is fed back when the PDSCH is scheduled by using the second DCI.

19. A communication apparatus, comprising:

a transceiver unit, configured to receive first downlink control information DCI from a network device on an active downlink DL bandwidth part BWP, wherein the first DCI indicates the apparatus to stop monitoring a PDCCH within a first duration, and the PDCCH on which monitoring is stopped comprises a PDCCH in a type 3 common search space set and a PDCCH in an apparatus-specific search space set; and
a processing unit, configured to: run a timer, wherein the timer is used for BWP switching, and an expiration moment of the timer is earlier than an end moment of the first duration; stop monitoring the PDCCH within the first duration and before the timer expires; and perform DL BWP switching when the timer expires, and monitor the PDCCH on a switched-to DL BWP.

20. A communication apparatus, comprising:

a transceiver unit, configured to receive first downlink control information DCI from a network device on an active downlink DL bandwidth part BWP, wherein the first DCI indicates the apparatus to stop monitoring a PDCCH within a first duration, and the PDCCH on which monitoring is stopped comprises a PDCCH in a type 3 common search space set and a PDCCH in an apparatus-specific search space set; and
a processing unit, configured to: run a timer, wherein the timer is used for BWP switching; stop, based on the first DCI, monitoring the PDCCH within the first duration, and suspend running of the timer; continue to run the timer after the first duration; and perform DL BWP switching when the timer expires.

21. The apparatus according to claim 19 or 20, wherein the processing unit is further configured to:

start or restart the timer when indication information from the network device is received on the active DL BWP, wherein
the indication information is used to schedule the apparatus to transmit a physical downlink shared channel PDSCH or a physical uplink shared channel PUSCH, or the indication information indicates the apparatus to perform DL BWP switching, and the indication information is carried in the first DCI or DCI other than the first DCI.

22. The apparatus according to any one of claims 19 to 21, wherein a length of the first duration is configured by using radio resource control RRC or indicated by the first DCI.

23. The apparatus according to any one of claims 19 to 22, wherein the apparatus determines a start moment of the first duration based on at least one of the following information:

a time offset between the start moment of the first duration and the first DCI;
a maximum value between a minimum slot offset and a duration for parsing the first DCI, wherein the minimum slot offset is a minimum slot offset between a PDCCH carrying the first DCI and a PDSCH that is allowed to be scheduled by using the first DCI;
a moment after a hybrid automatic repeat request HARQ corresponding to a PDSCH is fed back when the PDSCH is scheduled by using the first DCI; or
a moment after a PUSCH is transmitted when the PUSCH is scheduled by using the first DCI.

24. A communication apparatus, comprising:

a transceiver unit, configured to receive second downlink control information DCI from a network device on an active downlink DL bandwidth part BWP, wherein the second DCI indicates to perform DL BWP switching and stop monitoring a PDCCH within a first duration, the PDCCH on which monitoring is stopped comprises a PDCCH in a type 3 common search space set and a PDCCH in an apparatus-specific search space set, and the second DCI is used to schedule transmission of a physical downlink shared channel PDSCH; and

a processing unit, configured to: perform DL BWP switching based on the second DCI, and stop monitoring the PDCCH on a switched-to DL BWP, wherein

a start moment of the first duration is determined based on at least one of the following information:

> a next slot after a BWP switch delay;
> a slot in which the PDSCH is transmitted on the switched-to DL BWP;
> a slot next to a slot in which the PDSCH is transmitted on the switched-to DL BWP;
> a time offset between the start moment of the first duration and the second DCI;
> a maximum value between a minimum slot offset and a duration for parsing the second DCI, wherein the minimum slot offset is a minimum slot offset between a PDCCH carrying the second DCI and a PDSCH that is allowed to be scheduled by using the second DCI; or
> a moment after a hybrid automatic repeat request HARQ corresponding to a PDSCH is fed back when the PDSCH is scheduled by using the second DCI.

25. The apparatus according to claim 24, wherein a length of the first duration is configured by using radio resource control RRC or indicated by the second DCI.

26. The apparatus according to claim 24 or 25, wherein the second DCI further indicates the apparatus to switch to a first search space set group, wherein the first search space set group is a search space set group on the switched-to DL BWP; and

the processing unit is further configured to:

switch to the first search space set group on the switched-to DL BWP.

27. The apparatus according to claim 26, wherein a moment at which the apparatus switches to the first search space set group on the switched-to DL BWP is a next slot or a next symbol after the first duration, or is a slot or a symbol that is the same as the start moment of the first duration.

28. The apparatus according to claim 26, wherein a moment at which the apparatus switches to the first search space set group on the switched-to DL BWP is determined based on at least one of the following information, and is different from the start moment of the first duration:

> the next slot after the BWP switch delay;
> the slot in which the PDSCH is transmitted on the switched-to DL BWP;
> the slot next to the slot in which the PDSCH is transmitted on the switched-to DL BWP;
> the time offset between the start moment of the first duration and the second DCI;
> the maximum value between the minimum slot offset and the duration for parsing the second DCI; or
> the moment after the hybrid automatic repeat request HARQ corresponding to the PDSCH is fed back when the PDSCH is scheduled by using the second DCI.

29. A communication apparatus, comprising:

a transceiver unit, configured to send second downlink control information DCI to a terminal device on an active downlink DL bandwidth part BWP, wherein the second DCI indicates to perform DL BWP switching and the terminal device to stop monitoring a PDCCH within a first duration, the PDCCH on which monitoring is stopped comprises a PDCCH in a type 3 common search space set and a PDCCH in a terminal device-specific search space set, and the second DCI is used to schedule transmission of a physical downlink shared channel PDSCH; and

a processing unit, configured to perform DL BWP switching based on the second DCI, wherein

a start moment of the first duration is determined based on at least one of the following information:

> a next slot after a BWP switch delay;
> a slot in which the PDSCH is transmitted on a switched-to DL BWP;
> a slot next to a slot in which the PDSCH is transmitted on a switched-to DL BWP;

a time offset between the start moment of the first duration and the second DCI;

a maximum value between a minimum slot offset and a duration for parsing the second DCI, wherein the minimum slot offset is a minimum slot offset between a PDCCH carrying the second DCI and a PDSCH that is allowed to be scheduled by using the second DCI; or

a moment after a hybrid automatic repeat request HARQ corresponding to a PDSCH is fed back when the PDSCH is scheduled by using the second DCI.

30. The apparatus according to claim 29, wherein a length of the first duration is configured by using radio resource control RRC or indicated by the second DCI.

31. The apparatus according to claim 29 or 30, wherein the second DCI further indicates the terminal device to switch to a first search space set group, wherein the first search space set group is a search space set group on the switched-to DL BWP; and

the processing unit is further configured to:

switch to the first search space set group on the switched-to DL BWP.

32. The apparatus according to claim 31, wherein a moment at which the apparatus switches to the first search space set group on the switched-to DL BWP is a next slot or a next symbol after the first duration, or is a slot or a symbol that is the same as the start moment of the first duration.

33. The apparatus according to claim 31, wherein a moment at which the apparatus switches to the first search space set group on the switched-to DL BWP is determined based on at least one of the following information, and is different from the start moment of the first duration:

the next slot after the BWP switch delay;

the slot in which the PDSCH is transmitted on the switched-to DL BWP;

the slot next to the slot in which the PDSCH is transmitted on the switched-to DL BWP;

the time offset between the start moment of the first duration and the second DCI;

the maximum value between the minimum slot offset and the duration for parsing the second DCI; or

the moment after the hybrid automatic repeat request HARQ corresponding to the PDSCH is fed back when the PDSCH is scheduled by using the second DCI.

34. A communication apparatus, comprising:

a transceiver unit, configured to send first downlink control information DCI to a terminal device on an active downlink DL bandwidth part BWP, wherein the first DCI indicates the terminal device to stop monitoring a PDCCH within a first duration, and the PDCCH on which monitoring is stopped comprises a PDCCH in a type 3 common search space set and a PDCCH in a terminal device-specific search space set; and

a processing unit, configured to: run a timer, wherein the timer is used for BWP switching; suspend running of the timer within the first duration; and continue to run the timer after the first duration, wherein

the processing unit is further configured to: perform DL BWP switching when the timer expires.

35. The apparatus according to claim 34, wherein a length of the first duration is configured by using radio resource control RRC or indicated by the first DCI.

36. The apparatus according to claim 34 or 35, wherein the apparatus determines a start moment of the first duration based on at least one of the following information:

a time offset between the start moment of the first duration and the first DCI;

a moment after a hybrid automatic repeat request HARQ corresponding to a PDSCH is fed back when the PDSCH is scheduled by using the first DCI; or

a moment after a PUSCH is transmitted when the PUSCH is scheduled by using the first DCI.

37. A communication apparatus, comprising a processor and a transceiver, wherein the transceiver communicates with another apparatus, the processor is coupled to a memory, the memory is configured to store a computer program, and when the processor invokes the computer program, the apparatus is enabled to perform the method according to any one of claims 1 to 5, the method according to any one of claims 6 to 10, the method according to any one of claims 11 to 13, or the method according to any one of claims 14 to 18.

**38.** A computer-readable storage medium, wherein the computer-readable storage medium stores a computer program, and when the computer program is run on a computer, the method according to any one of claims 1 to 5, the method according to any one of claims 6 to 10, the method according to any one of claims 11 to 13, or the method according to any one of claims 14 to 18 is performed.

**39.** A computer program product, wherein the computer program product comprises instructions, and when the instructions are executed, the method according to any one of claims 1 to 5, the method according to any one of claims 6 to 10, the method according to any one of claims 11 to 13, or the method according to any one of claims 14 to 18 is performed.

PDCCH
monitoring
occasion

DCI indicates
to skip
PDCCH
monitoring

Slot

Duration for stopping monitoring a PDCCH

FIG. 1

PDCCH monitoring occasion

SSSG 0

Slot

PDCCH monitoring occasion

SSSG 1

Slot

FIG. 2

FIG. 3

FIG. 4

**EP 4 401 473 A1**

FIG. 5

50

600

```
┌──────────┐                              ┌──────────┐
│ Network  │                              │ Terminal │
│  device  │                              │  device  │
└──────────┘                              └──────────┘
     │ ──────── S601: First DCI ─────────▶      │
     │                                          │
     │              ┌────────────────────────────────────┐
     │              │       S602: Run a timer            │
     │              └────────────────────────────────────┘
     │                                          │
     │              ┌────────────────────────────────────┐
     │              │  S603: Stop monitoring a PDCCH      │
     │              │  within a first duration and before│
     │              │  the timer expires                 │
     │              └────────────────────────────────────┘
     │                                          │
     │              ┌────────────────────────────────────┐
     │              │  S604: Perform DL BWP switching     │
     │              │  when the timer expires, and monitor│
     │              │  the PDCCH on a switched-to DL BWP  │
     │              └────────────────────────────────────┘
     │                                          │
```

FIG. 6

FIG. 7

800

| Network device | | Terminal device |
|---|---|---|

S801: First DCI →

| S806: Run a timer | S802: Run a timer |
|---|---|
| S807: Suspend running of the timer within a first duration | S803: Stop monitoring a PDCCH within a first duration, and suspend running of the timer |
| S808: Continue to run the timer after the first duration | S804: Continue to run the timer after the first duration |
| S809: Perform DL BWP switching when the timer expires | S805: Perform DL BWP switching when the timer expires |

FIG. 8

Monitor the
PDCCH

BWP switch delay

Remaining
duration of the
timer

Continue to
run the timer

First duration

Duration of
the timer

Suspend
a timer

First DCI indicates
to stop monitoring a
PDCCH

PDCCH
monitoring
occasion

Slot

Slot

DL BWP 1

Default DL BWP

FIG. 9

1000

```
┌──────────┐                                    ┌──────────┐
│ Network  │                                    │ Terminal │
│  device  │                                    │  device  │
└──────────┘                                    └──────────┘
     │                                               │
     │────────── S1001: Second DCI ─────────────────▶│
     │                                               │
     │              ┌────────────────────────────────┴──────┐
     │              │ S1002: Perform DL BWP switching based  │
     │              │ on the second DCI, and stop monitoring a│
     │              │ PDCCH on a switched-to DL BWP          │
     │              └────────────────────────────────┬──────┘
     │                                               │
```

FIG. 10

First
duration

PDSCH

$K_0$

BWP
switch
delay

A BWP indicator
field in second DCI
indicates the BWP 2

Slot

PDCCH monitoring
occasion

Slot

DL BWP 1

DL BWP 2

FIG. 11

FIG. 12

FIG. 13

Apparatus 1400

Transceiver unit 1410

Processing unit 1420

FIG. 14

Apparatus 1500

Processor
1510

Memory
1530

Transceiver
1520

FIG. 15

A BWP indicator field in second DCI indicates the BWP 2, and indicates to stop monitoring a PDCCH within a first duration

PDCCH monitoring occasion

BWP switch delay

Slot

DL BWP 1

First duration

ACK feedback or NACK feedback

PDSCH

$K_0$

Slot

DL BWP 2

FIG. 16

FIG. 17

1800

```
┌─────────────┐                              ┌─────────────┐
│  Network    │                              │  Terminal   │
│  device     │                              │  device     │
└─────────────┘                              └─────────────┘
       │                                            │
       │────────── S1801: Fourth DCI ──────────────▶│
       │                                            │
┌──────────────────────────┐         ┌──────────────────────────┐
│ S1803: Determine a start │         │ S1802: Determine a start │
│ moment of a first        │         │ moment of a first        │
│ duration and a start     │         │ duration and a start     │
│ moment of an SSSG, stop  │         │ moment of an SSSG based  │
│ monitoring a PDCCH within│         │ on the fourth DCI, stop  │
│ the first duration, and  │         │ monitoring a PDCCH within│
│ monitor the PDCCH at the │         │ the first duration, and  │
│ start moment of the SSSG │         │ monitor the PDCCH at the │
│ based on an SSSG indicated│        │ start moment of the SSSG │
│ by the fourth DCI        │         │ based on an SSSG indicated│
└──────────────────────────┘         │ by the fourth DCI        │
       │                              └──────────────────────────┘
       │                                            │
```

FIG. 18

FIG. 19

FIG. 20

ACK
feedback

First
duration

Fourth DCI indicates to
stop monitoring a
PDCCH within a first
duration, and
switch to an SSSG

PDSCH

Slot

PDCCH
monitoring
occasion

Slot

SSSG 0

SSSG 1

FIG. 21

Fourth DCI indicates to
stop monitoring a
PDCCH PDCCH within a first
monitoring duration, and
occasion switch to the SSSG1

SSSG 0 ——

Slot

First duration

Time offset of an SSSG

SSSG 1 ——

Slot

FIG. 22

Fourth DCI indicates to
stop monitoring a
PDCCH PDCCH within a first
monitoring duration, and
occasion switch to the SSSG1

SSSG 0 ——

Slot

SSSG 1 ——

Slot

First duration

FIG. 23

## INTERNATIONAL SEARCH REPORT

| International application No. |
|---|
| **PCT/CN2022/111747** |

**A.  CLASSIFICATION OF SUBJECT MATTER**

H04W 52/02(2009.01)i

According to International Patent Classification (IPC) or to both national classification and IPC

**B.  FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, VCN, WPABS, ENTXT, DWPI, VEN, 3GPP: 暂停, 停止, PDCCH, 监听, bwp, 带宽部分, 切换, 定时器, 计时器, pause, stop, monitor, listen, bandwidth, switch, timer

**C.  DOCUMENTS CONSIDERED TO BE RELEVANT**

| Category* | Citation of document, with indication, where appropriate, of the relevant passages | Relevant to claim No. |
|---|---|---|
| A | CN 109565695 A (BEIJING XIAOMI MOBILE SOFTWARE CO., LTD.) 02 April 2019 (2019-04-02)<br>        entire description | 1-39 |
| A | CN 111277399 A (SPREADTRUM COMMUNICATIONS SHANGHAI INC.) 12 June 2020 (2020-06-12)<br>        entire description | 1-39 |
| A | CN 110831027 A (HUAWEI TECHNOLOGIES CO., LTD.) 21 February 2020 (2020-02-21)<br>        entire description | 1-39 |
| A | WO 2020167053 A1 (LG ELECTRONICS INC.) 20 August 2020 (2020-08-20)<br>        entire description | 1-39 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2022** | **16 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/111747**

| Patent document cited in search report | | | Publication date (day/month/year) | Patent family member(s) | | | Publication date (day/month/year) |
|---|---|---|---|---|---|---|---|
| CN | 109565695 | A | 02 April 2019 | WO | 2020087198 | A1 | 07 May 2020 |
| | | | | EP | 3876581 | A1 | 08 September 2021 |
| | | | | US | 2022015185 | A1 | 13 January 2022 |
| | | | | CN | 109565695 | B | 02 November 2021 |
| | | | | EP | 3876581 | A4 | 03 November 2021 |
| | | | | IN | 202147022432 | A | 18 June 2021 |
| CN | 111277399 | A | 12 June 2020 | WO | 2021148048A1 | A1 | 29 July 2021 |
| CN | 110831027 | A | 21 February 2020 | CN | 110831027 | B | 19 August 2022 |
| | | | | WO | 2020029615 | A1 | 13 February 2020 |
| | | | | EP | 3817436 | A1 | 05 May 2021 |
| | | | | EP | 3817436 | A4 | 15 September 2021 |
| | | | | US | 2021314862 | A1 | 07 October 2021 |
| WO | 2020167053 | A1 | 20 August 2020 | None | | | |

Form PCT/ISA/210 (patent family annex) (January 2015)

**EP 4 401 473 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111164061

- CN 202111309099X

67